Europäisches Patentamt

European Patent Office

Office européen des brevets

(19)

(11) **EP 1 233 547 A1**

(12) **EUROPEAN PATENT APPLICATION**
published in accordance with Art. 158(3) EPC

(43) Date of publication:
**21.08.2002 Bulletin 2002/34**

(51) Int Cl.⁷: **H04B 7/26**, H04K 1/06

(21) Application number: **01961188.8**

(22) Date of filing: **30.08.2001**

(86) International application number:
**PCT/JP01/07454**

(87) International publication number:
**WO 02/019569 (07.03.2002 Gazette 2002/10)**

(84) Designated Contracting States:
**AT BE CH CY DE DK ES FI FR GB GR IE IT LI LU MC NL PT SE TR**

(30) Priority: **30.08.2000 JP 2000260413**

(71) Applicant: **Matsushita Electric Industrial Co., Ltd. Kadoma-shi, Osaka 571-8501 (JP)**

(72) Inventors:
• **ORIHASHI, Masayuki**
  **Ichikawa-shi, Chiba 272-0001 (JP)**

• **MURAKAMI, Yutaka**
  **Tsurumi-ku, Yokohama-shi, Kanagawa 230-0 (JP)**
• **ABE, Katsuaki**
  **Asao-ku, Kawasaki-shi, Kanagawa 215-0005 (JP)**
• **MATSUOKA, Akihiko**
  **Midori-ku, Yokohama-shi, Kanagawa 226-00 (JP)**

(74) Representative: **Grünecker, Kinkeldey, Stockmair & Schwanhäusser Anwaltssozietät Maximilianstrasse 58 80538 München (DE)**

(54) **DATA TRANSMITTING APPARATUS, RADIO COMMUNICATION SYSTEM AND RADIO COMMUNICATION METHOD**

(57)    Before confidential information is transmitted, a radio propagation path environment shared only between a first radio station that is the confidential information transmitting side and a second radio station that is the receiving side is estimated by performing transmission and reception of a signal between the first and second radio stations, and confidential information is transmitted from the first radio station to the second radio station taking this radio propagation path environment into consideration.

**100 RADIO COMMUNICATION SYSTEM**

FIG.1

**Description**

Technical Field

The present invention relates to a data transmission apparatus, radio communication system, and radio communication method whereby confidential information is transmitted to a specific radio station via a radio channel.

Background Art

Drastic improvements in transmission speed and transmission quality in recent years have led digital radio communications to occupy an important place in the communication field. At the same time, since radio communications use radio space, a public asset, from the standpoint of confidentiality there is a basic drawback of possibility of reception by a third party. That is to say, there is a constant risk of communication contents being intercepted by a third party and information being disclosed.

Thus, in conventional communications, techniques such as encryption of confidential information are used to prevent a third party from understanding the contents of confidential information even if transmit data is intercepted by a third party, for example. Encryption has been studied in various fields, and has also been applied in various fields. This is because encryption has the advantage of enabling constant security to be assured without changing a radio communication system.

However, in information encryption, there is a problem in that information can be decrypted comparatively easily if the code used for encryption and the encryption procedure are known. With the current widespread dissemination of high-speed computers, in particular, security can no longer be assured without performing rather complex encryption processing.

With arithmetic encryption, in particular, decrypting encrypted information requires an encryption key that is common information for encryption and decryption. When exchange of this encryption key is necessary, there is a constant risk of confidential information being easily decrypted from the encryption key and encrypted text if the encryption key is intercepted by a third party. In particular, this danger is greatly increased when the encryption key and encrypted text are transmitted via a radio channel as described above.

Disclosure of Invention

It is an object of the present invention to transmit confidential information with a high degree of security when transmitting confidential information to a specific radio station via a radio channel.

This object is achieved by, when transmit data including confidential information is transmitted as a radio signal from a first radio station to a second radio station, estimating a radio propagation path environment shared only between the first radio station and second radio station by performing signal transmission/reception between the first radio station and second radio station before transmitting confidential information, and transmitting confidential information from the first radio station to the second radio station taking the estimated radio propagation path environment into consideration.

Brief Description of Drawings

FIG.1 is a block diagram showing the configuration of a radio communication system according to Embodiment 1 of the present invention;
FIG.2 is a block diagram showing the configuration of the transmitting station in FIG.1;
FIG.3 is a block diagram showing the configuration of the receiving station in FIG.1;
FIG.4 is a sequence diagram showing the communication procedure in radio communication systems according to Embodiments 1 and 3;
FIG.5 is a drawing showing the communication signal propagation state in communication systems according to Embodiments 1 and 3;
FIG.6 is a block diagram showing the configuration of the burst generation section of Embodiment 4;
FIG.7 is a block diagram showing the configuration of the demodulation section and stream forming section of Embodiment 4;
FIG.8 is a block diagram showing the configuration of the time synchronization/unique word extraction circuit of Embodiment 4;
FIG. 9A is a signal waveform chart provided to explain the operation of the time synchronization/unique word extraction circuit in FIG.8;

FIG. 9B is a signal waveform chart provided to explain the operation of the time synchronization/unique word extraction circuit in FIG.8;

FIG. 10 is a drawing showing the communication signal propagation state in a communication system according to Embodiment 4;

FIG. 11 is a block diagram showing the configuration of a radio communication system according to Embodiment 5;

FIG.12 is a sequence diagram showing the communication procedure in radio communication systems according to Embodiments 5, 6, and 7;

FIG.13 is a drawing showing the communication signal propagation state in a communication system according to Embodiment 5;

FIG.14 is a drawing showing the communication signal propagation states in radio communication systems according to Embodiments 6, 7, and 9;

FIG.15 is a block diagram showing the configuration of a radio communication system according to Embodiment 8;

FIG.16 is a sequence diagram showing the communication procedure in radio communication systems according to Embodiments 8 and 9;

FIG.17 is a block diagram showing the configuration of a radio communication system according to Embodiment 9;

FIG.18 is a block diagram showing the configuration of the transmitting station in FIG.17;

FIG.19 is a block diagram showing the configuration of a radio communication system according to Embodiment 10;

FIG.20 is a block diagram showing the configuration of the transmitting station in FIG.19;

FIG.21 is a block diagram showing the configuration of the channel parameter estimation section in FIG.20;

FIG.22 is a block diagram showing the configuration of the radiation characteristics control section in FIG.20;

FIG.23 is a drawing provided to explain the plane of polarization, field strength, and phase difference;

FIG.24 is a sequence diagram showing the communication procedure in radio communication systems according to Embodiments 10 and 11;

FIG.25 is a drawing provided to explain the operation according to Embodiment 10;

FIG.26A is a drawing provided to explain the antenna position and plane of polarization;

FIG.26B is a drawing provided to explain the antenna position and plane of polarization;

FIG.27 is a drawing provided to explain the antenna position and plane of polarization;

FIG.28 is a block diagram showing the configuration of a radio communication system according to Embodiment 11;

FIG.29 is a block diagram showing the configuration of a radio communication system according to Embodiment 12;

FIG.30 is a block diagram showing the configuration of the transmitting station in FIG.29;

FIG.31 is a block diagram showing the configuration of the burst generation section, beam former, and modulation section in FIG.30;

FIG.32 is a block diagram showing the configuration of the demodulation section and stream forming section in FIG.30;

FIG.33 is a sequence diagram showing the communication procedure in a radio communication system according to Embodiment 12;

FIG.34 is a drawing provided to explain electromagnetic wave space combining.

FIG.35 is a block diagram showing the configuration of a radio communication system according to another embodiment; and

FIG.36 is a sequence diagram showing the communication procedure according to another embodiment;

Best Mode for Carrying out the Invention

With reference now to the accompanying drawings, embodiments of the present invention will be explained in detail below.

(Embodiment 1)

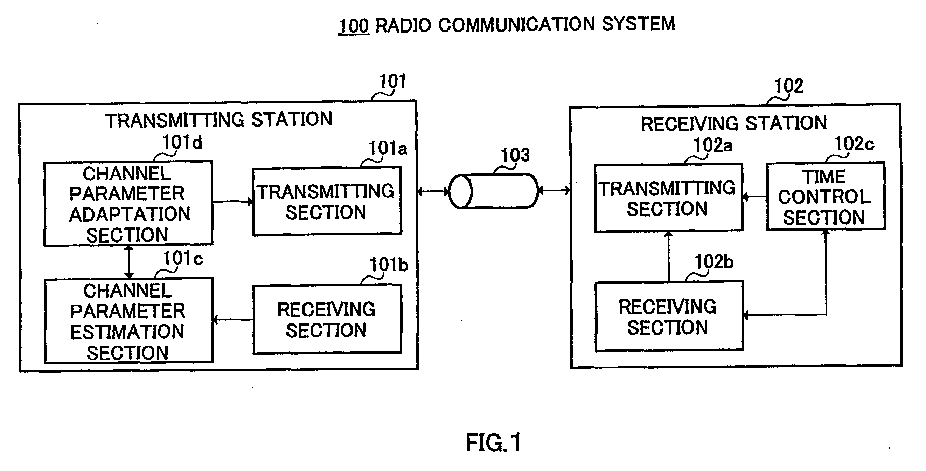

In FIG.1, reference code 100 denotes a radio communication system according to Embodiment 1 of the present invention as a whole. The radio communication system 100 has a transmitting station 101 and a receiving station 102. Here, as regards the transmitting station 101 and receiving station 102, the side that transmits confidential information is simply called the transmitting station 101, and the side that receives that confidential information is simply called the receiving station 102, both of them having transmitting and receiving sections.

The transmitting station 101 has, in addition to a transmitting section 101a and receiving section 101b, a channel parameter estimation section 101c and a channel parameter adaptation section 101d. The channel parameter estimation section 101c estimates the channel parameter of the propagation path 103 based on a received signal. The channel parameter adaptation section 101d controls transmit operations by the transmitting section 101a in accordance with estimation results obtained by the channel parameter estimation section 101c.

The receiving station 102 has, in addition to a transmitting section 102a and receiving section 102b, a time control section 102c. Based on the reception time of the receiving section 102b, the time control section 102c provides a predetermined delay time in transmission and also controls receive operations in terms of time.

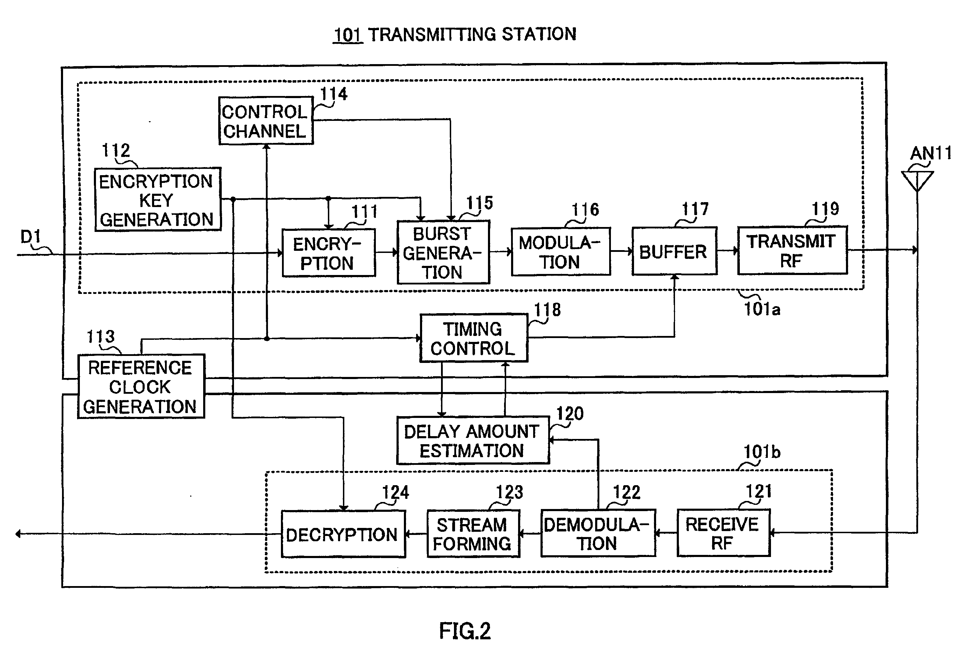

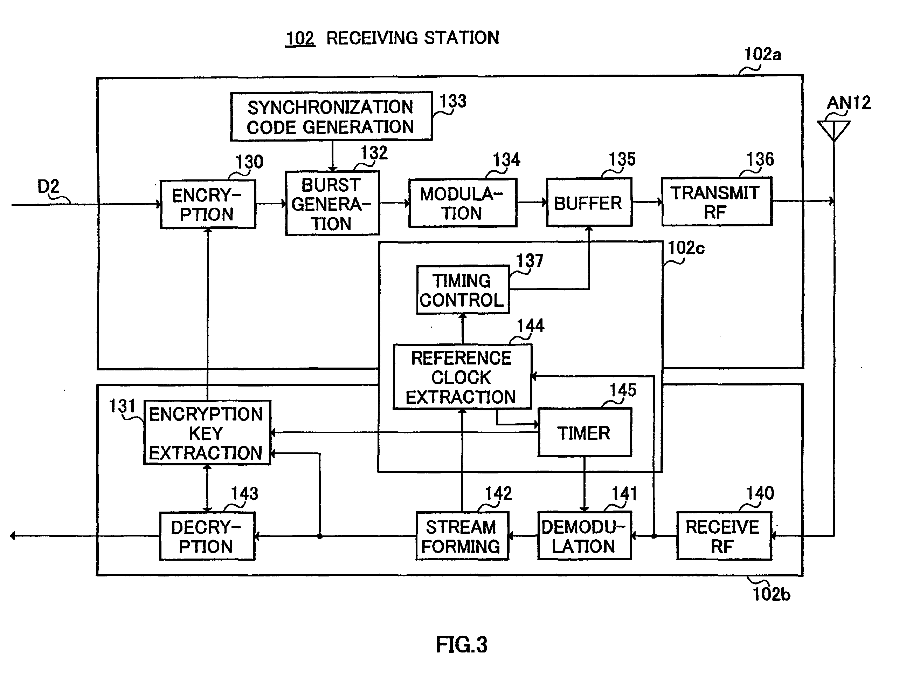

The actual configuration of the transmitting station 101 is shown in FIG.2, and the actual configuration of the receiving station 102 is shown in FIG.3. As shown in FIG.2, in the transmitting station 101, user data D1 is input to an encryption section 111. In addition, an encryption key generated by an encryption key generation section 112 is input to the encryption section 111, and a reference clock generated by a reference clock generation section 113 is also input via a control channel section 114. The encryption section 111 forms encrypted data by encrypting user data D1 using the encryption key, and sends this encrypted data to a burst generation section 115.

The encryption key and a control channel signal are also input to the burst generation section 115. A burst signal formed by the burst generation section 115 is input to a modulation section 116. The modulation section 116 executes predetermined digital modulation processing-such as TDMA (Time Division Multiple Access) modulation, for example-on the input signal, and sends the processed signal to a buffer 117.

The buffer 117 outputs a temporarily stored transmit signal to the following radio transmission section (transmit RF) 119 at the timing of an output control signal input from a timing control section 118. The radio transmission section 119 executes radio transmission processing such as digital-analog conversion processing and up-conversion on the transmit signal, and supplies the processed signal to an antenna AN11.

The timing control section 118 here corresponds to the channel parameter adaptation section 101d in FIG.1, and has as input a network reference time from the reference clock generation section 113 and a transmission delay amount from a delay amount estimation section 120. The delay amount estimation section 120 here corresponds to the channel parameter estimation section 101c in FIG.1.

Then, taking the network reference time and transmission delay amount into consideration, the timing control section 118 controls the output timing of the buffer 117 so that the receiving station 102 can receive the confidential information signal at the network reference time set beforehand between the two stations.

Before transmitting confidential information, the transmitting station 101 transmits the network reference time, and then transmits confidential information comprising encrypted user data and the encryption key at a timing that takes the signal propagation time in the propagation path 103 into consideration.

The receiving section 101b of the transmitting station 101 inputs a received signal obtained by means of the antenna AN11 to a radio reception section (receive RF) 121. The radio reception section 121 executes radio processing such as down-conversion and analog-digital conversion processing on the received signal, and sends the processed signal to a demodulation section 122. The demodulation section 122 executes predetermined digital demodulation processing-such as TDMA processing, for example-on the input signal, and sends the processed signal to a stream forming section 123 and the delay amount estimation section 120.

The stream forming section 123 converts the burst signal to the original data stream by performing the reverse of the processing performed by the burst generation section 115 described above. The data stream is input to a decryption section 124 together with an encryption key from the encryption key generation section 112, and the decryption section 124 decrypts the encrypted data stream using the encryption key.

Next, the actual configuration of the receiving station 102 will be described using FIG.3. As stated above, the receiving station 102 comprises a transmitting section 102a and a receiving section 102b. In the transmitting section 102a, user data D2 is input to an encryption section 130. In addition, an encryption key extracted by an encryption key extraction section 131 in the receiving section 102b is input to the encryption section 130. By this means, the encryption section 130 encrypts user data D2 using an encryption key shared with the transmitting station 101.

The encrypted user data and also a synchronization code generated by a synchronization code generation section 133 are input to a burst generation section 132. The burst generation section 132 converts the encrypted data and synchronization code to a burst-type transmit signal, which it sends to a modulation section 134. The modulation section 134 executes predetermined digital modulation-such as TDMA modulation, for example-on the input signal, and sends the modulated signal to a buffer 135.

The buffer 135 outputs temporarily stored transmit data to a following radio transmission section (transmit RF) 136 at the timing of an output control signal input from a timing control section 137 in the time control section 102c. The radio transmission section 136 executes radio transmission processing such as digital-analog conversion processing and up-conversion on the transmit signal, and supplies the processed signal to an antenna AN12.

In the receiving section 102b of the receiving station 102, a received signal obtained by means of the antenna AN12 is input to a radio reception section (receive RF) 140. The radio reception section 140 executes radio processing such as down-conversion and analog-digital conversion processing on the received signal, and sends the processed signal to a demodulation section 141. The demodulation section 141 executes predetermined digital demodulation processing-such as TDMA demodulation, for example-on the input signal, and sends the processed signal to a stream forming section 142.

The stream forming section 142 converts the burst-type signal to the original data stream by performing the reverse of the processing performed by the burst generation section 132 described above. The data stream is input to a decryption section 143 together with the encryption key extracted by the encryption key extraction section 131, and the decryption section 143 decrypts the encrypted data stream using the encryption key.

Output from the radio reception section 140 is here also output to a reference clock extraction section 144. The reference clock extraction section 144 extracts a control channel signal and network reference time from the received signal, and sends these to the timing control section 137 and a timer 145. The timing control section 137 first synchronizes operation timing with the control channel signal. Then the timing control section 137 causes a transmit signal to be generated by sending an output control signal to the buffer 135 following a predetermined time Td relative to the network reference time. The processing delay generated by the receiving station 102 is adjusted by means of time Td.

In this way, the signal propagation time in the transmission path can be calculated in the transmitting station 101 from the network reference time, delay time Td, and the synchronization code reception time.

The timer 145 first synchronizes operation timing with the control channel signal. Then the timer 145 sends a control signal for starting demodulation operation to the demodulation section 141 at network time Tk. In this way, the receiving station 102 performs reception demodulation at network time Tk without performing time synchronization (or with the synchronization range restricted to a narrow range, etc.).

As synchronization has already been performed on the transmitting station 101 side (that is to say, network time Tk itself is used as the time at which synchronization is performed), the receiving station can perform normal demodulation processing at network time Tk.

The data stream from the stream forming section 142 and network time information from the timer 145 are input to the encryption key extraction section 131, and the encryption key is extracted from the data stream at network time Tk.

In actuality, the transmitting station 101 first transmits information containing the network reference time formed by the control channel section 114. In some cases, this transmission may be performed a plurality of times. As a result, the receiving station 102 can perform receive operations that are very accurately synchronized with the network reference time.

When a response signal arrives at the transmitting station 101 from the receiving station 102, the delay amount estimation section 120 estimates the signal propagation time in the propagation path 103 from the reception time and the network reference time. In the transmitting station 101, a response signal from the receiving station 102 may be received a plurality of times in order to increase the estimation accuracy (with an error of one symbol time or less, for example).

Also, when sending the encryption key, the transmitting station 101 controls transmission time by means of the timing control section 118, based on network time Tk at which the receiving station starts the receive operation and the propagation delay, so that the encryption key arrives at the receiving station 102 exactly at network time Tk. Since, as a result, the encryption key arrives at the receiving station 102 at the predetermined network time Tk, the encryption key can be obtained by demodulating the signal in synchronization with that time. Subsequently, the transmitting station 101 decrypts sequentially received encrypted data and also transmits user data D2 while performing encryption on it.

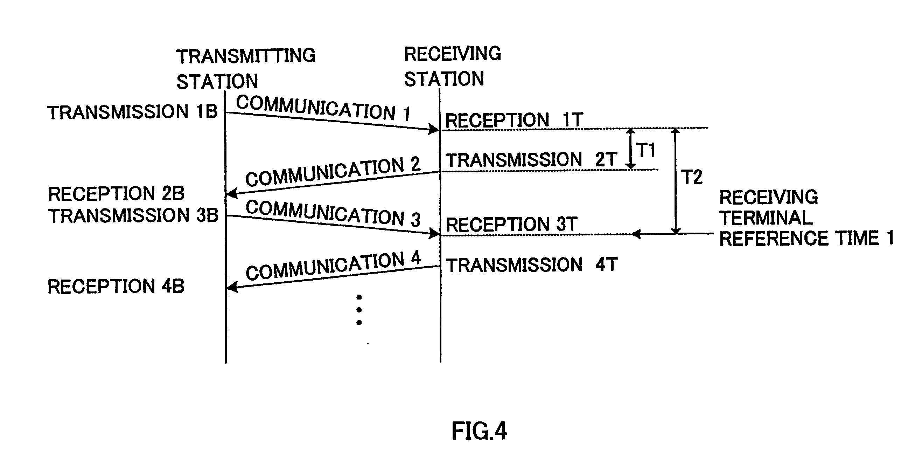

Next, the operation of a radio communication system 100 according to this embodiment will be described. Communication of radio communication system 100 is performed by means of the procedure shown in FIG.4.

First, the transmitting station 101 sends (transmission 1B) a control signal including the network reference time as a signal (communication 1) for establishing synchronization with the receiving station 102. When the receiving station 102 receives communication 1 (reception 1T), based on that time and the notified network reference time, it sets the delay time (T1) until the next transmission (transmission 2T) and the receiving terminal reference time (that is, above-mentioned network time Tk) for the next communication 3 after a fixed time (T2). When the delay time (T1) has elapsed after reception 1T, the receiving station 102 transmits (transmission 2T) a response signal (communication 2) to the transmitting station 101.

The transmitting station 101 and receiving station 102 both hold above-mentioned delay time T1 and fixed time T2 information beforehand as shared information.

In the transmitting station 101, at the same time as communication 2 is received (reception 2B), the channel parameter estimation section 101c estimates the propagation path 103 from the control signal output in transmission 1B and the response signal received in reception 2B. To be specific, the delay amount estimation section 120 provided in the transmitting station 101 calculates the signal propagation time in the propagation path 103 from the transmission 1B and reception 2B times, the delay time (T1) at the receiving station, the processing delay arising within each apparatus, and so forth.

Here, the processing delay within the apparatus in the transmitting station 101 and receiving station 102 is virtually constant according to the configuration of the apparatus, and can be treated as known information when the system is operating. The channel parameter adaptation section 101d (that is, the timing control section 118) of the transmitting station 101 transmits (transmission 3B) a signal (communication 3) at a timing that provides synchronization with the receiving station 102 receiving terminal reference time (that is, network time Tk), based on the signal propagation time and processing delay.

Communication 3 contains confidential information (in this embodiment, the encryption key) that is not to be disclosed to a party other than the receiving station 102. The information in communication 3 is received by the receiving station 102 (reception 3T) delayed by the time resulting from adding the propagation path 103 signal propagation time to the transmitting station 101 processing delay. The receiving station 102 starts reception 3T based on the receiving terminal reference time set in reception 1T, and performs demodulation. Subsequently, the transmitting station 101 and receiving station 102 perform communication from communication 4 onward, performing information encryption and decryption using the encryption key transmitted in communication 3.

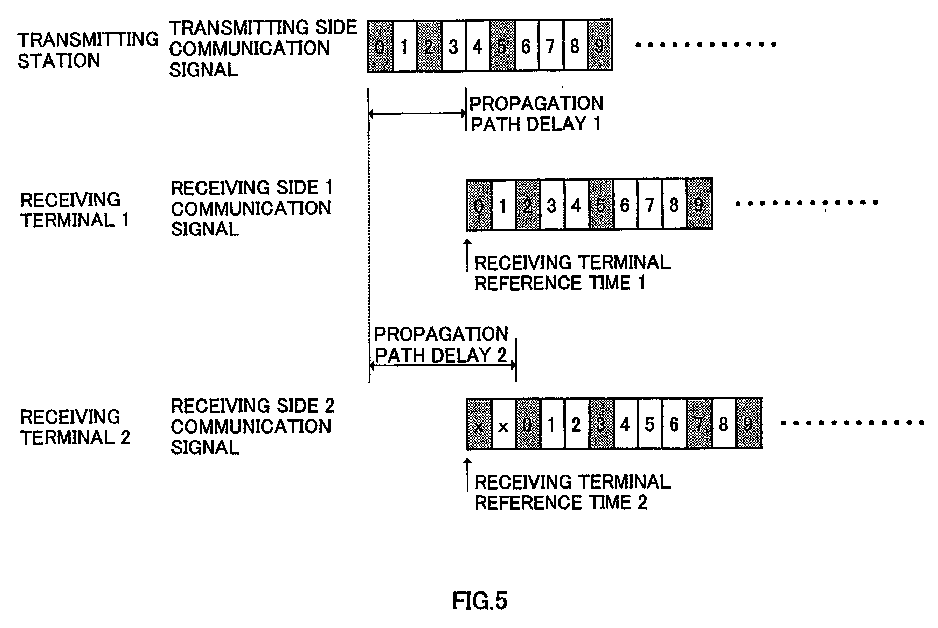

Communication 3 will now be described in detail using FIG.5. In FIG.5, it is assumed that receiving terminal 1 is the receiving station 102 that is the intended transmission destination of confidential information from the transmitting station 101, and receiving terminal 2 is another terminal.

If the time between communication 1 and communication 3 is sufficiently short, since the radio wave transmission speed is extremely high compared with the speed of movement of the receiving station (receiving terminal 1) 102, even if there is a change in the relative positions of the transmitting station 101 and receiving station 102 there will be no major change in the propagation path 103 environment, and particularly in the signal propagation time (propagation path delay 1).

For example, assuming that there is an interval of 1 second between communication 1 and communication 3, and that the receiving station 102 is moving at 100 [km] per hour, the change in propagation path delay 1 will be about 100 [ns]. Therefore, receiving terminal reference time 1 set by the receiving station (receiving terminal 1) 102 in reception 1T and the time of reception 3T at which transmission 3B adjusted by the channel parameter adaptation section 101d of the transmitting station 101 is received by the receiving station 102 via the propagation path 103 are virtually synchronized, and time adjustment is not necessary.

By this means , receiving terminal 1 starts reception and demodulation at receiving terminal reference time 1, and can reconstruct communication information by sequentially demodulating received receiving side 1 communication signals.

On the other hand, the case will be considered where a third party (receiving terminal 2) other than the receiving station (receiving terminal 1) 102 intercepts this communication 3 and attempts to reconstruct the information. Receiving terminal 2 can receive information between communication 1 and communication 2, but since reference time information (network time Tk) indicating the reception and demodulation start time is not included in the communication 3 signal, receiving terminal 2 cannot reconstruct the information.

This reference time information is calculated by receiving terminal 1 based on reception 1T, and is a target time whereby the transmitting station 101 estimates the propagation path 103 signal propagation time (propagation path delay 1) by means of communication 1 and communication 2 and performs transmission control so that a signal arrives at that reference time. This reference time differs according to the channel parameter (that is to say, the propagation path). Consequently, it is not possible for receiving terminal 2 to ascertain the correct propagation path delay time 2 in advance or by measurement.

Thus , receiving terminal 2 cannot ascertain the time at which communication 3 will be sent. Therefore, it is not possible to set the correct receiving terminal reference time 2 for a receiving side 2 communication signal. Consequently, it is not possible to reconstruct communication 3 information. This enables a high degree of security to be assured for communication 3.

According to the above-described configuration, a highly secure radio communication system 100 can be implemented by sharing the same reference time (network reference time) between a transmitting station 101 and receiving station 102 and estimating the signal propagation time between the transmitting station 101 and receiving station 102, having the transmitting station 101 send a transmit signal at a timing that takes account of the signal propagation time so that the signal is received by the receiving station 102 at network time Tk, and having the sent signal received and demodulated by the receiving station 102 at network time Tk.

(Embodiment 2)

A radio communication system according to this embodiment has a similar configuration to the radio communication system 100 according to Embodiment 1, but differs in that the order of confidential information is rearranged in accordance with a predetermined format. By this means, a radio communication system according to this embodiment enables communication to be carried out with a significantly higher degree of security.

In actuality, this rearrangement of the order of information may be performed by the burst generation section 115 of the transmitting station 101 (FIG.2), and processing to restore the rearranged signal order to its original state may be performed by the stream forming section 142 of the receiving station 102 (FIG.2). It is here assumed that the order rearrangement rules are decided beforehand between the transmitting station 101 and receiving station 102 only.

Thus, in a radio communication system according to this embodiment, in addition to having the same reference time shared by the transmitting station 101 and receiving station 102, estimating the signal propagation time in the propagation path 103, having the transmitting station 101 send a transmit signal at a timing that takes the signal propagation time into consideration, and having the receiving station 102 demodulate a signal received at exactly network time Tk, transmit data is also rearranged using a format known only to the stations involved in the communication, thereby making it possible to implement a significantly more secure radio communication system as well as achieving the effects of Embodiment 1.

It is not necessary to use only a single format that determines the order of information, and providing a plurality of kinds of format will enable security from third party interception to be further increased.

(Embodiment 3)

A radio communication system according to this embodiment has a configuration whereby, in addition to the configuration in Embodiment 1 described above, confidential information symbols are transmitted mixed with dummy symbols. In actuality, processing to mix confidential information symbols with dummy symbols is performed by burst generation sections 115 and 132 (FIG.2, FIG.3). By this means, a radio communication system according to this embodiment enables communication to be carried out with a significantly higher degree of security than the radio communication system 100 according to Embodiment 1.

The operation of a radio communication system according to this embodiment will now be described, again using FIG.4 and FIG.5 used for Embodiment 1.

In a radio communication system according to this embodiment, confidential information and dummy information are arranged in accordance with a predetermined format. It is here assumed that in the predetermined format, symbols 0, 2, 5, and 9 in FIG.5 are dummy symbols, and the other symbols are confidential symbols. At this time, the transmitting station sets regular information in confidential symbols and dummy information in dummy symbols and transmits communication 3 (transmission 3T).

The information in communication 3 is received by the receiving station 102 (reception 3T) delayed by the time resulting from adding the propagation path 103 signal propagation time to the transmitting station 101 processing delay. The receiving station 102 starts reception 3T based on the receiving terminal reference time (network time Tk) set in reception 1T.

In receiving terminal 1, since the time of symbol 0 of the receiving side 1 communication signal is the same as receiving terminal reference time 1, confidential symbols only can be extracted, demodulated, and decrypted by selecting and eliminating dummy symbols in accordance with the aforementioned format. Subsequently, the transmitting station 101 and receiving station 102 perform communication from communication 4 onward, performing encryption based on information transmitted in communication 3.

In receiving terminal 2, since the times of symbol 0 of the receiving side 2 communication signal and receiving terminal reference time 1 are not the same, the synchronization necessary for demodulation cannot be achieved. Consequently, the received signal cannot be demodulated.

In addition, it is not possible to obtain regular confidential data even if a received signal can be demodulated and decrypted. For example, when performing burst communication, it is possible to estimate the synchronization time from the reception power waveform, but it is extremely difficult for a third party to perform synchronization when dummy symbols are inserted as in this embodiment. This makes it possible to assure significantly higher security for communication 3.

Thus, according to the above-described configuration, it is possible to implement a radio communication system with significantly higher security by providing a feature of transmitting dummy information mixed with confidential information in addition to the configuration in Embodiment 1.

(Embodiment 4)

In this embodiment, confidential information is transmitted mixed with a synchronization sequence in addition to being mixed with dummy information. As a result it is significantly more difficult for confidential information to be reconstructed by a receiving station other than that for which a transmission is intended, while at the same time the receiving station for which a transmission is intended can obtain confidential information with good reception quality by using the synchronization sequence.

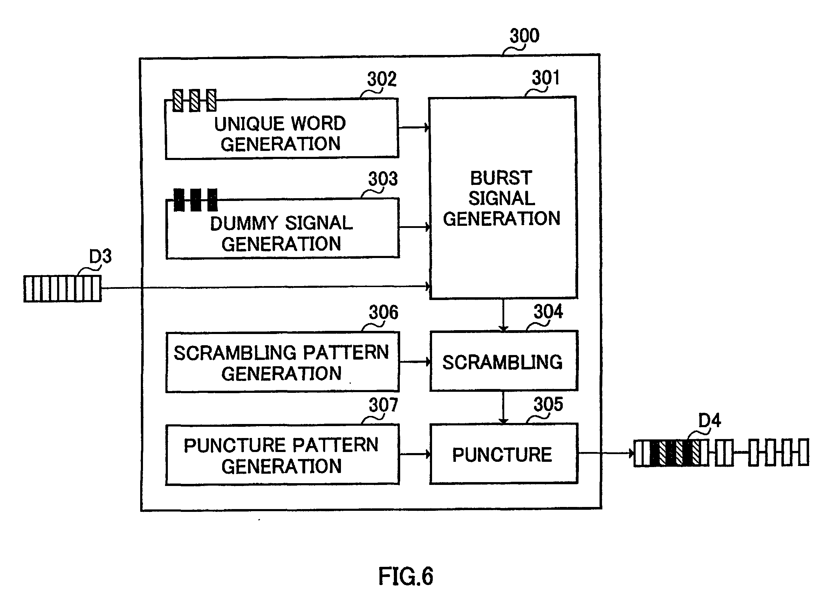

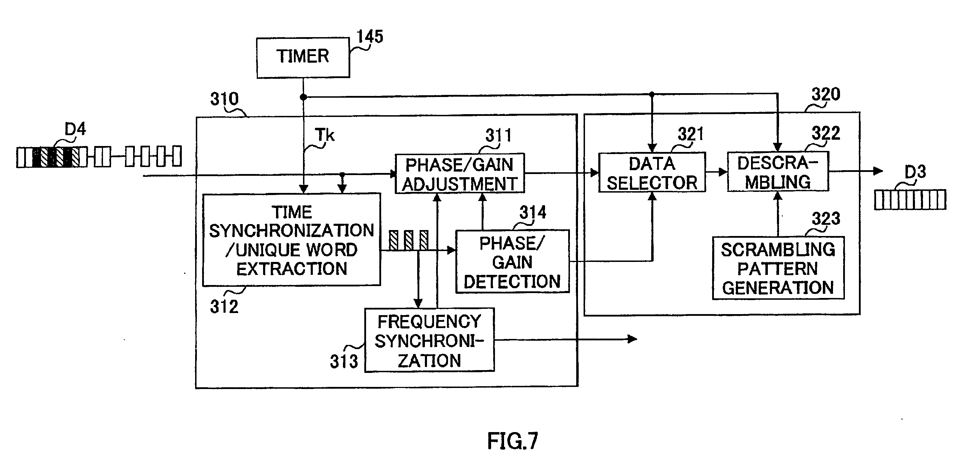

In actuality, in a radio communication system according to this embodiment, dummy signal admixing and dummy signal elimination are achieved by configuring the burst generation section 115 in FIG.2 as shown in FIG.6, and configuring the demodulation section 141 and stream forming section 142 shown in FIG.3 as shown in FIG.7. Also, in order to simplify the explanation, only the case where encrypted data is transmitted as confidential data is described for this embodiment.

As shown in FIG.6, in a burst generation section 300 of this embodiment, encrypted user data D3 is input to a burst signal generation circuit 301. Also input to the burst signal generation circuit 301 are a unique word sequence generated by a unique word generation circuit 302, and a dummy signal sequence generated by a dummy signal generation circuit 303. The burst signal generation circuit 301 converts the user data sequence, unique word sequence, and dummy signal sequence to a burst-type signal, and sends the converted signal to a scrambling circuit 304.

The scrambling circuit 304 scrambles the burst signal using a scrambling pattern generated by a scrambling pattern generation circuit 306, and sends the scrambled signal to a puncture circuit 305. The puncture circuit 305 performs puncture processing on the scrambled signal using a puncture pattern generated by a puncture pattern generation circuit 307. By this means, the puncture-processed signal D4 has a dummy signal and unique word randomly mixed with user data, and is given a gapped form. This puncture-processed signal D4 is then sent to a modulation section 116 (FIG.2). A specific symbol may be inserted as puncture processing instead of making a gapped form.

Next, the configuration of a receiving station that extracts only user data D3 from scrambled and puncture-processed signal D4 will be described using FIG.7. In a demodulation circuit 310, received signal D4 on which scrambling and puncture processing has been executed, output from a radio reception section (receive RF) 140 (FIG.3), is input to a phase and gain adjustment circuit (phase/gain adjustment) 311, and is also input to a time synchronization and unique word extraction circuit (time synchronization/unique word extraction) 312.

The time synchronization and unique word extraction circuit 312 has as input the network time Tk described in Embodiment 1 above from a timer 145, and extracts the unique word sequence from received signal D4 based on the timing of this network time Tk. Then the extracted unique word sequence is sent to a frequency synchronization circuit 313, and is also sent to a phase and gain detection circuit (phase/gain detection) 314.

The frequency synchronization circuit 313 detects the frequency error from the extracted unique word sequence, and sends frequency information to the phase and gain adjustment circuit (phase/gain adjustment) 311. The phase/gain detection circuit 314 detects the phase rotation amount and gain from the unique word sequence, and sends the detection results to the phase and gain adjustment circuit 311. The frequency information detected by the frequency synchronization circuit 313 is used as a synchronization signal for other circuits.

By this means, since phase adjustment and gain adjustment can be performed by the phase/gain adjustment circuit 311 using the phase rotation amount and gain accurately detected based on the unique word sequence, it is possible to perform accurate compensation of scrambled and punctured data D4 including phase variation and gain variation at the time of transmission.

Scrambled and punctured data that has undergone phase and gain adjustment is sent to a data selector 321 of a stream forming section 320. The data selector 321 has as input the network time Tk from the timer 145, together with phase information and signal amplitude information from the phase/gain detection circuit 314. Based on this information, the burst-type signal is restored to the original data stream, and inter-signal gaps formed by puncture processing are filled in. This data stream is sent to a descrambling circuit 322.

Input to the descrambling circuit 322 are the network time Tk from the timer 145 and a scrambling pattern from a scrambling pattern generation circuit 323. The scrambling pattern generation circuit 323 generates the same scrambling pattern as the scrambling pattern generation circuit 306 of the transmitting station (FIG.6). As a result, the descrambling circuit 322 can eliminate the dummy signal sequence and unique word sequence from the data stream, and output only user data D3.

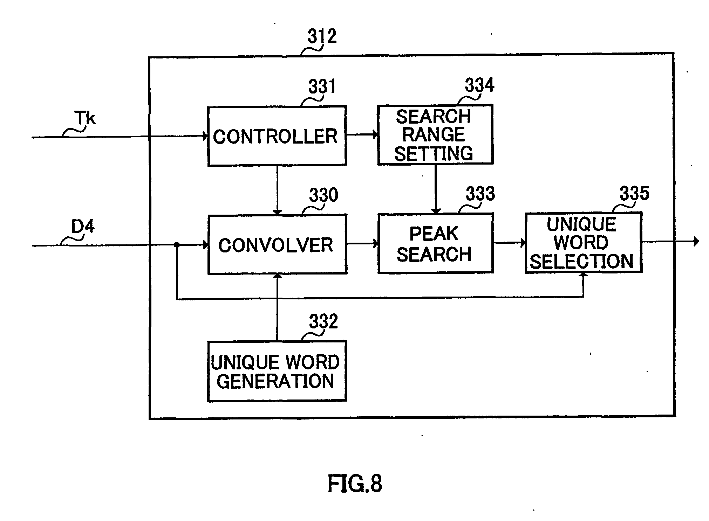

FIG.8 shows the detailed configuration of the time synchronization/unique word extraction circuit 312. In the time synchronization/unique word extraction circuit 312, scrambled and punctured data D4 is input to a convolver circuit 330. The network time Tk from the timer 145 (FIG.7) is input to a controller 331. The convolver circuit 330 is subjected to time control by the controller 331. Then the correlation value between the unique word sequence extracted in accordance with the format from the scrambled and punctured data and the unique word sequence generated by a unique word generation circuit 332 is found during fixed times based on the network time Tk. The unique word generation circuit 332 generates the same unique word sequence as on the transmitting station side. The convolver circuit 330 sends the correlation value obtained in this way to a peak search circuit 333.

The peak search circuit 333 searches for the peak correlation value within a search range set by a search range setting circuit 334. The search range setting circuit 334 sets a search range with a predetermined time width centered about a time a predetermined interval after the network time Tk output from the controller 331. The receiving station has prior knowledge of the arrangement of the unique word sequence and dummy signal sequence, and so can determine approximately how much later than the network time Tk the unique word sequence data is to be demodulated. Therefore, a search range centered about this approximate time is set by the search range setting circuit 334.

The peak search circuit 333 searches for the peak correlation value in the above-described search range. The peak search result is sent to a unique word selection circuit 335. The unique word selection circuit 335 selects the signal sequence corresponding to the peak correlation value as a unique word.

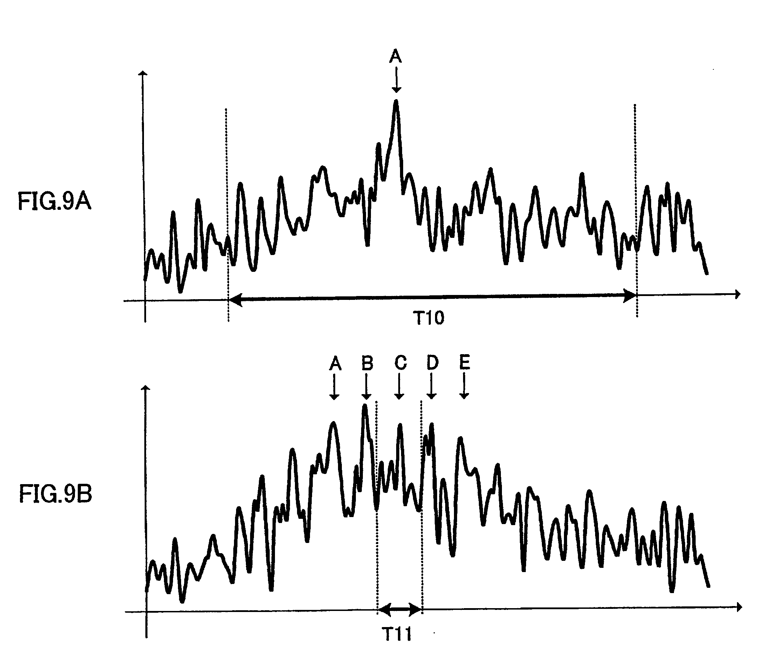

FIG.9 shows the relationship between a correlation value obtained by the convolver circuit 330 and a unique word (synchronization word) . FIG.9 (A) is an example of the case where there is one unique word (A in the figure is the unique word), such as when the network reference time is transmitted, for example. In a case such as this, only one large peak appears, and a search for time synchronization can be performed over a wide range, such as that indicated by time width T10, for example. That is to say, if a third party attempts to obtain a synchronization signal for the purpose of intercepting a communication, there is a risk of the synchronization signal being detected comparatively easily.

On the other hand, when a signal is received mixed with a unique word sequence and dummy signal sequence, as in this embodiment, the relationship between a correlation integral value and a unique word is as shown in FIG.9 (B). It is here assumed that a dummy signal sequence is arranged with a fixed time displacement relative to a unique word sequence, and moreover that the dummy signal sequence is a signal sequence with a high correlation with a unique word sequence. As stated above regarding FIG.6, as there is a high correlation between a unique word sequence and dummy signal sequence, the correlation value output by the convolver circuit 330 indicates a high value for a unique word sequence and dummy signal sequence. For example, if one unique word sequence and four dummy signal sequences are present in scrambled and punctured data, in the correlation value a plurality of peaks (in the figure, five peaks A through E) appear at almost the same level. If the unique word peak is C (with A, B, D, and E according to a dummy signal), the unique word for time synchronization can be retrieved by performing a peak search only in the narrow time width T11 in the figure.

That is to say, in a receiving station according to this embodiment, by having a search range T11 with a narrow time width centered on the network time Tk that can only be known by this receiving station set by the search range setting circuit 334, it is possible to accurately extract a unique word that forms the basis of time synchronization, phase variation detection, and gain variation detection. In other receiving stations, as there is a dummy signal with a high correlation with a unique word, the distinction between a unique word and dummy signal is not established, and therefore time synchronization, phase variation compensation, and gain compensation cannot be performed correctly, and it becomes significantly more difficult to intercept a communication. In this embodiment, a unique word sequence composed of a plurality of symbols has been given as an example, but this may be replaced by a pilot signal configured using a single symbol unit.

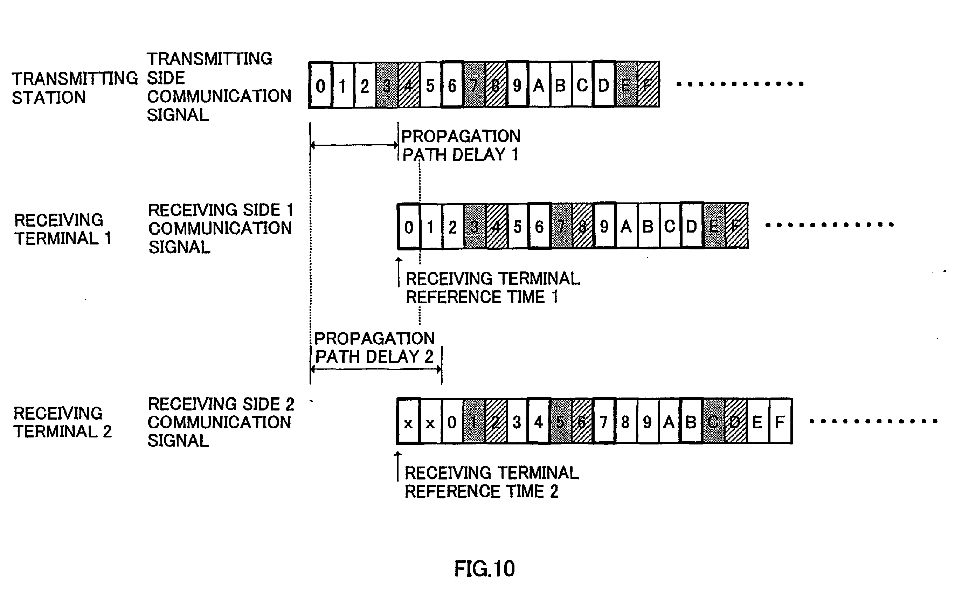

Next, the operation of a radio communication system according to this embodiment will be described using FIG.10, focusing on synchronization operations on the receiving station 102 side. The operations for communication 1 and communication 2 are the same as in Embodiment 1 above, and therefore a description of these operations will be omitted here.

The channel parameter adaptation section 101d of the transmitting station 101 transmits (transmission 38) a signal (communication 3) at a timing synchronized with the receiving station 102 receiving terminal reference time (network time Tk) based on the signal propagation time estimated by the channel parameter estimation section 101c and the processing delay. In communication 3, a synchronization sequence based on a preset format, a dummy synchronization sequence (the above-described dummy signal sequence, but in this embodiment functioning rather as a dummy signal for the synchronization sequence than as a dummy signal for confidential information, and so hereinafter referred to as such), and confidential information are arrayed and transmitted.

Information of the communication 3 is delayed by the time resulting from adding the signal propagation time to the transmitting station 101 processing delay time, and is received by the receiving station 102 at the receiving terminal reference time (reception 3T). The receiving station 102 starts reception 3T based on the receiving terminal reference time set in reception 1T, and extracts the synchronization sequence (unique word sequence) from this received signal based on the aforementioned format. Using this, time, frequency, phase, and suchlike synchronization is then performed. Following this, confidential information is separated from the received signal received in reception 3T, and demodulation and decryption of that information is performed. Subsequently, the transmitting station 101 and receiving station 102 perform communication from communication 4 onward, performing information encryption based on information (for example, an encryption key) transmitted in communication 3.

Communication 3 will now be described in detail using FIG.10. In FIG.10, symbols 4, 8, and F are assumed to be a synchronization sequence, and symbols 3, 7, and E are assumed to be a dummy synchronization sequence. Also, it is assumed that receiving terminal 1 is the receiving station 102 that is the intended transmission destination of the transmitting station 101, and receiving terminal 2 is another terminal.

When a frame arranged as shown in FIG.10 is transmitted, since the synchronization sequence is received by terminal 1 virtually in synchronization with receiving terminal reference time 1, the synchronization sequence (symbols 4, 8, and F) and the dummy synchronization sequence ( symbols 3, 7, and E) can easily be separated and selected.

In the receiving station 102, time, frequency, and phase synchronization is performed using this synchronization sequence. Even if an error arises in the signal received by receiving terminal 1 (the receiving side 1 communication signal) with respect to receiving terminal reference time 1, as long as it is of a degree that does not cause erroneous selection of the dummy synchronization sequence, compensation can be performed by means of this synchronization sequence. By this means, reception quality can be improved.

Also, if phase information is modulated by means of the synchronization sequence, by enabling phase synchronization also to be performed, synchronization detection for communication 3 information transmitted at the same time, or detection based thereon, can be performed, and it is possible to carry out high-quality communication by means of the communication method described in Embodiment 1, for example.

On the other hand, receiving terminal 2 cannot know the time at which communication 3 is sent, and cannot detect the correct synchronization sequence for a receiving side 2 communication signal. If a sequence similar or identical to the synchronization sequence is used for the dummy synchronization sequence, for example, receiving terminal 2 will perform synchronization using the dummy synchronization sequence close to receiving terminal reference time 2 (symbols 3, 7, and E). As a result, information transmitted in communication 3 cannot be correctly demodulated and decrypted. This enables a high degree of security to be assured for communication 3.

Thus, according to the above-described configuration, it is possible to implement a radio communication system with significantly higher security and reception quality by providing a feature of mixing a synchronization sequence and dummy synchronization sequence with confidential information on the transmitting side in addition to the configuration in Embodiment 1.

In this embodiment, since the receiving station 102 starts received signal demodulation and decryption based on receiving terminal reference time 1, the transmitting station 101 can add any dummy symbols prior to symbol 0 or from symbol 9 onward without a frame format or the like having been set beforehand. By so doing, the burst length becomes variable, making it difficult to estimate the position of a synchronization sequence from the form of the signal amplification, and so enabling confidentiality with respect to a third party to be further improved. Moreover, estimation based on the signal amplitude form can be made significantly more difficult if the amplitude of symbols inserted by the puncture circuit 305 is varied.

(Embodiment 5)

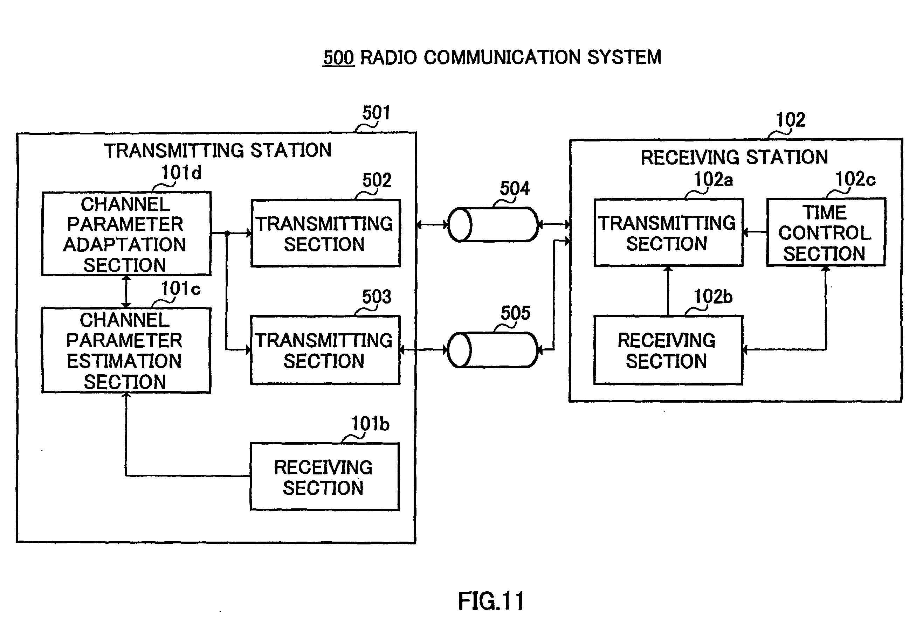

In FIG.11, in which parts corresponding to those in FIG.1 are assigned the same codes, reference code 500 denotes a radio communication system according to Embodiment 5 of the present invention as a whole. Radio communication system 500 has almost the same configuration as radio communication system 100 according to Embodiment 1 described above, but differs in that there are two transmission sections 502 and 503 in the transmitting station 501.

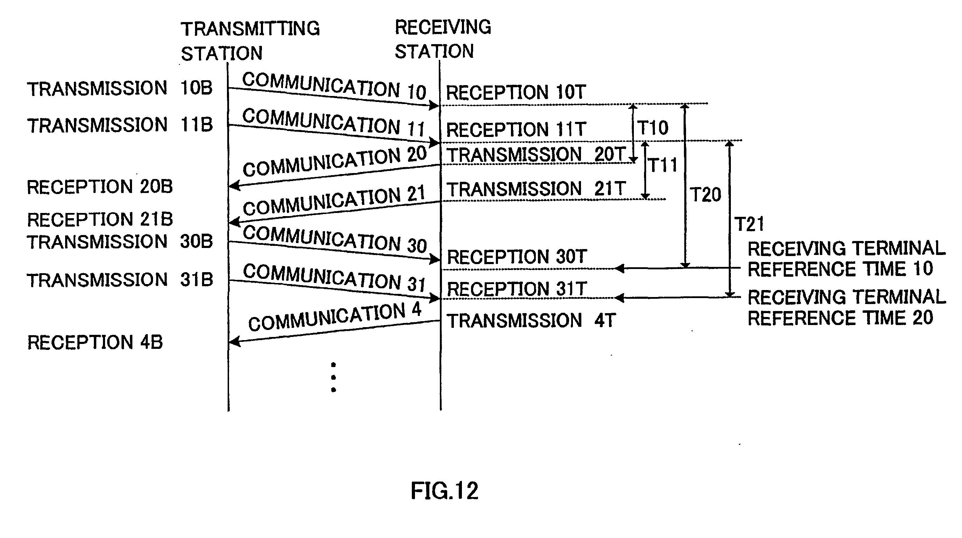

That is to say, the transmitting station 501 in radio communication system 500 comprises a channel parameter estimation section 101c, channel parameter adaptation section 101d, first transmitting section 502, second transmitting section 503, and receiving section 101b. In actuality, the first transmitting section 502 and second transmitting section 503 do not each have a transmitting section 101a as shown in FIG.2, but the antennas are placed in different positions, and signal processing is performed by a single processing section that has the same kind of configuration as transmitting section 101a. The receiving station 102 comprises a transmitting section 102a, receiving section 102b, and time control section 102c. Communication is performed by means of the communication procedure shown in FIG.12, via a first propagation path 504 and second propagation path 505.

First, the transmitting station 501 sends (transmission 10B) a control signal including the network reference time (communication 10) from the first transmitting section 502 while controlling output so as to pass via the first propagation path 504. When the receiving station 102 receives communication 10 (reception 10T), based on that time it sets the delay time (T10) until the next transmission (transmission 20T) and the receiving terminal reference time 10 for the next communication 30 after a fixed time (T20). When the delay time (T10) has elapsed after reception 10T, the receiving station 102 transmits (transmission 20T) a response signal (communication 20) to the transmitting station 501.

The transmitting station 501 and receiving station 102 both hold above-mentioned delay time T10 and fixed time T20 information, and later herein described delay time T11 and fixed time T21 information, beforehand as shared information.

In the transmitting station 501, at the same time as communication 20 is received (reception 20B), the channel parameter estimation section 101c estimates the state of the first propagation path 504 from the control signal transmitted in transmission 10B and the response signal received in reception 20B. To be specific, a delay amount estimation section provided in the transmitting station 501 calculates the signal propagation time in propagation path 504 from the transmission 10B and reception 20B times, the delay time (T10) at the receiving station 102, the processing delay arising within each apparatus, and so forth. The processing thus far is the same as the processing described above in Embodiment 1.

Similarly, the transmitting station 501 sends (transmission 11B) a signal (communication 11) from the second transmitting section 503 while controlling output so as to pass via the second propagation path 505. When the receiving station 102 receives communication 11 (reception 11T), based on that time it sets the delay time (T11) until the next transmission (transmission 21T) and the receiving terminal reference time 20 for the next communication 31 after a fixed time (T21). When the delay time (T11) has elapsed after reception 20T, the receiving station 102 transmits (transmission 21T) a response signal (communication 21) to the transmitting station 501.

In the transmitting station 501, at the same time as communication 21 is received (reception 21B), the channel parameter estimation section 101c estimates the state of the second propagation path 505 from the signal (communication 11) transmitted in transmission 11B and the response signal (communication 21) received in reception 21B. To be specific, the delay amount estimation section provided in the transmitting station 501 calculates the signal propagation time in propagation path 505 from the transmission 11B and reception 21B times, the delay time (T11) at the receiving station 102, the processing delay arising within each apparatus, and so forth.

The channel parameter adaptation section 101d of the transmitting station 501 transmits (transmission 30B) a signal (communication 30) so as to synchronize with receiving terminal reference time 10 of the receiving station 102, based on the first propagation path 504 signal propagation time and processing delay, while controlling output so as to pass from the first transmitting section 502 via the first propagation path 504.

Similarly, the channel parameter adaptation section 101d of the transmitting station 501 transmits (transmission 31B) a signal (communication 31) so as to synchronize with receiving terminal reference time 20 of the receiving station 102, based on the second propagation path 505 signal propagation time and processing delay, while controlling output so as to pass from the second transmitting section 503 via the second propagation path 505.

Communication 30 and communication 31 here contain confidential information such as an encryption key, for example. The information in communication 30 is received by the receiving station 102 (reception 30T) delayed by the time resulting from adding the first propagation path 504 signal propagation time to the transmitting station 501 processing delay. Similarly, the information in communication 31 is received by the receiving station 102 (reception 31T) delayed by the time resulting from adding the second propagation path 505 signal propagation time to the processing delay.

The receiving station 102 starts reception 30T and reception 31T based on receiving terminal reference time 10 and receiving terminal reference time 20 set in reception 10T and reception 11T respectively, and demodulates and decrypts the receive data. Subsequently, the transmitting station 501 and receiving station 102 perform communication from communication 4 onward, performing information encryption and decryption using the information (encryption key) transmitted in communication 30 and communication 31.

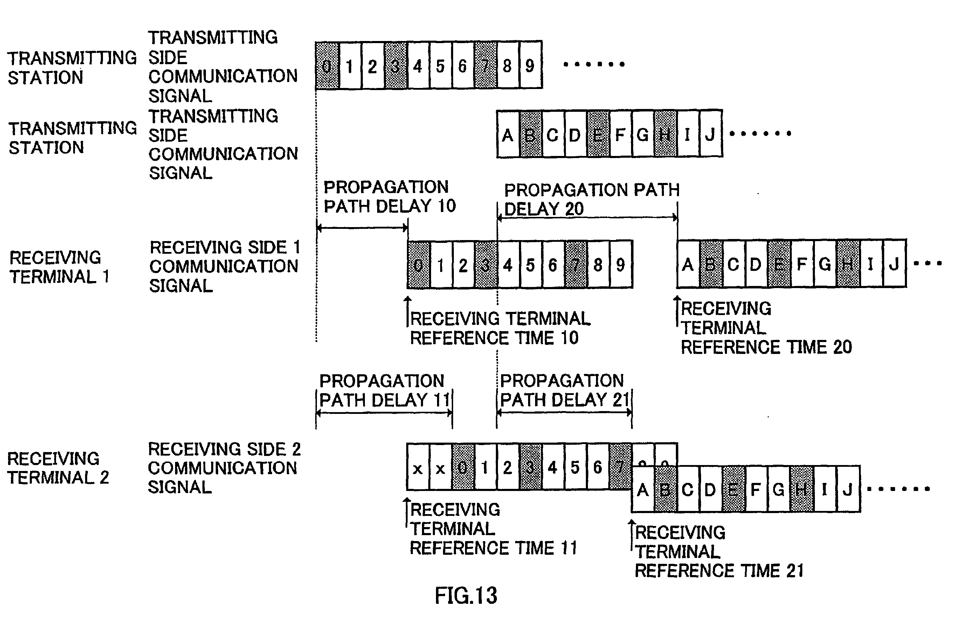

Communication 30 and communication 31 will now be described in detail using FIG.13. In FIG.13, it is assumed that receiving terminal 1 is the receiving station 102 that is the intended transmission destination of the transmitting station 501, and receiving terminal 2 is another terminal.

If the time between communication 10/communication 11 and communication 30/communication 31 is sufficiently short, since the radio wave transmission speed is extremely high compared with the speed of movement of the receiving station (receiving terminal 1) 102, even if there is a change in the relative positions of the transmitting station 501 and receiving station 102 there will be no major change in the propagation path environment, and particularly in the first propagation path 504 and second propagation path 505 delay (propagation path delay 10 and propagation path delay 20).

Therefore, receiving terminal reference time 10 and receiving terminal reference time 20 set by the receiving station (receiving terminal 1) 102 in reception 10T and reception 11T, respectively, and receiving terminal reference times 10 and 20 at which transmission 30B and transmission 31B adjusted by the channel parameter adaptation section 101d of the transmitting station 501 are received by the receiving station 102 via propagation paths 504 and 505, are virtually synchronized, and time adjustment is not necessary.

Thus, receiving terminal 1 can reconstruct confidential information by sequentially demodulating received receiving side 1 communication signals, based on receiving terminal reference time 10 for communication 30, and based on receiving terminal reference time 20 for reception 31.

On the other hand, the case will be considered where a third party (receiving terminal 2) that is not the transmission destination intercepts this communication 3 and attempts to reconstruct the information. Receiving terminal 2 can receive information in communication 10, communication 11, communication 20, and communication 21, but since receiving terminal reference times 10 and 20 are not included in the communication 30 and communication 31 signals, receiving terminal 2 cannot reconstruct confidential information.

This reference time information is calculated by receiving terminal 1 based on receptions 10T and 11T, and comprises target times whereby the transmitting station 501 estimates the first propagation path 504 and second propagation path 505 signal propagation times (propagation path delays 10 and 20) by means of communications 10, 11, 20, and 21, and performs transmission control so that a signal arrives at that reference time. This reference time information differs according to the propagation environment (that is to say, the propagation path). Consequently, it is not possible for receiving terminal 2 to ascertain correct propagation path delay times 10 and 20 in advance or by measurement.

Therefore, since a receiving side 1 communication signal received by receiving terminal 1 arrives at a scheduled time set by receiving terminal 1 for both communication 30 and communication 31, communication terminal 1 can reconstruct receiving side 1 communication signals. On the other hand, receiving terminal 2, which receives signals from the transmitting station 501 via a transmission path that differs from both the first propagation path 504 and second propagation path 505, cannot perform synchronous reception of a receiving side 2 communication signal.

Moreover, receiving terminal 2 cannot ascertain the correct propagation path delay time 11 and propagation path delay time 21 in advance or by measurement. Thus, receiving terminal 2 cannot ascertain the time at which communication 30 and communication 31 will arrive. Consequently, it is not possible to set the correct receiving terminal reference time 11 and receiving terminal reference time 21 for a receiving side 2 communication signal, and it is virtually impossible to receive communication 30 and communication 31 correctly.

Particularly notable effects can be achieved in terms of security if confidential information is transmitted distributed between the first transmitting section 502 and second transmitting section 503.

Thus, according to the above-described configuration, a radio communication system 500 with a significantly higher degree of security can be implemented by forming a plurality of propagation paths 504 and 505 by providing a plurality of transmitting sections 502 and 503 on the transmitting side, in addition to the configuration in Embodiment 1, and having confidential information arrive at times (receiving terminal reference times 10 and 20) determined by the receiving station 102 via respective propagation paths 504 and 505.

(Embodiment 6)

In this embodiment, a radio communication system is proposed that combines the configuration whereby transmit data is transmitted and received using timing that can be known only to the stations performing mutual communication proposed in Embodiment 1, the configuration whereby transmit data is rearranged using a format known only to the stations performing mutual communication proposed in Embodiment 2, the configuration whereby dummy symbols are mixed in with communication information proposed in Embodiment 3, and the configuration whereby communication is performed via a plurality of propagation paths proposed in Embodiment 5. In addition to this configuration, a radio communication system according to this embodiment differs from Embodiment 5 in receiving signals at the same time via two propagation paths, and combining these signals.

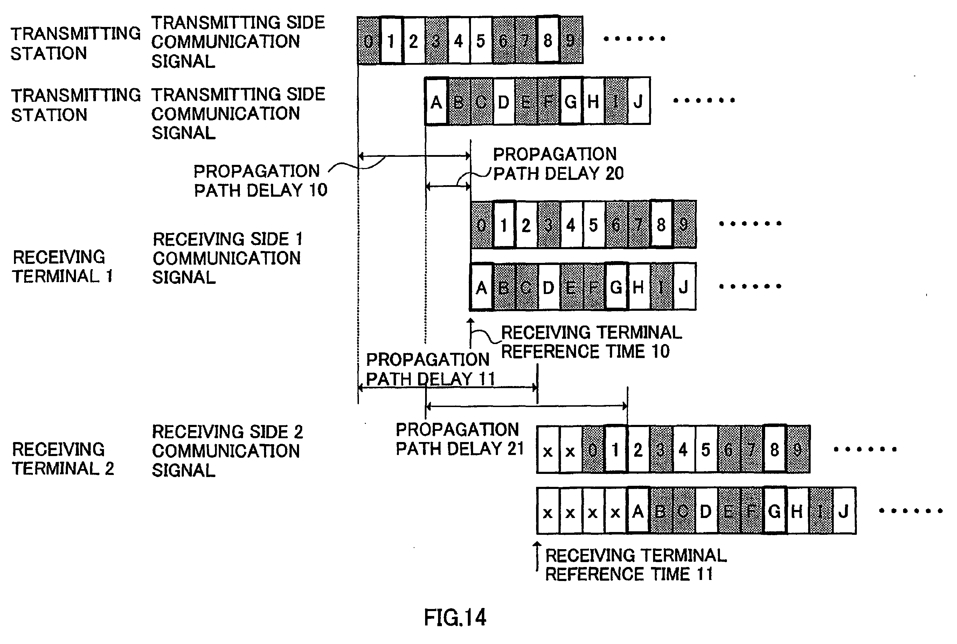

The communication method according to this embodiment will be described below using FIG.12 and FIG.14.

The outline from communication 10 to communication 21 in FIG.12 is as described in Embodiment 5. That is to say, by means of communications from communication 10 to communication 21, a transmitting station 501 and receiving station 102 estimate signal propagation times on a first propagation path 504 and second propagation path 505, and also set a network reference time and receiving terminal reference times for synchronizing the operation of both stations.

That is to say, the transmitting station 501 first sends (transmission 10B) a control signal including the network reference time (communication 10) from a first transmitting section 502 while controlling output so as to pass via the first propagation path 504. When the receiving station 102 receives communication 10 (reception 10T), based on that time it sets the delay time (T10) until the next transmission (transmission 20T) and the receiving terminal reference time 10 for the next communication 30 after a fixed time (T20). When the delay time (T10) has elapsed after reception 10T, the receiving station 102 transmits (transmission 20T) a response signal (communication 20) to the transmitting station 501.

In the transmitting station 501, at the same time as communication 20 is received (reception 20B), the channel parameter estimation section 101c estimates the state of the first propagation path 504 from the control signal transmitted in transmission 10B and the response signal received in reception 20B. To be specific, a delay amount estimation section provided in the transmitting station 501 calculates the signal propagation time in propagation path 504 from the transmission 10B and reception 20B times, the delay time (T10) at the receiving station 102, the processing delay arising within each apparatus, and so forth.

Similarly, the transmitting station 501 sends (transmission 11B) a signal (communication 11) from the second transmitting section 503 while controlling output so as to pass via the second propagation path 505. When the receiving station 102 receives communication 11 (reception 11T), based on that time it sets the delay time (T11) until the next transmission (transmission 21T) and the receiving terminal reference time 20 for the next communication 31 after a fixed time (T21).

In this embodiment, unlike above-described Embodiment 5, this receiving terminal reference time 20 is set to the same time as receiving terminal reference time 10.

When the delay time (T11) has elapsed after reception 20T, the receiving station 102 transmits (transmission 21T) a response signal (communication 21) to the transmitting station 501.

In the transmitting station 501, at the same time as communication 21 is received (reception 21B), the channel parameter estimation section 101c estimates the state of the second propagation path 505 from the control signal (communication 11) transmitted in transmission 11B and the response signal (communication 21) received in reception 21B. To be specific, the delay amount estimation section provided in the transmitting station 501 calculates the signal propagation time in propagation path 505 from the transmission 11B and reception 21B times, the delay time (T11) at the receiving station 102, the processing delay arising within each apparatus, and so forth.

The channel parameter adaptation section 101d of the transmitting station 501 transmits (transmission 30B) a signal (communication 30) so as to synchronize with receiving terminal reference time 10 of the receiving station 102, based on the first propagation path 504 signal propagation time and processing delay, while controlling output so as to pass from the first transmitting section 502 via the first propagation path 504.

Similarly, the channel parameter adaptation section 101d of the transmitting station 501 transmits (transmission 31B) a signal (communication 31) so as to synchronize with receiving terminal reference time 20 of the receiving station 102, based on the second propagation path 505 signal propagation time and processing delay, while controlling output so as to pass from the second transmitting section 503 via the second propagation path 505.

Communication 30 and communication 31 here contain confidential information such as an encryption key, for example. The information in communication 30 is received by the receiving station 102 (reception 30T) delayed by the time resulting from adding the first propagation path 504 signal propagation time to the transmitting station 501 processing delay. Similarly, the information in communication 31 is received by the receiving station 102 (reception 31T) delayed by the time resulting from adding the second propagation path 505 signal propagation time to the processing delay.

The receiving station 102 starts reception 30T and reception 31T based on receiving terminal reference times 10 and 20. At this time, since communication 30 and communication 31 receiving terminal reference times 10 and 20 are set to the same time, transmit data from the transmitting station 501 is received by the receiving station 102 at the same time.

As a result, communication 30 and communication 31 cause mutual interference in the receiving station 102, and the combined result is received by the receiving station 102. Here, the communication information in communication 30 and communication 31 is configured with information symbols (confidential information) and dummy symbols mixed in accordance with a preset format.

First, in order to simplify the explanation, it is assumed that the dummy symbols are all power-0 symbols. Based on receiving station 102 receiving terminal reference time 10, of all the symbols in communication 30, only symbols at a time overlapped by a communication 31 dummy symbol do not receive communication 31 interference. Conversely, of all the symbols in communication 31, only symbols at a time overlapped by a communication 30 dummy symbol do not receive communication 30 interference.

Therefore, if a format is set in advance such that information symbols of the two do not cause mutual interference, signals free of deterioration due to interference can be received from both communication 30 and communication 31. The receiving station 102 demodulates and decrypts a received signal combined in this way.

Communication 30 and communication 31 according to this embodiment will now be described in detail using FIG.14. In FIG.14, it is assumed that symbols 0, 3, 6, 7, and 9, and symbols B, C, E, F, and I, are dummy symbols. It is also assumed that receiving terminal 1 is the receiving station 102 that is the intended transmission destination of the transmitting station 501, and receiving terminal 2 is another terminal.

Here, as receiving terminal reference time 10 set by the receiving station (receiving terminal 1) 102 in reception 10T and reception 11T and the time at which transmission 30B and transmission 31B adjusted by the channel parameter adaptation section 101d of the transmitting station 501 are received by the receiving station 102 via propagation paths 504 and 505 are virtually synchronized, and communication 30 and communication 31 are received at the same time, receiving side 1 communication signals mutually interfere.

In FIG.14, symbols 1, 2, 4, 5, and 8, and symbols B, C, E, F, and I, respectively, are combined, and symbols A, D, G, H, and J, and symbols 0, 3, 6, 7, and 9, respectively, are combined. However, as symbols 0, 3, 6, 7, and 9, and symbols B, C, E, F, and I, are dummy symbols, and their power is 0, the combined receiving side 1 communication signal comprises A, 1, 2, D, 4, 5, G, H, 8, J.

As none of these information symbols is subjected to mutual interference due to communication, communication information (confidential information) can be obtained by sequentially demodulating the received receiving side 1 communication signal.

on the other hand, the case will be considered where a third party (receiving terminal 2) that is not the transmission destination intercepts these communications 30 and 31 and attempts to reconstruct the information. Receiving terminal 2 can receive information in communication 10, communication 11, communication 20, and communication 21, but communication 30 and communication 31 are controlled so as to be received at the same time at receiving terminal 1, and are received at different timings by receiving terminal 2. Therefore, since receiving terminal 2 does not know receiving terminal reference time 10 indicating the start of communication, it cannot reconstruct confidential information through mutual interference between information symbols.

This reference time information is calculated by receiving terminal 1 based on receptions 10T and 11T, and comprises target times whereby the transmitting station 501 estimates the first propagation path 504 and second propagation path 505 signal propagation times (propagation path delays 10 and 20) by means of communications 10, 11, 20, and 21, and performs transmission control so that a signal arrives at that reference time. This reference time information differs according to the channel parameter (that is to say, the propagation path). Consequently, it is not possible for receiving terminal 2 to ascertain the correct propagation path delay time 10 in advance or by measurement.

Therefore, since a receiving side 1 communication signal received by receiving terminal 1 arrives at a scheduled time set by receiving terminal 1 for both communication 30 and communication 31, communication terminal 1 can reconstruct receiving side 1 communication signals. on the other hand, receiving terminal 2, which receives signals from the transmitting station 501 via a transmission path that differs from both the first propagation path 504 and second propagation path 505, cannot perform synchronous reception of a receiving side 2 communication signal.

Moreover, receiving terminal 2 cannot ascertain the correct propagation path delay time 11 and propagation path delay time 21 in advance or by measurement. Thus, receiving terminal 2 cannot ascertain the time at which communication 30 and communication 31 will arrive. Consequently, it is not possible to set the correct receiving terminal reference time 11 for a receiving side 2 communication signal, and it is virtually impossible to receive communication 30 and communication 31 correctly.

Also, with the communication method according to this embodiment, confidential information could not be reconstructed even if the correct propagation path delay time 11 could be measured and the correct receiving terminal reference time 11 could be set for communication 30 by receiving terminal 2 (a third party). This is because, since the location of receiving terminal 2 is different from that of receiving terminal 1, the time at which communication 31 arrives at receiving terminal 2 is different from receiving terminal reference time 11. As a result, the communication 30 signal and communication 31 signal cause interference at the time of reception, and the signals deteriorate.

In this embodiment, it is presupposed that communication 30 and communication 31 arrive at the receiving station at the same time, and information symbols and dummy symbols are arranged using a format such that information symbols do not mutually overlap when the start of the communication 30 signal and the start of the communication 31 signal coincide. As a result, inter-symbol interference will occur and signals will deteriorate in a receiving station in which communication 30 and communication 31 cannot be received at the same time.

To be specific, with the receiving side 2 communication signals shown in FIG.14, communication 30 and communication 31 information symbols 2 and A, 5 and D, 8 and G, and so on, cause mutual interference. As a result, the signals deteriorate due to mutual interference between symbols, and information symbols cannot be reconstructed.

Thus, according to the above configuration, the transmission timings of the two transmitting sections 502 and 503 of the transmitting station 501 are controlled so that two signals are received by the receiving station 102 at the same time, and moreover the two transmit signals are transmitted arranged in accordance with a format whereby deterioration due to mutual interference occurs in the case of information symbols (confidential information) of the two signals when not received at the same time, thereby making it impossible for confidential information to be reconstructed by a receiving station located other than at the location of the receiving station 102 that is the intended transmission destination of the confidential information. As a result, it is possible to implement a radio communication system with a significantly improved degree of security.

(Embodiment 7)

In this embodiment, a configuration whereby synchronization sequence data is mixed in with confidential information is provided in addition to the configuration in Embodiment 6. This synchronization sequence data may be a unique word as described in Embodiment 1, for example. By this means it is possible to improve the reception quality at a receiving station that is the intended transmission destination of confidential information, as well as achieving the effects of Embodiment 6.

This embodiment will be described below using FIG.11, FIG.12, and FIG.14. Data transmitted in communication 30 and communication 31 is confidential data that is not to be disclosed to a party other than the receiving station 102 that is the intended transmission destination of confidential information, and is configured with information symbols, dummy symbols, and synchronization sequence symbols arranged beforehand in accordance with a predetermined format.

The information in communication 30 is delayed by the time resulting from adding the first propagation path 504 signal propagation time to the transmitting station 501 processing delay, and is received by the receiving station 102 (reception 30T) at receiving terminal reference time 10. Similarly, the information in communication 31 is delayed by the time resulting from adding the second propagation path 505 signal propagation time to the transmitting station 501 processing delay, and is received by the receiving station 102 at receiving terminal reference time 10. The receiving station 102 starts reception 30T based on receiving terminal reference time 10.

At this time, since the communication 30 and communication 31 receiving terminal reference times 10 are set to the same time, communication 30 and communication 31 are received by the receiving station 102 simultaneously. Therefore, both are combined in space before being received by the receiving station 102.

On the other hand, communication 30 and communication 31 data are configured with information symbols, dummy symbols, and a synchronization sequence arranged in accordance with a preset format. In order to simplify the explanation, it is here assumed that the dummy symbols are all power-0 symbols. Based on receiving station 102 receiving terminal reference time 10, of all the symbols in communication 30, only symbols at a time overlapped by a communication 31 dummy symbol do not receive communication 31 interference. Conversely, of all the symbols in communication 31, only symbols at a time overlapped by a communication 30 dummy symbol do not receive communication 30 interference.

By having it envisaged beforehand by the transmitting station 501 that two signals via communication 30 and communication 31 will be received simultaneously, and having a format set whereby the two do not cause mutual interference, signals free of deterioration due to interference between the two signals can be received by the receiving station 102 receiving communication 30 and communication 31 at the same time.

When these signals are received, the receiving station 102 first synchronizes time, frequency, phase, and so forth, for communication 30 symbols using the communication 30 synchronization sequence, and demodulates communication 30 information symbols. Similarly, the receiving station 102 synchronizes time, frequency, phase, and so forth, for communication 31 symbols using the communication 31 synchronization sequence, and demodulates communication 31 information symbols.

Next, respective two demodulated information symbols are combined and decrypted. Subsequently, the transmitting station 501 and receiving station 102 perform communication from communication 4 onward, performing encryption and decryption based on information (for example, an encryption key) transmitted in communication 30 and communication 31.

Communication 30 and communication 31 according to this embodiment will now be described in detail using FIG.14. In FIG.14, it is assumed that symbols 0, 3, 6, 7, and 9, and symbols B, C, E, F, and I, are dummy symbols, symbols 1 and 8 and symbols A and G are synchronization sequences, and symbols 2, 4, 5, D, H, and J are information symbols.

Here, receiving terminal reference time 10 set by the receiving station (receiving terminal 1) 102 in reception 10T and reception 11T and the time at which transmission 30B and transmission 31B adjusted by the channel parameter adaptation section 101d of the transmitting station 501 are received by the receiving station 102 via propagation paths 504 and 505 are virtually synchronized. As a result, communication 30 and communication 31 are received at the same time, and therefore receiving side 1 communication signals mutually interfere.

In FIG.14, symbols 1, 2, 4, 5, and 8, and symbols B, C, E, F, and I, respectively, are combined, and symbols A, D, G, H, and J, and symbols 0, 3, 6, 7, and 9, respectively, are combined, in accordance with the aforementioned format, but symbols 0, 3, 6, 7, and 9, and symbols B, C, E, F, and I, are dummy symbols, and their power is 0, so the combined receiving side 1 communication signal comprises A, 1, 2, D, 4, 5, G, H, 8, J.

As none of these information symbols or synchronization sequences is subjected to mutual interference due to communication, communication information including confidential information can be reconstructed by sequentially demodulating the received receiving side 1 communication signal.

Thus, according to the above configuration, it is possible to implement a radio communication system that offers a significant improvement in reception quality in the receiving station 102, in addition to the effects of Embodiment 6, by providing a feature of mixing synchronization sequence data in with transmit data including confidential information in addition to the configuration in Embodiment 6.

(Embodiment 8)

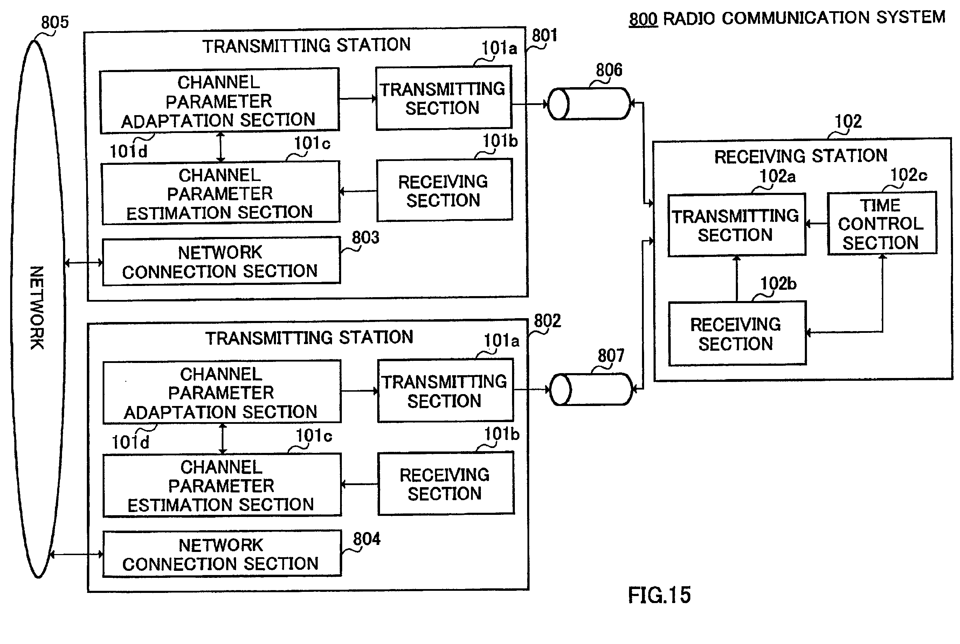

In FIG.15, reference code 800 denotes a radio communication system according to Embodiment 8 of the present invention as a whole. Radio communication system 800 has first and second transmitting stations 801 and 802, and transmitting stations 801 and 802 are connected to a network 805 via network connection sections 803 and 804, respectively. Also, the first transmitting station 801 communicates with a receiving station 102 via a first propagation path 806, and the second transmitting station 802 communicates with the receiving station 102 via a second propagation path 807.

The configurations of the first and second transmitting stations 801 and 802 are almost the same as the configuration of transmitting station 101 described in Embodiment 1, except that they have network connection sections 803 and 804, respectively. Also, the configuration of the receiving station 102 is almost the same as that of receiving station 102 described in Embodiment 1, except for the fact that it communicates with a second transmitting station 802 in addition to a first transmitting station 801.

Furthermore, the first and second transmitting stations 801 and 802 transmit transmit data including confidential information at a timing for arrival at the receiving terminal reference time set by the receiving station, and also transmit data at a timing such that the respective transmit data arrive at the same receiving terminal reference time, as described in Embodiment 6.

That is to say, to compare the radio communication system described in Embodiment 1 with radio communication system 800 according to this embodiment, the difference lies in the fact that, whereas in the radio communication system according to Embodiment 6 information is transmitted to a receiving station 102 from the same transmitting station via different propagation paths, in radio communication system 800 information is transmitted to a receiving station 102 from different transmitting stations 801 and 802 via different propagation paths 806 and 807.

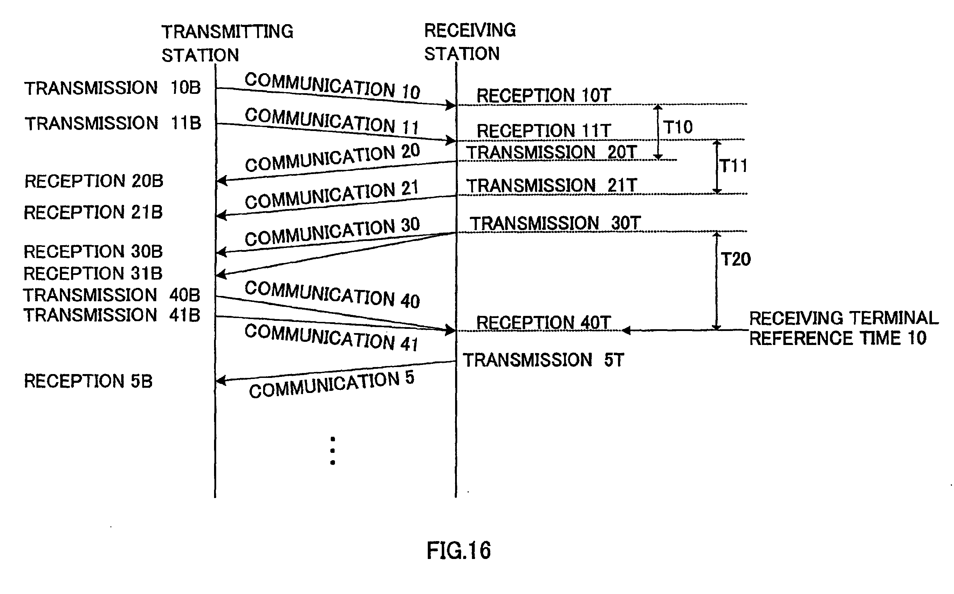

In radio communication system 800, communication is performed via the first propagation path 806 and second propagation path 807 by means of the communication procedure shown in FIG.16.

The first transmitting station 801 transmits (transmission 10B) a control signal including the network reference time (communication 10) from the transmitting section 101a while controlling output so as to pass via the first propagation path 806. When the receiving station 102 receives communication 10 (reception 10T), it sets a predetermined delay time (T10) controlled by the time control section 102c. When the delay time (T10) has elapsed after reception 10T, the receiving station 102 transmits (transmission 20T) a response signal (communication 20) to the first transmitting station 801.

Transmitting station 801 and the receiving station 102 both hold above-mentioned delay time T10 beforehand as shared information.

In the first transmitting station 801, at the same time as communication 20 is received (reception 20B), the channel parameter estimation section 101c estimates the state of the first propagation path 806 from the control signal transmitted in transmission 10B (communication 10) and the response signal received in reception 20B. To be specific, the channel parameter estimation section 101c provided in transmitting station 801 calculates the signal propagation time in the first propagation path 806 from the transmission 10B and reception 20B times, the delay time (T10) at the receiving station 102, the processing delay arising within each apparatus, and so forth.

Similarly, the second transmitting station 802 transmits (transmission 11B) a signal (communication 11) from the transmitting section 101a while controlling output so as to pass via the second propagation path 807. When the receiving station 102 receives communication 11 (reception 11T), it sets a predetermined delay time (T11) controlled by the time control section 102c. When the delay time (T11) has elapsed after reception 11T, the receiving station 102 transmits (transmission 21T) a response signal (communication 21) to the second transmitting station 802.

Transmitting station 802 and the receiving station 102 both hold above-mentioned delay time T11 beforehand as shared information.

In the second transmitting station 802, at the same time as communication 21 is received (reception 21B), the channel parameter estimation section 101c estimates the state of the second propagation path 807 from the control signal (communication 11) transmitted in transmission 11B and the response signal (communication 21) received in reception 21B. To be specific, the channel parameter estimation section 101c provided in transmitting station 802 calculates the signal propagation time in the second propagation path 807 from the transmission 11B and reception 21B times, the delay time (T11) at the receiving station 102, the processing delay arising within each apparatus, and so forth.

On completion of estimation of the signal propagation time between the first transmitting station 801 and the receiving station 102, and the signal propagation time between the second transmitting station 802 and the receiving station 102, the receiving station 102 then sets receiving terminal reference time 10 after a fixed time (T20) using the time control section 102c, and transmits (transmission 30T) a reference time notification signal (communication 30) to the first transmitting station 801 and second transmitting station 802.

The first transmitting station 801 obtains confidential information to be transmitted to the receiving station 102 from the network 805 via network connection section 803. Similarly, second transmitting station 802 obtains confidential information to be transmitted to the receiving station 102 from the network 805 via network connection section 804.

When communication 30 is received by the first transmitting station 801 (reception 30B), the channel parameter adaptation section 101d of the first transmitting station 801 controls the transmission timing of communication 40 so as to arrive at receiving station 102 receiving terminal reference time 10, based on the signal propagation time of the first propagation path 806, processing delay, and the time of reception 30B. Then the first transmitting station 801 transmits (transmission 40B) a signal (communication 40) so as to pass from the transmitting section 101a via the first propagation path 806.

Similarly, when communication 30 is received by the second transmitting station 802 (reception 31B), the channel parameter adaptation section 101d of the second transmitting station 802 controls the transmission timing of communication 40 so as to arrive at receiving station 102 receiving terminal reference time 10, based on the signal propagation time of the second propagation path 807, processing delay, and the time of reception 31B. Then the second transmitting station 802 transmits (transmission 41B) a signal (communication 41) so as to pass from the transmitting section 101a via the second propagation path 807.

The information in communication 40 is delayed by the time resulting from adding the first propagation path 806 signal propagation time to the first transmitting station 801 processing delay, and is received by the receiving station 102 (reception 40T) at receiving terminal reference time 10. Similarly, the information in communication 41 is delayed by the time resulting from adding the second propagation path 807 signal propagation time to the second transmitting station 802 processing delay, and is received by the receiving station 102 at receiving terminal reference time 10. The receiving station 102 starts reception 40T based on receiving terminal reference time 10.

At this time, since communication 40 and communication 41 receiving terminal reference times 10 are set to the same time, communication 40 and communication 41 are received by the receiving station 102 simultaneously. That is to say, the result of combining the two is received by the receiving station 102.

Here, as with transmit data in Embodiment 7, in data transmitted in communication 40 and communication 41, information symbols, dummy symbols, and synchronization sequence symbols are arranged so that interference is not caused between information symbols when received at the same time. Consequently, as in embodiment 7, the contents of communication 40 and communication 41 can be demodulated and decrypted only by the receiving station 102. If the first half of communication 40 is made dummy symbols and the second half of communication 41 is similarly set as dummy symbols (or set to communication 40 and communication 41 arrival times at fixed intervals), it is possible for the receiving station 102 to receive information continuously from first and second transmitting stations 801 and 802.

Thus, according to the above configuration, it is possible to implement a radio communication system 800 that enables confidential information to be transmitted with a significantly higher degree of security by dividing confidential information among a plurality of information blocks, distributing the divided confidential information to a plurality of transmitting stations using high-security communication channels such as dedicated channels, and transmitting the distributed communication information to a receiving station.

(Embodiment 9)

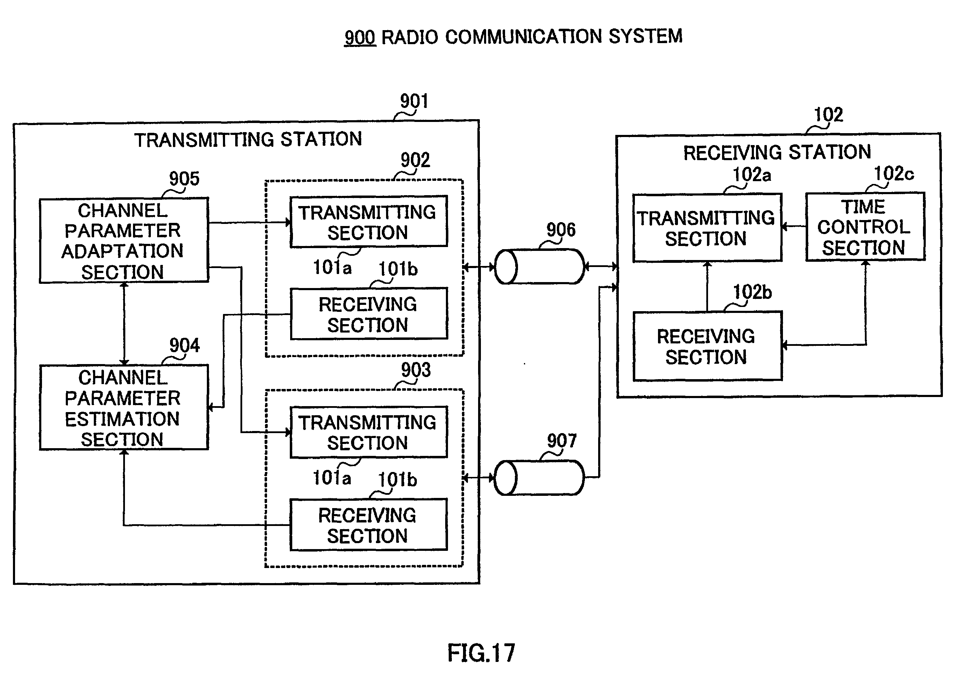

In FIG.17, in which parts corresponding to those in FIG.1 are assigned the same codes, reference code 900 denotes a radio communication system according to Embodiment 9 of the present invention as a whole. Radio communication system 900 has first and second transmitting/receiving sections 902 and 903, each composed of a transmitting section 101a and receiving section 101b as shown above in FIG.1. The first transmitting/receiving section 902 communicates with a receiving station 102 via a first propagation path 906, and the second transmitting/receiving section 903 communicates with the receiving station 102 via a second propagation path 907.

The communication operations of transmitting station 901 and receiving station 102 here are similar to those of radio communication system 500 according to Embodiment 5 described using FIG.11, except for the fact that, as described later herein, transmitting station 901 estimates reception power received via the first and second propagation paths 906 and 907, and also sends a signal to the receiving station 102 with transmission power controlled in accordance with the estimated power.

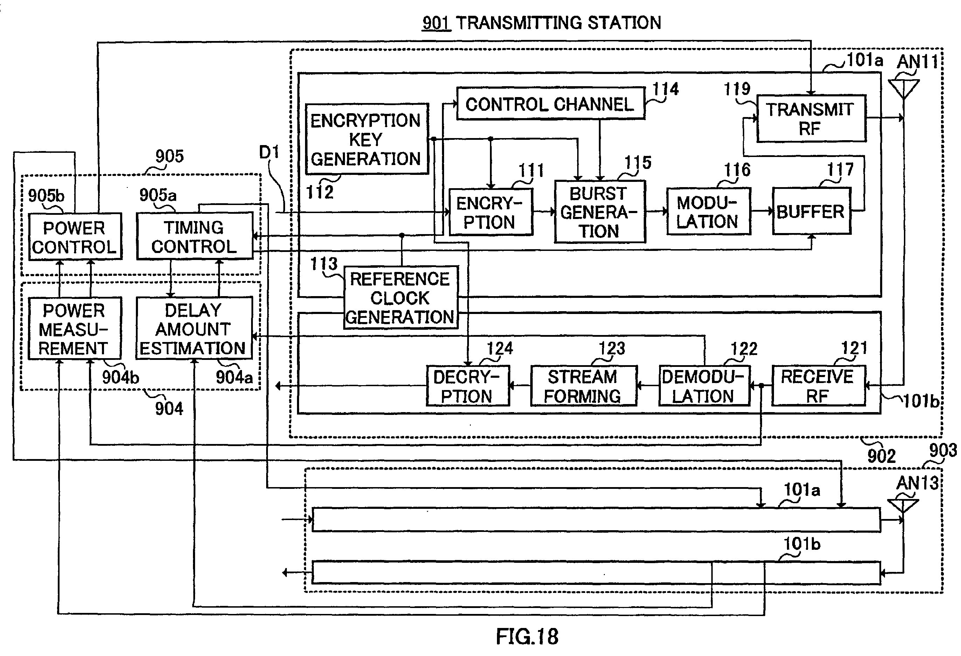

The detailed configuration of the transmitting station 901 according to this embodiment is shown in FIG.18. Parts in FIG.18 corresponding to those in FIG.2 are assigned the same codes as in FIG.2. In this embodiment, a channel parameter estimation section 904 is composed of a delay amount estimation section 904a and power measurement section 904b. Also, a channel parameter adaptation section 905 is composed of a timing control section 905a and power control section 905b.

A known signal such as a unique word, for example, extracted by a demodulation section 122 of the first transmitting/receiving section 902 is input to the delay amount estimation section 904a, and a known signal such as a unique word extracted by a demodulation section (not shown) of the second transmitting/receiving section 903 is input to the delay amount estimation section 904a. The delay amount estimation section 904a, as also stated in Embodiment 1, estimates the signal propagation time from the network time and a known signal. In this embodiment, the signal propagation times of the first and second propagation paths 906 and 907 are estimated.

Then, taking the signal propagation time of the first propagation path 906 obtained by the delay amount estimation section 904a into consideration, the timing control section 905a adjusts the output timing of a buffer 117 so that a signal from the first transmitting/receiving section 902 arrives at the receiving station 102 via the first propagation path 906 at the predetermined network time.

Similarly, taking the signal propagation time of the second propagation path 907 obtained by the delay amount estimation section 904a into consideration, the timing control section 905a adjusts the output timing of a buffer (not shown) so that a signal from the second transmitting/receiving section 903 arrives at the receiving station 102 via the second propagation path 907 at the predetermined network time.

The power measurement section 904b of the channel parameter estimation section 904 has as input the output from a radio reception section (receive RF) 121 of the first transmitting/receiving section 902, and measures the power of a received signal received by the first transmitting/receiving section 902. Similarly, the power measurement section 904b has as input the output from a radio reception section (not shown) of the second transmitting/receiving section 903, and measures the power of a received signal received by the second transmitting/receiving section 903.

The power control section 905b of the channel parameter adaptation section 905 compares a preset power value with the reception power measurement result obtained by the power measurement section 904b, and based on that comparison result, controls the transmission power of the first and second transmitting/receiving sections 902 and 903. To be specific, if the reception power received by the first or second transmitting/receiving section 902 or 903 is less than a predetermined value, control is performed to increase the transmission power by controlling the radio transmission section (transmit RF) 119 of the respective transmitting section 101a. Conversely, if the reception power received by the first or second transmitting/receiving section 902 or 903 is greater than the predetermined value, control is performed to decrease the transmission power by controlling the radio transmission section (transmit RF) 119 of the respective transmitting section 101a.

By this means, in radio communication system 900, it is possible for only the receiving station 102 that is the intended transmission destination of confidential information to be able to receive a received signal of the optimal reception level from the first transmitting/receiving section 902 and second transmitting/receiving section 903 of the transmitting station 901.

As a result, in the receiving station 102, it is possible for the reception level to be adapted to propagation paths 906 and 907 and for the combined result of two signals to arrive at the same time which is optimal and synchronized with receive operations. By this means, the receiving station 102 can demodulate confidential information with certainty.

On the other hand, since a third party receives information from the transmitting station 901 at a different location from the receiving station 102, it is difficult for a third party to obtain the appropriate reception level and appropriate reception timing for demodulating that signal, and thus also to perform received signal demodulation.

The operation of radio communication system 900 will now be described, again using FIG.14 and FIG.16.

First, the transmitting station 901 transmits (transmission 10B) a control signal including the network reference time (communication 10) from the first transmitting section 902 while controlling output so as to pass via the first propagation path 906. When the receiving station 102 receives communication 10 (reception 10T), it sets a predetermined delay time (T10) controlled by the time control section 102c. When the delay time (T10) has elapsed after reception 10T, the receiving station 102 transmits (transmission 20T) a response signal (communication 20) to the transmitting station 901 at predetermined power. The transmitting station 901 and receiving station 102 both hold above-mentioned delay time T10 beforehand as shared information.

In the transmitting station 901, at the same time as communication 20 is received (reception 20B), the channel parameter estimation section 904 estimates the state of the first propagation path 906 from the propagation path estimation signal (communication 10) transmitted in transmission 10B and the response signal (communication 20) received in reception 20B. To be specific, the signal propagation time and power attenuation in the first propagation path 906 are estimated. Estimation of power attenuation in propagation path 906 is performed based on the difference between the measured power of reception 20B and the output power of a predetermined response signal (communication 20).

Similarly, the transmitting station 901 transmits (transmission 11B) a signal including the network reference time (communication 11) from the second transmitting/receiving section 903 while controlling output so as to pass via the second propagation path 907. When the receiving station 102 receives communication 11 (reception 11T), it sets a predetermined delay time (T11) controlled by the time control section 102c. When the delay time (T11) has elapsed after reception 11T, the receiving station 102 transmits (transmission 21T) a response signal (communication 21) to the transmitting station 901 at predetermined power. The transmitting station 901 and receiving station 102 both hold above-mentioned delay time T11 beforehand as shared information.

In the transmitting station 901, at the same time as communication 21 is received (reception 21B), the channel parameter estimation section 904 estimates the state of the second propagation path 907 from the propagation path estimation signal (communication 11) transmitted in transmission 11B and the response signal (communication 21) received in reception 21B. To be specific, the signal propagation time and power attenuation in the second propagation path 907 are estimated. Estimation of power attenuation in propagation path 907 is performed based on the difference between the measured power of reception 21B and the output power of a predetermined response signal (communication 21).

In this way the transmitting station 901 estimates the signal propagation time and signal power attenuation in the first and second propagation paths 906 and 907 based on communication 30 and communication 31.

The receiving station 102 then sets receiving terminal reference time 10 after a fixed time (T20) using the time control section 102c, and transmits (transmission 30T) a reference time notification signal (communication 30) to the transmitting station 901.

Next, the transmitting station 901 transmits (transmission 40B) a signal including confidential information from the first transmitting/receiving section 902 in communication 40, and also transmits (transmission 41B) a signal including confidential information from the second transmitting/receiving section 903 in communication 41. At this time the transmitting station 901 controls the transmission timing so that the two signals arrive simultaneously at receiving terminal reference time 10 set by the receiving station 102, and also controls the transmission timing so that the receiving station 102 receives the two signals at optimal power.

The receiving station 102 starts reception 40T and reception 41T based on receiving terminal reference time 10. At this time, since communication 40 and communication 41 receiving terminal reference times 10 are set to the same time, communication 40 and communication 41 are received by the receiving station 102 simultaneously. That is to say, the result of combining the two is received by the receiving station 102.

In this embodiment, identical information is transmitted in communication 40 and communication 41. By this means it is possible to obtain a path diversity effect. Also, in this embodiment, the transmitting station 901 transmits communication 40 and communication 41 at extremely low power. In this way it is possible for an adequate signal level for demodulation to be obtained by receiving station 102, which can receive the same symbols combined in the two signals, while another receiving station at a different location from receiving station 102 cannot obtain the signal level necessary for demodulation from communication 40 and communication 41.

Thus, according to the above configuration, a plurality of propagation paths 906 and 907 are formed between a transmitting station 901 and receiving station 102 by providing a plurality of transmitting/receiving sections 902 and 903 in the transmitting station 901, the power attenuation when communication is performed on each of propagation paths 906 and 907 is estimated, and information is transmitted from the aforementioned plurality of transmitting/receiving sections 902 and 903 at the lowest transmission power level than allows demodulation when the receiving station 102 combines and receives received signals arriving via the plurality of propagation paths 906 and 907, thereby making it difficult for another receiving station at a different location from receiving station 102 to demodulate the relevant confidential information. As a result, it is possible to implement a radio communication system 900 with a significantly higher degree of security.

(Embodiment 10)

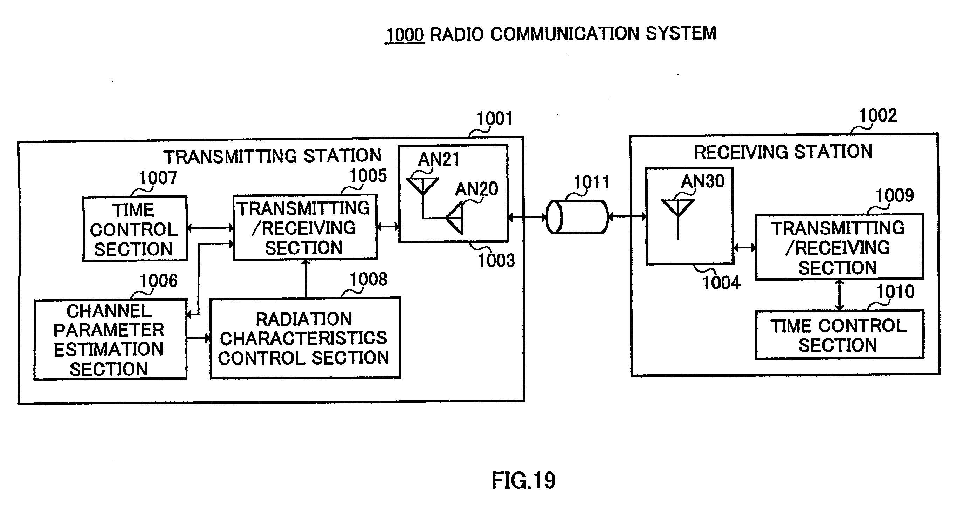

In FIG.19, reference code 1000 denotes a radio communication system according to Embodiment 10 of the present invention as a whole. The transmitting station 1001 of radio communication system 1000 has an antenna section 1003 that is composed of two linear polarization antennas AN20 and AN21 with orthogonal planes of polarization. Also, the antenna section 1004 of a receiving station 1002 has a single linear polarization antenna AN30.

By this means, in radio communication system 1000, a propagation path environment is established in which the plane of polarization of antenna AN30 of the receiving station 1002 is shared by the transmitting station 1001 and receiving station 1002 only, and confidential information is transmitted from the transmitting station 1001 to the receiving station 1002 taking this propagation path environment into consideration.

That is to say, based on a transmission wave sent from the receiving station 1002, a channel parameter estimation section 1006 of the transmitting station 1001 first estimates the plane of polarization of antenna AN30 of the receiving station 1002. Then, based on the estimation result obtained by the channel parameter estimation section 1006, a radiation characteristics control section 1008 of the transmitting station 1001 controls the antenna section 1003 so as to form radiation characteristics that enable reception only by the receiving station 1002.

The transmitting station 1001 and receiving station 1002 of radio communication system 1000 are also provided with time control sections 1007 and 1010, respectively, and by means of time control sections 1007 and 1010, as in Embodiment 1, the transmitting station 1001 transmits confidential information to the receiving station 1002 at transmission timing that takes into consideration the signal propagation time in a propagation path 1011 that can be shared only by the transmitting station 1001 and receiving station 1002.

Therefore, time control section 1007 in FIG.19 corresponds to the channel parameter estimation section 101c and channel parameter adaptation section 101d in FIG.1. The receiving station 1002 has the same kind of configuration as in FIG.3, and therefore a detailed description thereof will be omitted here. To give a brief explanation, antenna AN30 corresponds to antenna AN12, transmitting/receiving section 1009 corresponds to transmitting section 102a and receiving section 102b, and time control section 1010 corresponds to time control section 102c.

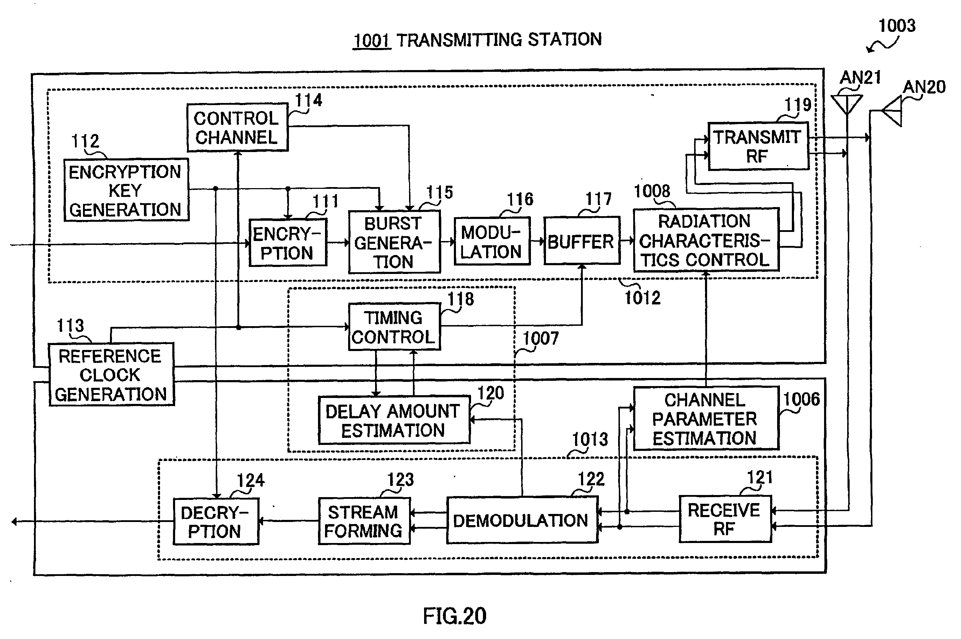

The actual configuration of the transmitting station 1001 is shown in FIG.20. In FIG.20, in which parts corresponding to those in FIG.2 are assigned the same codes, the transmitting station 1001 broadly comprises a transmitting section 1012, receiving section 1013, channel parameter estimation section 1006, and time control section 1007. Here, transmitting/receiving section 1005 in FIG.19 corresponds to the transmitting section 1012 and receiving section 1013.

The transmitting station 1001 receives a radio wave from the receiving station 1002 at the two linear polarization antennas AN20 and AN21 installed so that their planes of polarization are mutually orthogonal. The respective antenna outputs are then input to a radio reception section (receive RF) 121. The radio reception section 121 executes radio processing such as down-conversion and analog-digital conversion processing on the respective antenna outputs, and sends the processed signals to a demodulation section 122 and the channel parameter estimation section 1006.

Based on the two antenna outputs that have undergone radio processing, the channel parameter estimation section 1006 estimates the plane of polarization of the antenna of the time information 2001, and sends the estimation result to the radiation characteristics control section 1008. Based on the estimation result, the radiation characteristics control section 1008 controls the radio transmission section (transmit RF) 119 so that receiving station 1002 reception power is maximized.

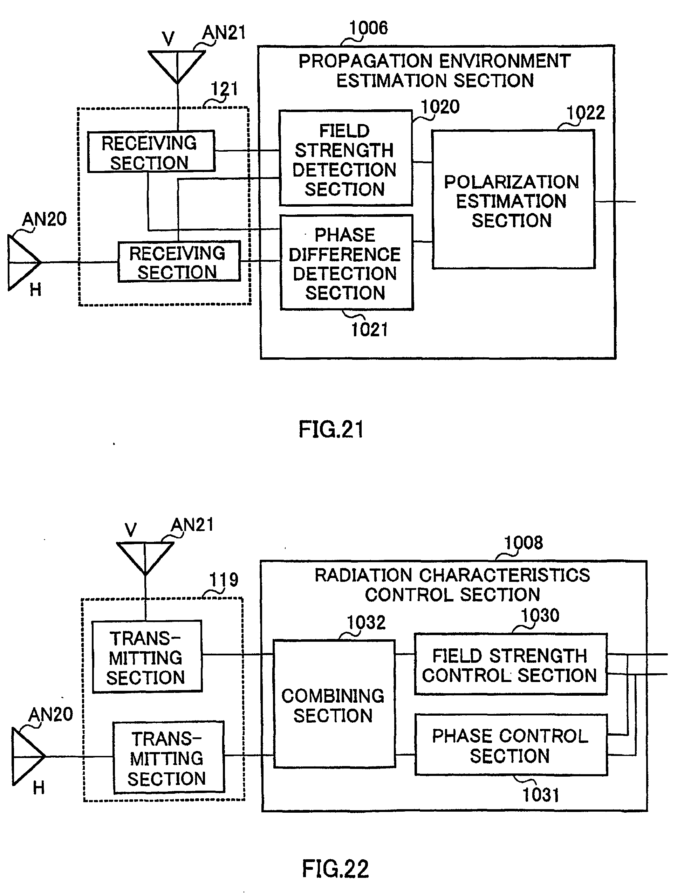

The channel parameter estimation section 1006 is configured as shown in FIG.21, and the radiation characteristics control section 1008 is configured as shown in FIG.22.

The channel parameter estimation section 1006 has a field strength detection section 1020 and a phase difference detection section 1021. Based on the two antenna outputs, the field strength detection section 1020 detects the field strength of each antenna output, and the phase difference detection section 1021 detects the phase difference of the respective antenna outputs. A polarization estimation section 1022 estimates the polarization state of the received signal from the field strength and phase difference of the two antenna outputs.

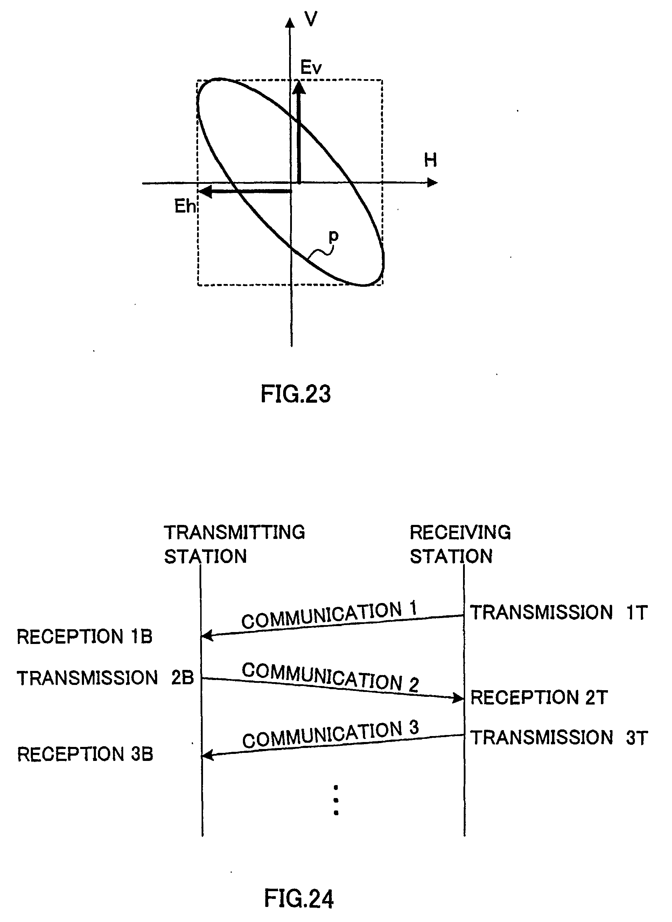

Generally, when two antennas with orthogonal planes of polarization (V, H) are used, as shown in FIG.23 the polarization (p in the figure) of an electromagnetic wave can be calculated from the field strengths (Ev, Eh in the figure) projected on the planes of polarization (V, H in the figure) given by the radiation characteristics of the antennas. For example, if polarization p is assumed to be elliptical polarization, the angle between its long axis and the antennas (V, H) and its oblateness can be calculated using the field strengths (Ev, Eh) and phase difference .. In addition, the angle can also be approximated from Ev, Eh.

In the channel parameter estimation section 1006 of this embodiment, this is made use of in order to estimate the polarization state comprising the angle between the long axis of polarization p and the antennas, oblateness, and so forth.

As shown in FIG.22, in the radiation characteristics control section 1008, the transmit signal and the estimate signal obtained by the polarization estimation section 1022 are input to a field strength control section 1030 and phase control section 1031. A combining section 1032 generates signal vectors (V vector, H vector) corresponding to mutually orthogonal antennas AN20 and AN21 from the field strengths and phases. Then a transmit signal corresponding to the V-direction vector amplitude and phase is output to V-direction antenna AN21 via the radio transmission section 119, and a transmit signal corresponding to the H-direction vector amplitude and phase is output to H-direction antenna AN20 via the radio transmission section 119.

In this way, transmit signal plane of polarization control can be performed, based on the polarization state estimated by the channel parameter estimation section 1006, so that the reception power at the antenna section 1004 of the receiving station 1002 is maximized-that is to say, so that the long axis of polarization p and the plane of polarization axis given by the antenna radiation characteristics coincide.

Next, the operation of radio communication system 1000 will be described with reference to FIG.24. Here, the transmit/receive timing between the transmitting station 1001 and receiving station 1002 is the same as in Embodiment 1, and therefore the description will cover only adjustment of the plane of polarization of radio waves.

First, the receiving station 1002 transmits (transmission 1T) a polarization estimation signal (communication 1). Here, the antenna section 1004 of the receiving station 1002 comprises antenna AN30, which has linear polarization characteristics as radiation characteristics, and therefore an electromagnetic wave transmitted by this antenna AN30 has a specific plane of polarization.

The plane of polarization of this transmit signal rotates due to reflection and diffraction in the propagation path 1011, and is received by the antenna section 1003 of the transmitting station 1001 with delay added. As antennas AN20 and AN21, which have a polarization characteristic of linear polarization, are arranged in the antenna section 1003 of the transmitting station 1001 with their planes of polarization mutually orthogonal, stable reception can be performed irrespective of the plane of polarization of the received signal.

When communication 1 is received (reception 1B) by the antenna section 1003 in the transmitting station 1001, the channel parameter estimation section 1006 estimates the polarization state of the received signal by performing computational processing of each received signal received by the two antennas AN20 and AN21.

Next, based on the polarization state estimated by the channel parameter estimation section 1006, the radiation characteristics control section 1008 transmits (transmission 2B) communication 2 with the transmit signal plane of polarization controlled so that the reception power at the antenna section 1004 of the receiving station 1002 is maximized-that is to say, so that the long axis of polarization p and the plane of polarization axis given by antenna AN30 radiation characteristics coincide. This plane of polarization control is implemented by performing the reverse of the computation in the estimation method when receiving.

When a transmit signal is output with the plane of polarization controlled in this way, a communication 2 signal from the transmitting station 1001 can be received by the antenna section 1004 of the receiving station 1002 with the optimal plane of polarization. The receiving station 1002 receives communication 2 (reception 2T) in the antenna section 1004. The transmitting station 1001 transmits transmit data including confidential information by means of communication 2. Subsequently, communication from communication 3 onward is performed between the transmitting station 1001 and receiving station 1002 in the same way.

When the transmitting station 1001 and receiving station 1002 perform communication in a good environment of a prospect, the plane of polarization is kept stable, and consequently communication according to this embodiment can be performed stably. On the other hand, in an environment in which there are obstructions in the communication path between the two, and communication cannot be performed by means of direct waves alone, the plane of polarization is disrupted under the influence of ambient conditions. However, as long as the interval between the time at which the propagation path environment is estimated (in this embodiment, with regard to the plane of polarization) and the time at which communication is actually performed using that propagation path environment is sufficiently short, the propagation path environment can be regarded as quasi-static, and there is no problem.

This applies, for example, to a case where the transmitting station 1001 and receiving station 1002 are both immobile, and there are slow-moving obstructions such as people in the communication path between the two. This also applies, for example, to a case such as where the transmitting station 1001 is located on a road and the receiving station 1002 is installed in a vehicle, since the plane of polarization is disrupted due to variations in conditions even though there are no obstructions in the communication path between the transmitting station 1001 and receiving station 1002.

In these cases, even if the transmitting station 1001 or receiving station 1002 is moving, or both are moving, the interval between the time at which the propagation path environment is estimated and the time at which communication is actually performed using that propagation path environment can be considered to be sufficiently short, and therefore the propagation path environment can be regarded as quasi-static.

In contrast, a case can be considered where a third party that is not an authorized communicating party intercepts communication 1 and communication 2, and attempts to extract information. In this case, the unauthorized receiving terminal must adjust the plane of polarization appropriately in order to receive the information in communication 2.

The transmitting station 1001 and receiving station 1002 perform plane of polarization axis alignment by means of communication 1, but as communication 1 is an output signal from the receiving station 1002, an unauthorized receiving terminal cannot estimate the plane of polarization from the transmitting station 1001. That is to say, the polarization state of communication 2 at the tip of the antenna of the receiving station 1002 cannot be known in advance, and therefore it is impossible to intercept this communication.

As a result, even if an unauthorized receiving station were able to intercept communication 1, as communication 2 is sent controlled in adaptation to the plane of polarization in communication 1, the unauthorized receiving station would not be able to know in advance the plane of polarization of an electromagnetic wave output from the transmitting station 1001.

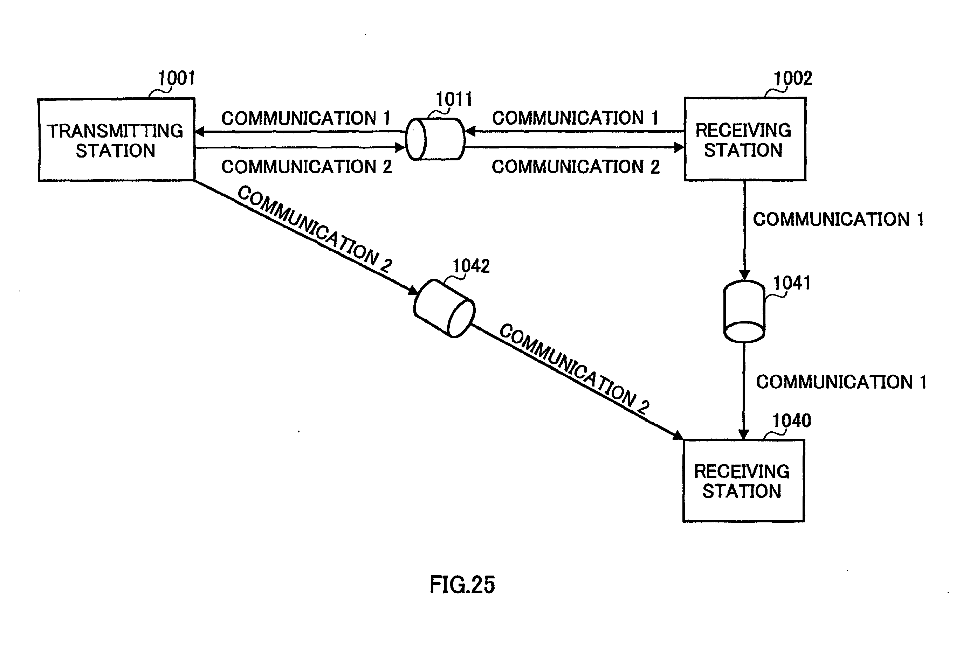

This will be explained in detail using FIG.25. Communication 1 and communication 2 in FIG.25 are identical to those in FIG.24. Also, in FIG.25, receiving station 1040 is an unauthorized receiving station that is not the intended transmission destination of confidential information.

Here, the transmitting station 1001 and receiving station 1002 perform communication 1 and communication 2 via propagation path 1011. A case will be considered in which unauthorized receiving station 1040 receives these communications 1 and 2. Communication 1 and communication 2 are both performed between the transmitting station 1001 and receiving station 1002 via propagation path 1011. On the other hand, receiving station 1040 receives communication 1 via propagation path 1041 and receives communication 2 via propagation path 1042.

Thus, the propagation path 1041 when receiving station 1040 receives communication 1 output from receiving station 1002, and the propagation path 1042 when receiving station 1040 receives communication 2 output from the transmitting station 1001, are different from propagation path 1011. As a result, even if receiving station 1040 could estimate propagation path 1041 formed between itself and receiving station 1002 by intercepting communication 1, since this propagation path 1041 is different from propagation path 1042 formed between receiving station 1040 and the transmitting station 1001, receiving station 1040 would not be able to receive communication 2 correctly. It is therefore impossible for unauthorized receiving station 1040 to acquire stably the information in either or both of communication 1 and communication 2.

Generally, in a radio communication system, which uses electromagnetic waves, it is necessary to coordinate polarization characteristics of the antenna, etc., between the transmitting side and the receiving side, and failure to do this correctly will lead to a deterioration of characteristics such as communication quality. For example, if polarization characteristics among antenna radiation characteristics are uniform with respect to the horizontal direction, it is sufficient to perform plane of polarization adjustment so that the antenna radiation characteristic plane of polarization is vertical with respect to the ground plane in both the transmitting station and the receiving station.. In the case of vertical polarization in which the plane of polarization is vertical to the ground surface, etc., it is easy to set radiation characteristics uniformly with respect to the horizontal direction.

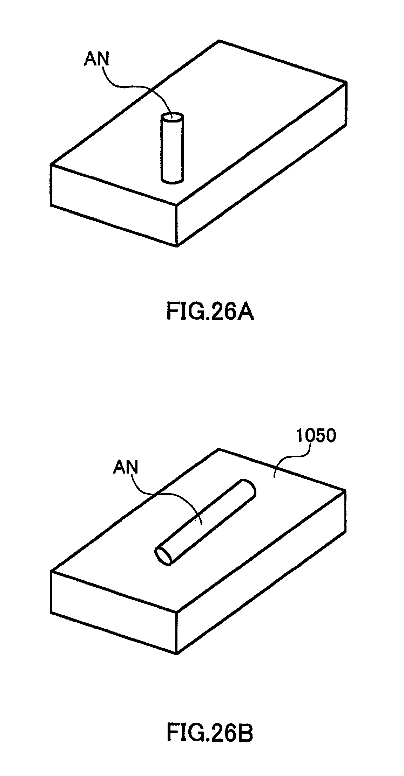

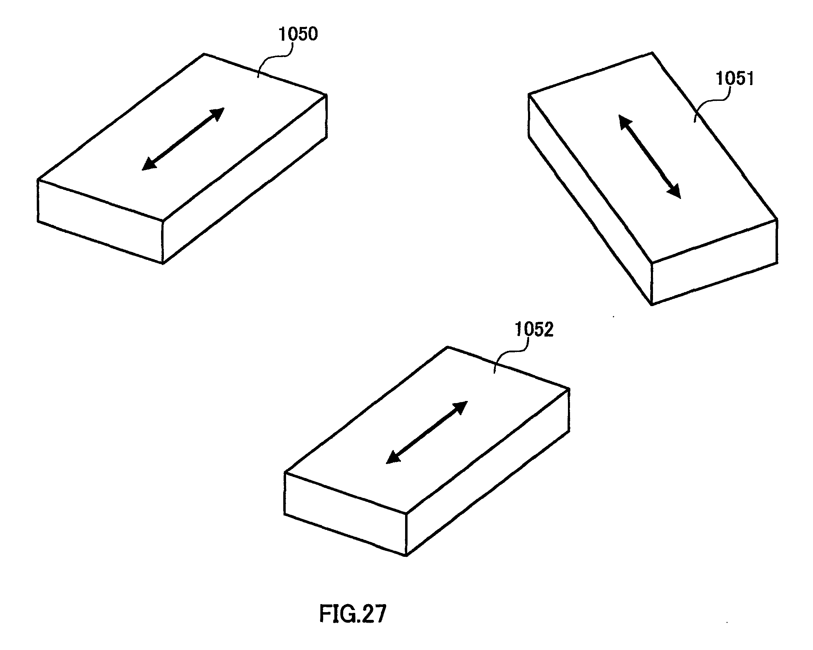

On the other hand, when antenna radiation characteristics are not uniform with respect to the horizontal direction, it is necessary to perform plane of polarization adjustment between the transmitting station and receiving station. This will be explained in concrete terms using FIG.26 and FIG.27. With a radio communication system in which an electromagnetic wave is propagated in a direction parallel to the ground surface, as shown in FIG.26(A), by placing the transmitting apparatus or receiving apparatus antenna AN vertical to the ground plane, the radiation characteristics of antenna AN can be set to vertical polarization. Here, it is assumed that the ground plane is kept virtually horizontal, and it is also assumed that radiation characteristics with respect to the horizontal direction are uniform.

Next, an actual example of a case where antenna AN is installed in a horizontal direction, as shown in FIG. 26(B), will be considered. Assuming that the antenna in the figure is a dipole antenna, radiation characteristics are not uniform with respect to the horizontal direction, and the plane of polarization also differs according to its position relative to the body of the apparatus 1050. With this kind of configuration, a system in which a radio wave is transmitted in the height direction will be considered as an example.

It is assumed that 1050 in FIG.27 is a transmitting apparatus, and 1051 and 1052 are receiving apparatuses, and that, as regards the antenna radiation characteristics of each of apparatuses 1050, 1051, and 1052, the plane of polarization is as indicated by the direction of the arrows in the figure. Here, substituting transmitting apparatus 1050 for transmitting station 1001 and receiving apparatus 1052 for receiving station 1002, the state in which transmitting apparatus 1050 estimates the plane of polarization of receiving apparatus 1052 and controls the plane of polarization of transmitting apparatus 1050 in accordance with the estimation result conforms to radio communication system 1000 according to this embodiment.

When the ground plane of receiving apparatus 1052 is set so as to remain horizontal with respect to the plane of polarization of transmitting apparatus 1050, also, as shown in FIG.27, there is a degree of freedom as viewed from the plane of polarization, and therefore the communication environment differs greatly according to circumstances.

Therefore, when the planes of polarization are laid out on the same axis, as with transmitting apparatus 1050 and receiving apparatus 1052, receiving apparatus 1052 can receive with good sensitivity, but in an arrangement where the plane of polarization is orthogonal to transmitting apparatus 1050, as with receiving apparatus 1051, reception power is insufficient due to the antenna radiation characteristics, and so reception quality becomes poor.

In the description here, it has been assumed that the plane of polarization does not rotate in the radio propagation path between the transmitter and receiver, but it is known that the axis of the plane of polarization changes due to reflection and so forth. In such as case, also, the same can be said regarding the plane of polarization at the tip of the antenna of each apparatus. In such conditions, also, according to the configuration of this embodiment, transmitting apparatus 1101 controls a transmission wave so as to have the same plane of polarization as receiving station 1102, and therefore stable communication can be performed without adjusting the planes of polarization of the transmitting side and receiving side.

Furthermore, a case will be described where a third party attempts to intercept a communication between transmitting apparatus 1050 and receiving apparatus 1052 using receiving apparatus 1051. As stated above, it is necessary for the plane of polarization of receiving apparatus 1051 to be set in coordination with the plane of polarization transmitted from transmitting apparatus 1050 so that reception conditions are good. However, since the plane of polarization of a transmission wave is controlled by adaptation to the plane of polarization receiving apparatus 1052, it cannot be known from receiving apparatus 1051.

Also, as stated earlier, since the plane of polarization differs according to the installation direction of receiving apparatus 1052, it is impossible to know that at all times. Moreover, even if the plane of polarization state were estimated from the installation conditions of receiving apparatus 1052, it would still be impossible to know the actually correct state since the propagation path between transmitting apparatus 1050 and receiving apparatus 1052 is different from the propagation path between transmitting apparatus 1050 and receiving apparatus 1051. It is therefore impossible for a third party to intercept a communication between transmitting apparatus 1050 and receiving apparatus 1052.

Furthermore, since the plane of polarization of an electromagnetic wave varies when phenomena such as reflection and diffraction occur in the propagation path, as stated above, it is difficult for a third party to estimate the plane of polarization. Indoor locations, including offices and similar places with many obstructions such as partitions, are well known as environments highly susceptible to reflection and diffraction.

In the case of this embodiment, it is possible for the transmitting station 1001, as well as transmitting with real information including confidential information superimposed on a linear polarization electromagnetic wave that has an optimal plane of polarization with respect to antenna AN30 of the receiving station 1002, to also transmit with dummy information superimposed on a linear polarization electromagnetic wave that has a plane of polarization parallel to the axis orthogonal thereto.

By this means, in radio communication system 1000, the real information is received normally by the receiving station 1002 due to the characteristics of antenna AN30, while the dummy information is not received. In this way, it is possible to selectively receive only real information without using a complex configuration.

That is to say, it is not necessary for the receiving station 1002 to know beforehand which signal is confidential information and which signal is dummy information. Also, the transmitting station 1001 can implement confidentiality freely, without having to perform data arrangement that takes account of data separation on the receiving side. Moreover, as a third party cannot, in principle, separate confidential information and dummy information, it is possible to achieve a high degree of security.

In radio communication system 1000, communication from communication 3 onward is performed while coordinating planes of polarization in the same way as for communication 1 and communication 2 described above. From communication 3 onward, while transmission may be performed with planes of polarization coordinated for all transmit data, transmission may also be performed with only ordinary encryption processing executed after only especially important confidential information such as an encryption key has been transmitted with planes of polarization coordinated.

Thus, according to the above configuration, it is possible to implement a radio communication system 1000 that offers a significantly higher degree of security, in addition to the effects of Embodiment 1, by having the plane of polarization of antenna AN30 of a receiving station 1002 estimated by a channel parameter estimation section 1006 in a transmitting station 1001 based on a transmission wave sent from the receiving station 1002, and having the transmitting station 1001 form a transmission wave, based on the result of that estimation, that has radiation characteristics that enable reception only by the receiving station 1002, and transmit that transmission wave with confidential information superimposed thereupon to the receiving station 1002.

In this embodiment, vertical polarization and horizontal polarization have been given as examples, but if a plane of polarization at a fixed angle to the ground plane is considered, reception of confidential information by a third party becomes significantly more difficult. When, for example, a dipole antenna with linear polarization characteristics is mounted at an angle to the ground surface, antenna radiation characteristics differ with respect to the horizontal direction, as described above, and the radiation characteristics vary in accordance with the apparent angle of the antenna. That is to say, the radiation characteristics vary according to the relative positions of transmitting apparatus 1050 and receiving apparatus 1052 shown in FIG.27. As a result, it is significantly more difficult for a third party to estimate the plane of polarization.

Also, if the amplitude and phase of a radiation signal toward an orthogonal plane of polarization are controlled using an antenna such as a helical antenna that has orthogonal plane of polarization characteristics, it is also possible to control the plane of polarization electrically. By using a configuration of this kind, estimating the plane of polarization visually is made more difficult, enabling a system with a significantly higher degree of security to be implemented.

Moreover, in the above explanation, a case has been described in which the transmitting station 1001 outputs from the start a linear polarization electromagnetic wave that has an optimal plane of polarization with respect to antenna AN30 of the receiving station 1002, but it is also possible for an electromagnetic wave with circular polarization to be emitted until the characteristics of antenna AN30 of the receiving station 1002 are estimated, such as when power is turned on. By so doing, it becomes possible for the receiving station 1002 to receive stably a signal for establishing a radio link such as an RACH (Random Access Channel) irrespective of the radiation characteristics of antenna AN30.

Furthermore, in this embodiment, when a modulation method is used whereby symbols are independent time-wise, it is possible to set whether or not information confidentiality is to be implemented by means of the above-described plane of polarization control on a symbol-by-symbol basis. This enables more stable communication to be performed by implementing confidentiality on some of the symbols.

(Embodiment 11)

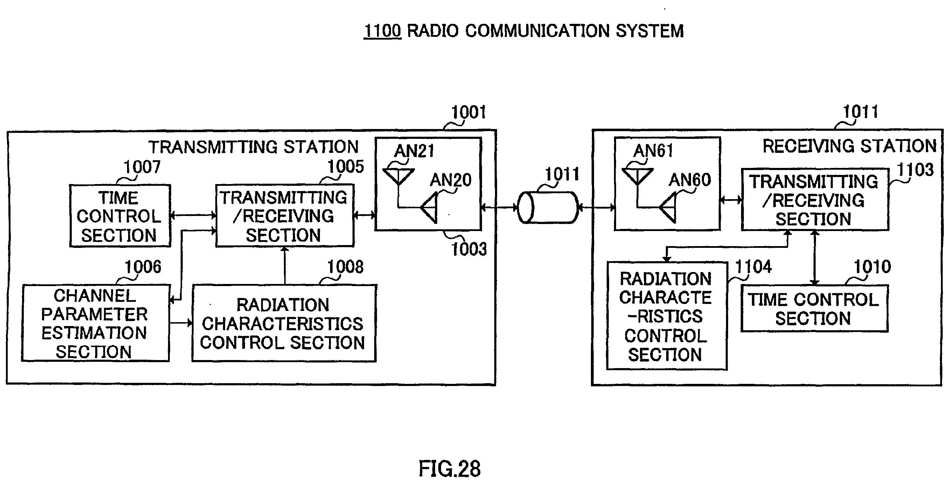

In FIG.28, in which parts corresponding to those in FIG.19 are assigned the same codes, reference code 1100 denotes a radio communication system according to Embodiment 11 of the present invention as a whole. The configuration of radio communication system 1100 is similar to that of the radio communication system in FIG. 19, except that the antenna section 1102 of the receiving apparatus 1101 is composed of two linear polarization antennas AN60 and AN61 with orthogonal planes of polarization, and the receiving apparatus 1101 is provided with a radiation characteristics control section 1104 that controls the radiation characteristics of the antenna section 1102 of the receiving apparatus 1101.

Next, the operation of radio communication system 1100 will be described with reference to FIG.24. Here, the transmit/receive timing between the transmitting station 1001 and receiving station 1101 is the same as in Embodiment 1, and therefore the description will cover only adjustment of the plane of polarization of radio waves.

First, the receiving station 1101 transmits (transmission 1T) a polarization estimation signal (communication 1). At this time, the radiation characteristics control section 1104 controls the radiation characteristics of the antenna section 1102 via the transmitting/receiving section 1103 so that a plane of polarization constituting a reference is output from the antenna section 1102. The plane of polarization of this transmit signal rotates due to reflection, diffraction, and so forth, in the propagation path 1011, and is received by the antenna section 1003 of the transmitting station 1001 with delay added.

In the transmitting station 1001, the plane of polarization that the receiving station 1101 makes a reference is estimated by the channel parameter estimation section 1006 from the communication 1 received signal (reception 1B), and the estimation result is retained. Next, the radiation characteristics control section 1008 performs control so that the plane of polarization is rotated through a preset angle with respect to the reference plane of polarization estimated by the channel parameter estimation section 1006, and transmits communication 2 (transmission 2B).

In the receiving station 1101, the radiation characteristics of the antenna section 1102 are controlled by the radiation characteristics control section 1104 so as to cause rotation by the above-mentioned angle through which radiation characteristics control section 1008 rotated the plane of polarization from the reference plane of polarization, and communication 2 (reception 2T) is received.

That is to say, the radiation characteristics control section 1008 of the transmitting station 1001 and the radiation characteristics control section 1104 of the receiving station 1101 store in advance plane of polarization rotation information shared only between those stations. Therefore, as the plane of polarization of communication 2 from the transmitting station 1001 and the plane of polarization of the radiation characteristics controlled by the receiving station 1101 are rotated through the same angle from the reference plane of polarization, the receiving station 1101 can receive communication 2 (reception 2T) with optimal radiation characteristics. Subsequently, communication is performed between the transmitting station 1001 and receiving station 1101 in the same way.

Thus, according to the above configuration, it is possible to implement a radio communication system 1100 that offers a significantly higher degree of security, in addition to the effects obtained by means of Embodiment 10, by configuring the receiving station 1101 so that radiation characteristics can also be varied adaptively on the receiving station 1101 side, and also sharing plane of polarization rotation information between the transmitting station 1001 and receiving station 1101, and performing communication with the respective planes of polarization coordinated.

That is to say, even if a third party were able to ascertain the plane of polarization in communication 1, since the plane of polarization is changed in communication 2, it would be difficult to ascertain this changed plane of polarization. Also, security can be further improved by rotating the plane of polarization for each communication.

Moreover, it is possible to add mutually independent information to two orthogonal planes of polarization, and separate the respective information based on the plane of polarization given by communication 1. By so doing, the transmission volume can be doubled, and it is possible to implement communication with an extremely high degree of confidentiality in which these cannot be estimated by a third party.

Generally, the transmitting station 1001 notifies the receiving station 1101 of a frequency and time that can be used for communication, and the receiving station 1101 performs communication using these resources. Generally, also, the receiving station 1101 monitors the carrier status using these resources, and starts communication at a time when the carrier is free. Two major elements-frequency and time-have been used as these conditions, but in this embodiment, the capacity of a communication itself can be increased up to twofold by adding polarization to these elements.

In this case, however, while frequency and time have spatial identity, polarization conditions vary according to the propagation path, and consequently the environment differs according to the location. Therefore, the difference of location of the transmitting station 1001 and receiving station 1101 is a problem as regards polarization interference conditions. However, multiplexing by means of polarization as described above is possible when the transmitting station 1001 and receiving station 1101 are located in environments where the polarization conditions in the propagation path 1011 between the transmitting station 1001 and receiving station 1101 are virtually identical-for example, in an environment where there are no obstructions between the transmitting station 1001 and receiving station 1101, or an environment close to this.

Thus, in a case where two communications-a communication between the transmitting station 1001 and receiving station 1101, and a communication between the transmitting station 1001 and another receiving station-are polarization-multiplexed at the same time and same frequency, if the two communications are synchronized and the plane of polarization is switched every certain interval, it is difficult for a third party to separate the two communications, and security can thus be heightened.

In an environment where an unobstructed path cannot be achieved, on the other hand, similar communications as under conditions of an unobstructed path become possible if, in order to prevent mutual communication interference, communication conditions arising from other receiving stations in the vicinity are monitored by receiving station 1101, the transmitting station 1001 is notified of monitoring information, and transmission is performed when conditions are established under which mutual interference does not occur.

Also, to consider a multipath environment, since the rotation direction and angle of the plane of polarization differ for each path, the planes of polarization from each path differ. With this embodiment, receiving station 1101 can receive a specific path selectively in accordance with plane of polarization conditions. As a result, the propagation path 1011 between the transmitting station 1001 and receiving station 1101 is restricted, and an effect of alleviating the influence of multipath propagation can be achieved.

(Embodiment 12)

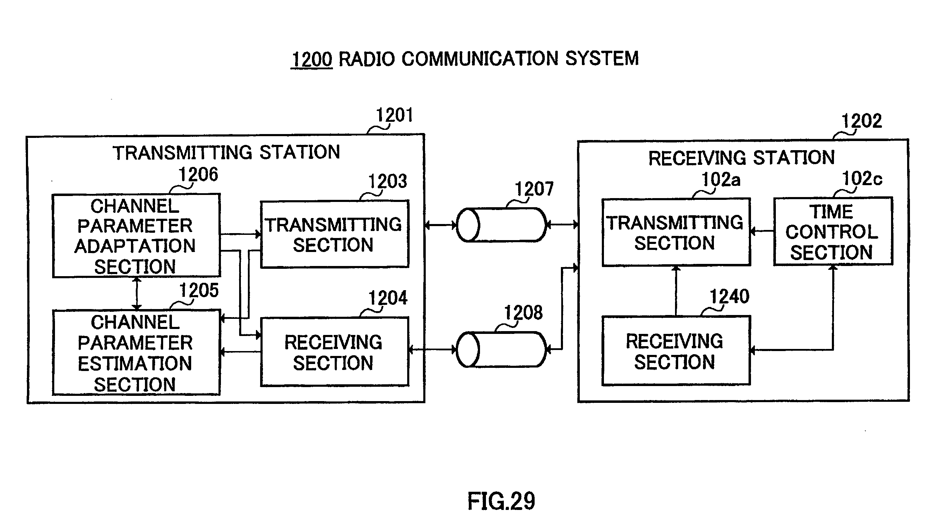

As shown in FIG.29, in a radio communication system 1200 according to this embodiment, a transmitting station 1201 that transmits confidential information has two transmitting/receiving sections 1203 and 1204 placed at different locations. From transmitting/receiving sections 1203 and 1204, transmissions of optimal transmission power and directionality are performed that enable confidential information to be obtained only by the receiving station 1202 via respective different propagation paths 1207 and 1208.

Received signals received by transmitting/receiving sections 1203 and 1204 are sent to a channel parameter estimation section 1205. Based on the two received signals, the channel parameter estimation section 1205 estimates the environments of the propagation paths 1207 and 1208. To be specific, the channel parameter estimation section 1205 estimates the signal propagation time and signal direction of arrival of propagation paths 1207 and 1208.

Based on the estimation results of the channel parameter estimation section 1205, a channel parameter adaptation section 1206 controls transmit operations when transmitting/receiving sections 1203 and 1204 transmit confidential information to the receiving station 1202. To be specific, the channel parameter adaptation section 1206 first controls the transmission timing of each of transmitting/receiving sections 1203 and 1204 so that a signal transmitted from each of transmitting/receiving sections 1203 and 1204 is received by the receiving station 1202 at a preset reception time, and secondly performs directional transmission so that directionality at the time of transmission by each of transmitting/receiving sections 1203 and 1204 is toward the receiving station 1202.

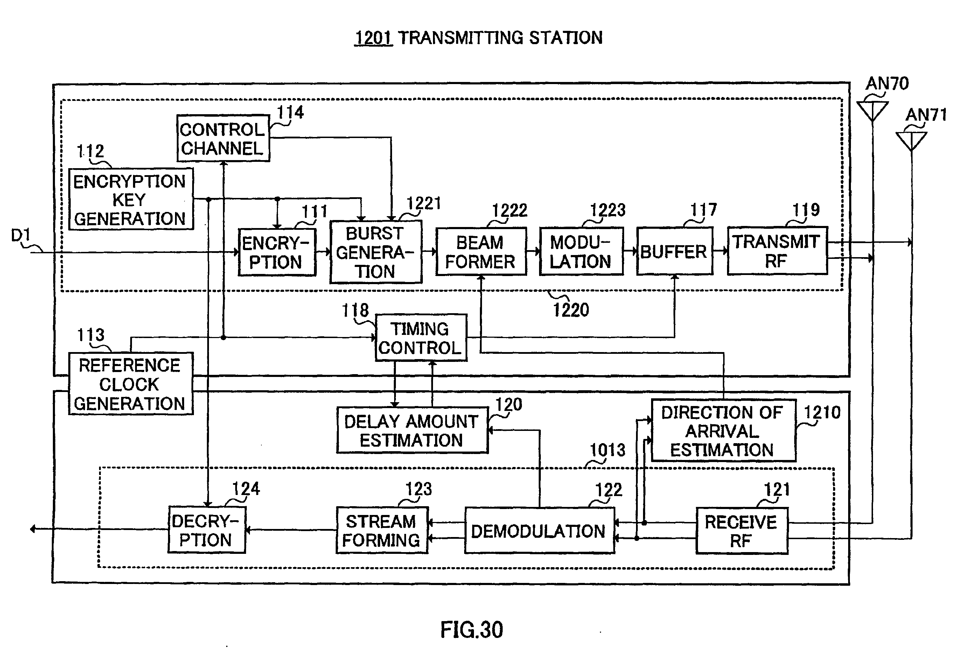

FIG.30, in which parts corresponding to those in FIG.2 are assigned the same codes, shows the detailed configuration of the transmitting station 1201. As can be seen from FIG.30, the two transmitting/receiving sections 1203 and 1204 shown in FIG.29 are simply provided with two array antennas AN70 and AN71 at different locations, and the signal processing parts are the same. The direction of arrival estimation section 1210 and delay amount estimation section 120 in FIG.30 correspond to the channel parameter estimation section 1205 in FIG.29, and the beam former 1222 and timing control section 118 in FIG.30 correspond to the channel parameter adaptation section 1206 in FIG.29.

The timing of confidential information transmission by the transmitting station 1201 here has been described in detail in above embodiments, and therefore in this embodiment the explanation will focus on directional transmission of confidential information.

When the outputs of the two array antennas are input via a radio reception section (receive RF) 121, the direction of arrival estimation section 1210 estimates the direction of arrival of a signal transmitted by the receiving station 1202 based on the amplitude and phase of these received signals. To be specific, the direction of arrival is estimated by sequentially changing weight coefficients by which the received signals of the two array antennas AN70 and AN71 respectively are to be multiplied, and finding the weight coefficient whereby the weighted addition value is maximized. The results of estimation by the direction of arrival estimation section 1210 (that is, the weight coefficients for array antennas AN70 and AN71) are then sent to the beam former 1222 of the transmitting section 1220.

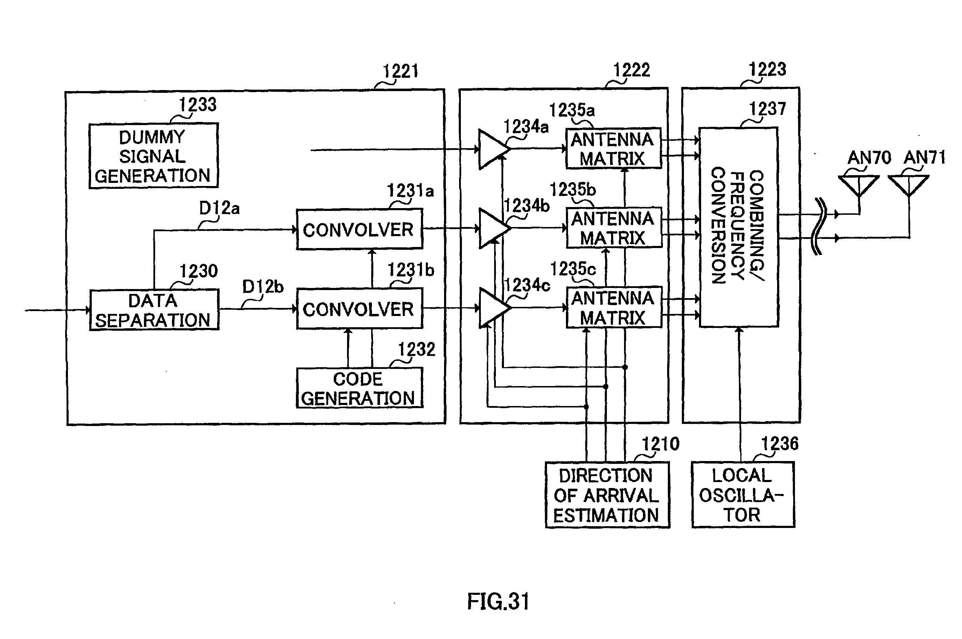

A burst generation section 1221, the beam former 1222, and a modulation section 1223 of the transmitting section 1220 are here configured as shown in FIG.31. The transmitting section 1220 of this embodiment is configured so as to perform both code spreading and multiplexing of transmit data.

In the burst generation section 1221, an encryption key and encrypted user data are input to a data separation circuit 1230 that separates input data into a plurality of data (two in the case of this embodiment) and sends these to subsequent convolver circuits 1231a and 1231b. In actuality, the data separation circuit 1230 separates input data into a plurality of data D12a and D12b, and sends these to subsequent convolver circuits 1231a and 1231b. Here, spreading codes are shared between transmission and reception, but it is not necessary for information as to which codes separated data D12a and D12b correspond to to be shared beforehand. However, determination is performed so that the signal with high reception power is data D12a and the other is data D12b. Here, confidential data such as the encryption key and encrypted data is data D12a and other information data is data D12b.

Convolver circuits 1231a and 1231b perform code spreading of input data by performing convolutional computation using the input data and a code generated by a code generation circuit 1232. The code-spread data are input to gain control (GC) circuits 1234b and 1234c in the beam former 1222. Also, a dummy signal generated by a dummy signal generation circuit 1233 is input to gain control circuit 1234a.

Gain control circuits 1234a through 1234c control the gain of the respective data based on an estimate from the direction of arrival estimation section 1210. The output of each of gain control circuits 1234a through 1234c is input to a corresponding antenna matrix circuit 1235a through 1235c. An estimate from the direction of arrival estimation section 1210 is also input to antenna matrix circuits 1235a through 1235c.

Each of antenna matrix circuits 1235a through 1235c multiplies the output of the corresponding gain control circuit 1234a through 1234c by a vector value based on the estimate (optimal weight coefficient) from the direction of arrival estimation section 1210 and the reception state (reception power, delay distribution, etc.) in the receiving station 1202. To be specific, signal power control is performed to maximize or minimize reception power in the receiving station 1202 based on the estimated propagation path environment.

In antenna matrix circuit 1235b to which confidential information is input, data D12a is set so that the reception level is maximized in the receiving station 1202 based on the estimate obtained by the direction of arrival estimation section 1210. Similarly, in antenna matrix circuit 1235c to which data D12b is input, data D12b is set so that its reception level is made sufficiently high and lower than data D12a in the receiving station 1202. By this means, separated confidential information is received at different reception levels in the receiving station 1202.

On the other hand, in antenna matrix circuit 1235a to which dummy information is input, control is performed so as to form a null (a place where power is 0 due to wave interference) in the receiving station 1202 based on the estimate obtained by the direction of arrival estimation section 1210. As a result, the dummy signal is not received by receiving station 1202, and the dummy signal is received by another receiving station at a different location from receiving station 1202.

Transmit data vectored by antenna matrix circuits 1235a through 1235c are subjected to vector addition by a combining/frequency conversion circuit 1237 in the modulation section 1223, and the element values obtained by this means are frequency-converted with a frequency obtained by a local oscillator 1236. The frequency-converted element signals are output from the corresponding element antennas of array antennas AN70 and AN71.

As described above, the transmitting station 1201 controls the receiving station 1202 reception state by allocating data D12 to the antenna radiation characteristics main lobe, data D12b to a side lobe, and dummy information to null. By this means, receiving station 1202, which is the intended transmission destination for confidential information, can receive data D12a and D12b, comprising confidential information, satisfactorily in a state with respective power differences, but in other receiving stations the power differences of data D12a and D12b are reversed, dummy information interferes, and so forth, preventing confidential information from being received.

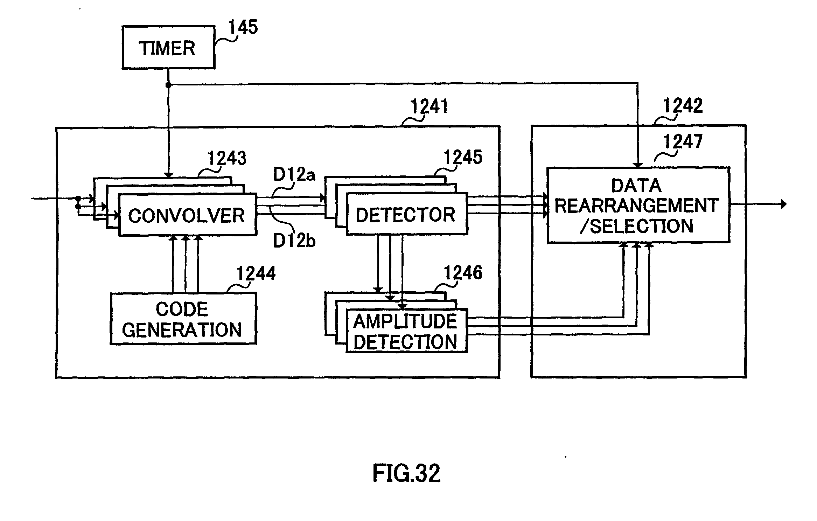

FIG.32 shows the configuration of a demodulation section 1241 and stream forming section 1242 in the receiving section 1240 of receiving station 1202. The remaining configuration of receiving station 1202 is the same as the configuration of receiving station 102 shown in FIG.3. In the demodulation section 1241, the output of the receive RF section 140 (FIG.3) is input to convolver circuits 1243. The same codes as the spreading codes used by the transmitting station 1201 are input to the convolver circuits 1243 from a code generation circuit 1244.

The convolver circuits 1243 perform convolutional computation at a timing specified by a timer 145. By this means, data D12a and D12b corresponding to the spreading codes are output from the convolver circuits 1243 together with the respective reception level information. For example, confidential information is output from a particular convolver circuit 1243, significant information other than confidential information is output from another convolver circuit 1243, and dummy information is output from yet another convolver circuit 1243. Data selection/separation is performed using these output data and reception levels. In other receiving stations, it is difficult to ascertain the optimal timing for performing convolutional computation by means of a spreading code, and even if this were known, it would not be possible to select/separate these data since they are received at different reception levels.

Data output from each convolver circuit 1243 is sent to a data rearrangement/selection circuit 1247 of the stream forming section 1242, and also to a corresponding amplitude detection circuit 1246, via a corresponding detector 1245. Each amplitude detection circuit 1246 detects the amplitude of the corresponding data. Here, since the transmitting station 1201 controls transmission to receiving station 1202 so that data D12a is at the highest reception level, data D12b is at a lower reception level, and dummy information is at the lowest reception level, reception level information for each of the data is output from the amplitude detection circuit 1246.

Detection results obtained by the amplitude detection circuits 1246 are sent to the data rearrangement/selection circuit 1247. Based on the detection results obtained by the amplitude detection circuits 1246, the data rearrangement/selection circuit 1247 rearranges the data output from the detectors 1245 according to the relative magnitudes of the amplitude values. Then a data stream is output with the data with the greatest amplitude value as D12a, and the data with the second greatest amplitude value as D12b.

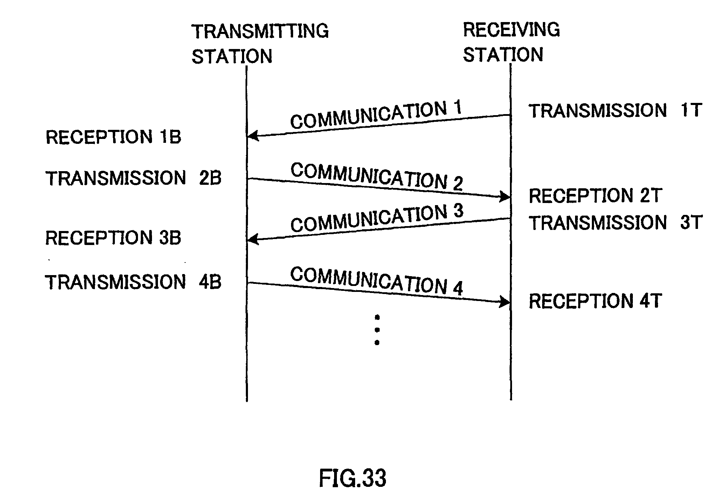

Next, the operation of radio communication system 1200 according to this embodiment will be described using FIG.33.

First, the receiving station 1202 outputs a predetermined propagation path estimation signal to the transmitting station 1201 by means of communication 1 (transmission 1T). The transmitting station 1201 receives the signal passing via the first propagation path 1207 in the first transmitting/receiving section 1203 (array antenna AN70 in FIG.30), and receives the signal passing via the second propagation path 1208 in the second transmitting/receiving section 1204 (array antenna AN71 in FIG.30).

At this time, the transmitting station 1201 estimates the propagation path environment of the first propagation path 1207 and second propagation path 1208 by receiving the propagation path estimate signal as a known signal in the first transmitting/receiving section 1203 and second transmitting/receiving section 1204.

Making use, conversely, of the propagation path environment estimated from the signal output from the receiving station 1202, the transmitting station 1201 controls the signals to be output from the first transmitting/receiving section 1203 and second transmitting/receiving section 1204. To be specific, the first transmitting/receiving section 1203 and second transmitting/receiving section 1204 are controlled, and a signal (communication 2) is output (transmission 2B), so that the signal power of confidential information in the receiving side of the receiving station 1202 increases in accordance with the propagation path environment (received wave direction of arrival) estimated by the channel parameter adaptation section 1206 of the transmitting station 1201. Thereafter, similar operations are performed for communication 3 onward.

In communication 2, confidential information is transmitted from the transmitting station 1201 to the receiving station 1202. The information in communication 2 is received by the receiving station 1202 (reception 2T) as the result of combining the information arriving from the first transmitting/receiving section 1203 of the transmitting station 1201 via the first propagation path 1207 and the information arriving from the second transmitting/receiving section 1204 via the second propagation path 1208. Since communication 2 is controlled so that the signal power is increased on the receiving side of the receiving station 1202, as described above, the receiving station 1202 can perform reception 2T stably, and can demodulate the confidential information.

As the signal (communication 2) output in this way is output from two places-the first transmitting/receiving section 1203 and the second transmitting/receiving section 1204-the signal resulting from space combining differs according to where it is received. According to the above explanation, transmission control is performed so that reception power increases on the receiving side of the receiving station 1202, but since performing control so that communication quality is raised is important, when communication quality falls due to a delayed wave or the like, it is also effective to lower the reception power and reduce the multipath component.

On the other hand, when communication 2 containing confidential information is intercepted, and information extracted, by a third party that is not the transmission destination, even if it is assumed that interception of information was able to be performed by means of communication 1, since transmission is controlled so that an optimal received signal is space-combined on the receiving side of the receiving station 1202 with communication 2, even if this signal is received by a third party it will be difficult to obtain information since its reception level is different.

Also, in the case of this embodiment, in communication 2 transmission is performed with dummy information code-division-multiplexed in addition to confidential information at the same time. Then, the respective information data are reconstructed by the receiving station 1202 using the same spreading code as the transmitting station 1201. If the code sequence is here changed on a data-by-data basis, as in this embodiment, since the frequency elements of the code sequences differ, the influence received in the propagation path environment will also differ.

Thus, by distributing confidential information among multiplexed channels as in this embodiment, the influence due to propagation conditions of the channels will differ, making it significantly more difficult for a third party to obtain confidential information.

The description thus far has focused on control of first transmitting/receiving section 1203 and second transmitting/receiving section 1204 transmit signals so that an optimal received signal arrives at the receiving side of the receiving station 1202. Below, the description will focus on superimposing two channels (confidential information and dummy information) at the same time and the same frequency, performing spatial combining using two or more transmit signals, and controlling reception power in the receiving side of the receiving station 1202 independently for each channel.

The transmitting station 1201 estimates the first propagation path 1207 and second propagation path 1208 based on a propagation path estimation signal, which is a known signal, received from the receiving station 1202 (reception 1B). Then the transmitting station 1201 performs two-channel code division multiplexing of two kinds of information, and transmits them to the receiving station 1202.

The respective channels allocated here are selected so as to have equal spreading gain and to have an orthogonal relationship. At this time, confidential information is transmitted as first information so as to give optimal reception conditions in the receiving side of the receiving station 1202 based on estimated propagation path conditions. Here, control is performed so that reception power is maximized as an optimal reception condition. Dummy information is transmitted as second information, with control performed so that reception power in the receiving side of the receiving station 1202 is lower than for the first information based on estimated propagation path conditions.

Communication 2 emitted in this way undergoes spatial combining and is received by the receiving station 1202. As the result of spatial combining, the first information, as a high-power signal, and second information, as a low-power signal, are received in the receiving side in a code-division-multiplexed state. The respective signals can be extracted by despreading the received signal sequence using a despreading code, but as the same spreading gain has been set for each, the power of one will be high and the power of the other low in accordance with the reception power of each type of information. The receiving station 1202 can easily select confidential information by selecting the information in the channel with high reception power as confidential information, and treating the information in the other channel as dummy information.

Meanwhile, even if a third party attempts to intercept and reconstruct this information, since the reception state of the first information and the reception state of the second information differ according to where they are received, if these cannot be ascertained beforehand, it is impossible for them to be learned from a received signal sequence. Therefore, a third party cannot ascertain the content of communication 2.

Performing frequency spreading in this way improves resistance to noise, and thus also has an effect of enabling communication quality to be raised.

With regard to the channel on which dummy information is superimposed, a case has been described in which control is performed so that power received in combined form via propagation paths 1207 and 1208 decreases, but if the reception power of the channel on which dummy information is superimposed is made 0-that is, if control is performed to cause mutual cancellation-a merit is that the cancelled space region is extremely narrow.

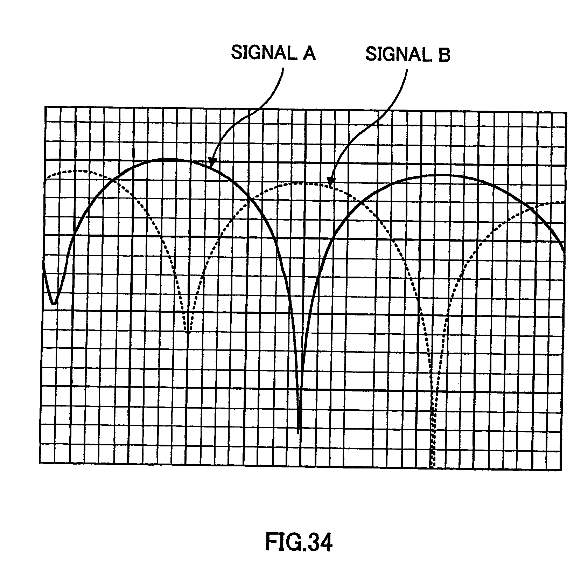

The situation when electromagnetic waves are space-combined is shown here in FIG.34. FIG.34 shows the nature of a standing wave composed of two waves. The horizontal axis indicates position, and the vertical axis, power. As can be seen from this graph, when the maximum level is normalized to 0 dB, most positions are -10 dB or above. With space-combining that gives -20 dB or below, radio waves are mutually canceled and places with low power have sharp peaks, with a small shift in position giving a sharp rise in power.

Using this characteristic, it can be seen that if, for example, first information signal power is set at around -10 dBm and transmission control is performed so that second information is canceled in the receiving side, there are only limited regions in which second information obstruction can be ignored, and in most regions first information cannot be received correctly. As a result, it is extremely difficult for a third party to obtain first information.

Thus, according to the above configuration, a radio communication system 1200 can be implemented whereby, in addition to confidential information being transmitted at a timing so as to be received by a receiving station 1202 at a set time via a plurality of propagation paths 1207 and 1208, transmitting station 1201 directionality is controlled so that the reception power of that confidential information is maximized at receiving station 1202, which is the confidential information transmission destination, thereby making it significantly more difficult for confidential information to be obtained by a third party, as well as enabling confidential information of good communication quality to be obtained by receiving station 1202.

Also, in this embodiment, there is great affinity with array antenna technology. This technology has the major merit of enabling radiation characteristics to be controlled electrically, and this feature is actively applied in this embodiment.

Thus the merits of an array antenna itself can be directly exploited, and when performing communication 2 mentioned in the description, for example, communication can be performed on a different channel oriented in a direction unrelated to communications with receiving station 1202, or radiation characteristics can be controlled in communications in a multipath environment. By so doing, communication capacity can be increased, or multipath effects can be reduced.

(Other Embodiments)

(1) In the above embodiments, a case is described in which the time that constitutes the basis for the receiving terminal reference time is assumed to be the network reference time at which the transmitting station transmits to the receiving station by means of communication 1, but the present invention is not limited to this, and the key point is that it is sufficient for there to be a time that coincides between the transmitting station and receiving station. For example, a particular preset time may be used as a basis. Also, a transmitting station that can estimate propagation path delay if a reference time notification signal is transmitted from the receiving station to the transmitting station, can coordinate the reference time with respect to the receiving station based on the reception time of the reference time notification signal.

(2) In above Embodiment 4, a case is described in which the transmitting station performs transmission at a transmission timing such that transmit data including confidential information arrives at a receiving terminal reference time set by the receiving station, but the present invention is not limited to this, and the transmitting station may also transmit transmit data including confidential information at a transmission timing shifted by a predetermined amount of time with respect to the receiving terminal reference time set by the receiving station. In this case, as described in Embodiment 4 above, the receiving station performs reception processing using a synchronization sequence signal that can be extracted only by the receiving station that is the confidential information transmission destination.

A detailed description will be given using FIG.4. First, the transmitting station transmits a control signal including the network reference time to the receiving station (communication 1). Then, after a fixed time (T1), the receiving station transmits a response signal to the transmitting station (communication 2), and also sets a receiving terminal reference time (Tk). The transmitting station then estimates the propagation path state from communication 1 and communication 2. Specifically, the transmitting station estimates the signal propagation time (Td).

Next, the transmitting station performs communication 3 to the receiving station. At this time, the transmitting station calculates the transmission time from the estimated signal propagation time (Td) and the processing delay time arising in the apparatus, and controls the transmission timing. The transmitting station performs time control so that communication 3 arrives at the receiving station at the receiving side reference time (Tk), and at this time communication 3 is transmitted with a delay amount (Ts) determined in accordance with additional information added to the receiving side reference time (Tk).

As a result, communication 3 is received by the receiving station at time (Tk+Ts). In the receiving station, time synchronization is performed by carrying out reception processing on communication 3 spanning a number of symbols centering on time (Tk). The ability to perform time synchronization here is due to the fact that a synchronization sequence signal in a format understandable only by the transmitting station and receiving station is placed within the transmit signal. That is to say, in a receiving station with the configuration described above in Embodiment 4, reception processing can be performed using a synchronization sequence signal even if transmit data does not arrive precisely at the receiving side reference time (Tk).

Then the time synchronization result and the difference (Ts) from time (Tk) are passed to a separate processing system as additional information. At this time, the following applications can be envisaged using additional information.

Firstly, a plurality of scrambling formats are established between the transmitting and receiving stations, and these are switched in accordance with additional information. Secondly, confidential information is divided into a plurality of parts, and the type is transmitted in accordance with additional information. That is to say, the transmitting station divides confidential information into first and second information, and in the receiving station, first divided confidential information is demodulated when additional information (Ts) is positive, and second divided confidential information is demodulated when additional information (Ts) is negative. And thirdly, a plurality of encryption patterns are prepared beforehand, and these are switched in accordance with additional information (Ts).

It thus becomes significantly more difficult for another receiving station to reconstruct confidential information. Also, in the transmitting station and receiving station performing transmission and reception of confidential information, the confidential information can be reconstructed even when the time is not exactly the receiving side reference time (Tk), thus increasing freedom of design.

(3) In the above embodiments, a case is described in which transmission time is controlled by the transmitting station for all information so that a signal transmitted from the transmitting station arrives at a receiving terminal reference time set by the receiving station, but the present invention is not limited to this, and it is also possible for this kind of transmission and reception to be performed only for transmission of especially important confidential information such as an encryption key, and for transmission to be performed using ordinary timing, by adding a synchronization signal such as a pilot signal, for other information. By so doing, it is possible to minimize instability at the time of demodulation due to the fact that a synchronization signal is not added and synchronous demodulation processing is not performed, enabling overall communication quality to be improved.

(4) In the above embodiments, a case is described in which a synchronization sequence and dummy synchronization sequence are composed of a plurality of symbols, but the present invention is not limited to this, and each may also be composed of a single symbol. Furthermore, a dummy synchronization sequence may also be used as dummy symbols, information symbols, and part of the synchronization sequence.

Moreover, a repeated monotonic pattern such as a sine wave, for example, may also be used as a synchronization sequence. In this case, receiving station 1, which is the intended confidential information transmission destination, can estimate the start time of that synchronization sequence, but receiving station 2 cannot estimate which pattern is the synchronization sequence start time. Therefore, even if part of the synchronization sequence is made a dummy synchronization sequence, the reference phase obtained from the synchronization sequence will vary (rotate) according to the timing, and thus the same kind of effect can be obtained as in the above embodiments.

In addition, it is not necessary to limit the synchronization sequence to one kind, and a plurality of kinds of synchronization sequence may be used. By so doing, demodulation and decryption of confidential information by a third party is made significantly more difficult. Furthermore, a significantly higher degree of security can be achieved by changing the format indicating the arrangement of information symbols and dummy symbols according to the kind of synchronization sequence.

(5) In the above embodiments, a case is described in which dummy information is carried by dummy symbols, but the present invention is not limited to this, and it is also possible for an error detection function or error correction function for first normal information to be carried by dummy symbols as second normal information. Furthermore, it is also possible for an information sequence represented by a convolutional code sequence or block code sequence to replace that dummy information sequence.

(6) In the above embodiments, a case is described in which communication is performed via two propagation paths-a first propagation path and a second propagation path-by providing two transmitting sections in a transmitting station, but the present invention is not limited to this, and communication may be performed on three or more propagation paths by providing three or more transmitting sections.

Also, in the above embodiments, a case is described in which two transmission path communications are implemented by providing two transmitting sections in a transmitting station, but the present invention is not limited to this, and different transmission path communications can also be implemented by, for example, placing each transmitting section at a different location. Also, the transmitting sections may be installed at the same location, and an antenna used that narrows the directionality of each transmitting section. Furthermore, it is also possible to use a single transmitting section and use an adaptive array antenna for the transmitting section, and to form different communication propagation paths by making use of characteristics such as radio wave reflection and diffraction. The key point is that it is sufficient to form a plurality of propagation paths that can be shared only by the radio communication stations between which confidential information is being communicated.

(7) In the above embodiments, in order to simplify the explanation, descriptions have been given in which dummy symbol power is assumed to be 0, but it is not necessary for dummy symbol power to be 0. In order to reduce interference with significant symbols, dummy symbol power need only be made sufficiently small. Also, dummy symbols can be divided into a plurality of parts so that power resulting from vector combining is sufficiently small.

(8) In the above embodiments, an example has been given for polarization state estimation whereby the angle between the long axis of elliptical polarization p and the antenna, and oblateness, are calculated, but the plane of polarization may be controlled by calculating only the approximate long-axis angle by using only the field strength detection section 1020 and phase difference detection section 1021 in the configurations shown in FIG.21 and FIG. 22, and this kind of simple configuration may be changed to for the method of controlling the plane of polarization.

Furthermore, in the above embodiments, a case is described in which linear polarization is used, but the present invention is not limited to this, and the same kind of effect can also be obtained with circular polarization. In this case, vertical polarization and horizontal polarization are replaced by right polarization and left polarization.

(9) In above Embodiments 10 and 11, a case is described in which communication is performed using a single propagation path between the transmitting station and receiving station, but the present invention is not limited to this, and the same kind of communication can be achieved with a plurality of propagation paths.

In this case, a time diversity effect can be obtained if communication using the first propagation path and communication using the second propagation path are performed with the time shifted. Conversely, a path diversity effect can be obtained if both communications are performed at the same time. It is, of course, more difficult for a third party to estimate two or more propagation paths than to estimate a single propagation path, and therefore distributing information over a plurality of paths enables a markedly higher degree of security to be achieved for confidential information.

(10) In above Embodiment 10, an example of a dipole antenna is given for the antenna, but there are no restrictions on the type of antenna, and the same kind of effect can also be obtained when using a helical antenna, planar antenna, parabolic antenna, Yagi antenna, or any other antenna. Also, interception of confidential information by a third party can be made significantly more difficult by emitting dummy information in a direction unrelated to the communication, using adaptive array antenna technology whereby directionality is controlled electrically using a plurality of antennas. Furthermore, the angle of the plane of polarization can be changed together with the radiation characteristics. Moreover, using an antenna such as an array antenna that enables directionality to be controlled electrically allows easy application to a communication method that uses a plurality of propagation paths.

(11) In the above embodiments, the descriptions have focused on security of confidential information, but if, in addition to the propagation path estimation carried out at the time of confidential information communication as described above, the channel parameter is also estimated for the following communication, and the two estimation results are compared, it is possible for the transmitting station to verify whether or not a receiving station is the communicating party for confidential information.

(12) In above Embodiments 10 and 11, a case is described in which a polarization estimation signal is output for channel parameter estimation, but it is also possible to use a sine wave, or a signal sequence comprising one or more symbols, as this polarization estimation signal.

Also, in above Embodiments 10 and 11, a case is described in which the angle of rotation and amplitude of the plane of polarization in the propagation path are detected by using linear polarization for the polarization estimation signal, but if, for example, polarization estimation signals are transmitted with a time shift, or mutually orthogonal polarization estimation signals are allocated and transmitted by multiplexing, so that a signal with a particular plane of polarization and a signal with a plane of polarization orthogonal to that signal can be separated, it is also possible to detect polarization rotation and phase difference between the transmitting side and receiving side.

(13) In above Embodiment 12, a case is described in which dummy information is transmitted to the receiving station by code division multiplexing in addition to confidential information using a spreading code, but the present invention is not limited to this, and the respective data may also be transmitted by means of frequency division multiplexing or orthogonal frequency division multiplexing.

(14) In above Embodiment 12, a case is described in which the spreading gain is made the same for the code sequences used for first information (confidential information) and second information (dummy information), but the gain need not necessarily be made the same. There is also no necessity as regards orthogonality, and as long as control is performed so that a sufficient difference emerges in reception power in the receiving side of the receiving station, implementation is possible even when exactly the same code sequence is provided and spread for the first information and second information, or even with a configuration in which the code length is 1 (that is to say, spreading is not performed). In this case, the second information signal on which dummy information is superimposed is an interference wave in a received signal intercepted by a third party, preventing the third party from obtaining the first information.

Here, it has been explained that the present invention can be implemented even if the same code is assigned to the first information and second information, but if control is performed so that the reception power becomes sufficiently low when the second information is space-combined in the receiving side, the received signal will comprise virtually only the first information, and it will no longer be necessary to separate multiplexed signals. That is to say, the same kind of effect can be obtained without performing code spreading in the multiplexing stage.

Therefore, as regards the first and second information, superimposition need only be performed by performing control to make one reception power high, and the other reception power sufficiently low in comparison, in the receiving side of the receiving station. By so doing, it is possible to transmit confidential information by means of communication 2 without lowering transmission efficiency. In this case, if there is a power difference on the order of 1 dB or more between the total power of the low-power signal and the power of the high-power signal, they can be separated at the receiving end.

(15) In the above embodiments, the code division multiple access (CDMA) method whereby a spreading code is assigned to each carrier has been described as a multiplexing method, but the same kind of effect can also be obtained by using OFDM. That is to say, in the case of CDMA, combined power is controlled for each spreading code, but in the case of OFDM, combined power need only be controlled for each subcarrier. For example, subcarriers can be divided into a plurality of groups (for example, odd subcarriers and even subcarriers), and the combined power of each subcarrier group controlled.

(16) In above Embodiment 12, a case is described in which multiplexed second information is used as dummy information, but second information is not limited to dummy information, and may also be information of another channel, for example. In this way, transmission efficiency can be raised. Furthermore, it is also possible for both first information and second information to be transmitted as confidential information, and for first information and second information to be separated and decrypted according to the size of their reception power in the receiving station.

Moreover, in addition to the first and second information transmitted from the transmitting station, another information may also be multiplexed on the power values of both, their order of the magnitude, information such as power ratio of the two, or the like, and transmitted. Furthermore, the multiplexing factor of data transmitted by means of communication 2 is not limited to two or three, and four or more kinds of information can be multiplexed and transmitted. In this case, first to nth (where n is a natural number greater than or equal to 2) information can be separated and decrypted. By so doing, information confidentiality is improved due to the fact that a third party attempting interception cannot obtain the correct order of size of reception power since the transmission path is different.

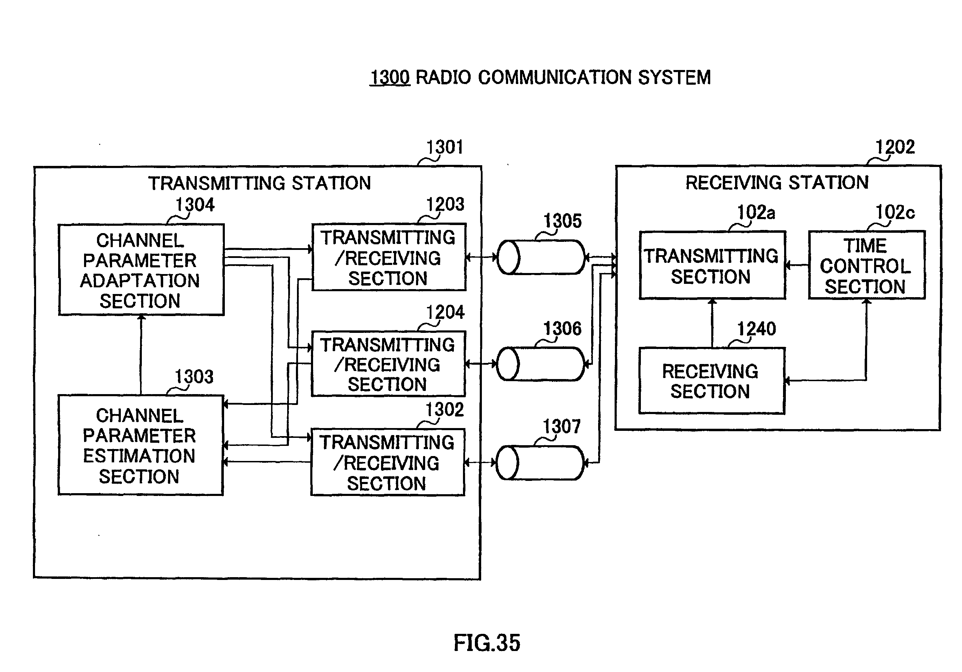

(17) In above Embodiment 12, a case has been described in which the transmitting station has two transmitting/receiving sections, but the number of transmitting/receiving sections is not limited to two. Also, when radiation characteristics are controlled using an array antenna, it is known that, if the number of array elements is N, N-1 null characteristics whereby signals are canceled by space-combining and signal power becomes 0 are created. A method that makes use of this feature will be described using FIG.35.

As shown in FIG.35, in which parts corresponding to those in FIG.29 are assigned the same codes, in radio communication system 1300 a third transmitting/receiving section 1302 has been added to the transmitting station 1301, and a third propagation path 1307 has been newly formed as a propagation path.

In the same way as in above Embodiment 12, the transmitting station 1301 estimates the channel parameter of the first propagation path 1305, second propagation path 1306, and third propagation path 1307 by receiving a propagation path estimation signal as a known signal from the receiving station 1202.

Next the transmitting station 1301 performs three-channel code division multiplexing of three kinds of information, and transmits them to the receiving station 1202. The respective channels allocated here are selected so as to have equal spreading gain and to have an orthogonal relationship.

At this time, confidential information is transmitted as first information so as to give optimal reception conditions in the receiving side of the receiving station 1202 based on estimation results for the first propagation path 1305, second propagation path 1306, and third propagation path 1307, among the estimated propagation path environments. Here, control is performed so that reception power is maximized as an optimal reception condition. Dummy information is transmitted as second information, with null control performed so that reception power in the receiving side of the receiving station 1202 is minimized based on estimation results for the first propagation path 1305, second propagation path 1306, and third propagation path 1307, among the estimated propagation path environments.

Of the two null characteristics for which control is possible at this time, one is used, and the other null characteristic is set so that communication can maintain an appropriate state. Furthermore, dummy information is transmitted as third information, with null control performed so that reception power in the receiving side of the receiving station 1202 is minimized based on estimation results for the first propagation path 1305, second propagation path 1306, and third propagation path 1307, among the estimated propagation path environments. At this time, null control and transmission is performed so that, of the two null characteristics, one null characteristic is the same kind of characteristic as the second information, while the other null characteristic has a different state from the second information.

In this way, the three emitted information signals are spatially combined and received by the receiving station 1202. As the result of spatial combining, the first information, as a high-power signal, and second information and third information, as low-power signals, are received in the receiving side in a code-division-multiplexed state.

The respective signals can be extracted by despreading the received signal sequence using a despreading code. As the same spreading gain has been set for each, the power of one will be high and the power of the others low in accordance with the reception power of each type of information. The receiving station 1202 can easily extract only confidential information by selecting the information in the channel with high power as confidential information, and treating the information in the other channels as dummy information.

The case where a third party attempts to intercept and reconstruct confidential information will now be considered. In this case, the reception state of the first information and the reception state of the second and third information differ according to where they are received. If these reception states cannot be ascertained beforehand, it is impossible for them to be learned from a received signal sequence.

Also, the radiation characteristics of the multiplexed third information are the same as for the second information, and are controlled so that a null is formed in the receiving side, but are controlled so that the null states are different. When null control is performed here, a null may also be formed other than at the control location according to the conditions, and at a third party receiving location, for example, it will seldom happen that the third party is in the same state even if the second information is in the vicinity of a null. As a result, the probability of the contents of confidential information being disclosed to a third party is greatly decreased. Thus, a configuration in which three transmitting/receiving sections are provided enables confidentiality to be greatly increased compared with the case where two transmitting/receiving sections are used.

Similarly, increasing the number of transmitting/receiving sections in the transmitting station to four, five, or six raises the degree of multiplexing and enables the degree of confidentiality to be significantly heightened. Also, if the degree of multiplexing is suppressed with respect to the number of transmitting/receiving sections and the degree of freedom of null control per type of information multiplexed is improved, precision can also be improved, and control can be heightened. Moreover, if parameter settings used for null control are changed on a symbol-by-symbol basis, and provisions are made for locations of nulls formed outside control not to overlap, the possibility of disclosure of confidential information to a third party can be significantly reduced.

A case has been described in which control is performed so that the reception power of second information and third information is lowered at a receiving station by performing null control of the second information and third information, but if the reception power of second information and third information is controlled in a different way from that of first information, and information with high reception power is added to the first through third information, an even higher degree of confidentiality can be achieved. Moreover, if that control is varied momentarily on a symbol-by-symbol basis, disclosure can be prevented to a further degree.

(18) In the above descriptions, a case has been described in which the transmission power of first information comprising confidential information and the transmission power of other information multiplexed therewith are the same. However, it is not essential for these to be the same, and confidentiality can be improved if, for example, the transmission power of the first information is set higher than that of other information. These can be adjusted as appropriate according to the environment of the radio communication system being provided.

(19) In the above embodiments, for the purposes of explanation the propagation path estimation signal has been assumed to be a known signal, but propagation path estimation is also possible without using a known signal. However, use of a known signal is advantageous in that estimation is simple and the effects of noise can be reduced. Also, if the envelope is a fixed signal, a CMA method-which is an adaptive array antenna estimation algorithm-can be applied. Moreover, if a propagation path estimation signal is necessary when the channel parameter varies, and the propagation path formed between the transmitting station and receiving station is fixed, confidential communication can be performed by measuring the relevant characteristics beforehand.

(20) Above descriptions have quoted the example of an array antenna as an antenna used when a plurality of transmitting/receiving sections are provided, but there are no restrictions on the configuration of an array antenna. As long as the coherency of a modulated wave can be controlled, the same control can be performed using two or more transmitting stations. Also, the use of an antenna that enables radiation characteristics to be controlled electrically, as in the case of an array antenna, allows a transmitting station to perform communication with another radio station independently of communication with the receiving station to which confidential information is being transmitted. In this case, communication signals to the respective receiving stations can be multiplexed and transmitted at the same time and at the same frequency, as explained above. Increasing the degree of multiplexing in this way further enhances the effect of preventing disclosure of confidential information to a third party. When there is no other receiving station, and communication is performed solely between one transmitting station and one receiving station, multiplexing dummy information as described above enables the security of confidential information to be maintained.

(21) In the above embodiments, descriptions have quoted the example of code division multiplexing as a multiplexing method whereby a plurality of kinds of information are multiplexed with confidential information, but since particular information can be selected using array antenna radiation characteristics control, there are no particular restrictions on the multiplexing method.

(22) The present invention can be used without restrictions as to the modulation method or multiplexing method. For example, a different modulation method or multiplexing method can be applied to each of communication 1, communication 2, communication 3, and communication 4 described above in Embodiment 1 through Embodiment 4, and to each of communication 10, communication 11, communication 20, communication 21, communication 30, communication 31, and communication 4 described above in Embodiments 5, 6, and 7. When estimating the channel parameter, in particular, the use of a spread spectrum method, as in Embodiment 1, for communication 1 enables fading-tolerant and accurate estimation processing to be performed.

In addition, the ASK modulation method, FSK modulation method, differential encoding modulation method, or OFDM (Orthogonal Frequency Division Multiplexing) methodmay be used. Use of these modulation methods has the particular advantage that there is no need to perform phase synchronization.

PSK modulation, QAM modulation, pulse modulation, and so forth, can also be used. Furthermore, since the present invention is not dependent on the multiplexing method, FDMA multiplexing, CDMA multiplexing, OFDM multiplexing, and so forth, can be used.

That is to say, in the above embodiments cases have been described in which confidential information transmission is controlled in time or channel units, but if a multicarrier modulation method such as CDMA multiplexing or OFDM multiplexing is used, plane of polarization control can be performed on a carrier-by-carrier basis. Therefore, by performing control by carrier in addition to control by time and by channel, a higher level of control can be implemented. As a result, confidentiality with respect to a third party can be drastically improved.

Also, if the symbol rate in communication 3 in Embodiment 1 is set lower than the symbol rate of communication 1 and communication 2, a relative improvement in the precision of propagation path delay can be achieved. The precision of the positional relationship between the transmitting station and receiving station is determined by the symbol rate of communication 3 and the processing time from communication 1 to communication 3 at this time, and therefore the respective values should be set according to the system design.

Similarly, in Embodiments 5, 6, and 7, the precision of the positional relationship between the transmitting station and receiving station is determined by the symbol rate of communication 31 and the processing time from communication 10 to communication 30, or from communication 11 to communication 31, and therefore the respective values should be set according to the system design.

Thus, since the present invention is not restricted with regard to modulation method or multiplexing method, and does not affect other information layers, it has a high degree of affinity with conventional systems. Furthermore, a higher degree of security can be achieved through combination with encryption technology, enabling the present invention to be widely applied to information communication fields that require a high degree of security, including personal information, financial information, confidential information, and so forth.

(23) In the above embodiments, a case is described in which another user is prevented from reconstructing confidential information by estimating the signal propagation time on the propagation path and establishing transmission/reception synchronization between the transmitter and receiver using this signal propagation time, but the same kind of effect as in the above embodiments can be obtained by using another propagation path environment that can be shared only by the radio stations performing communication. Such channel parameters include a multipath environment and fading environment, for example, and these may also be employed in combined form. Also, a higher degree of security can be achieved by applying even such factors as equipment differences between the transmitting station and receiving station (such as a difference in reference frequency, for example) to communications.

(24) In the above embodiments, in order to simplify the explanations, a radio station that transmits information including confidential information is described as a transmitting station, and a radio station that receives that information is described as a receiving station, but the present invention is not limited to this, and transmission and reception of confidential information may also be performed reciprocally.

(25) In the above embodiments, a case is described in which, by transmitting a control signal that includes the network reference time as a signal for synchronizing the transmitting station and receiving station, the same reference time is shared by the transmitting station and receiving station, and network time Tk is made the arrival time for confidential information, but the present invention is not limited to this, and even if the same reference time is not shared, confidential information can be made to arrive at a point in time set by the receiving station in the same way as in the above embodiments.

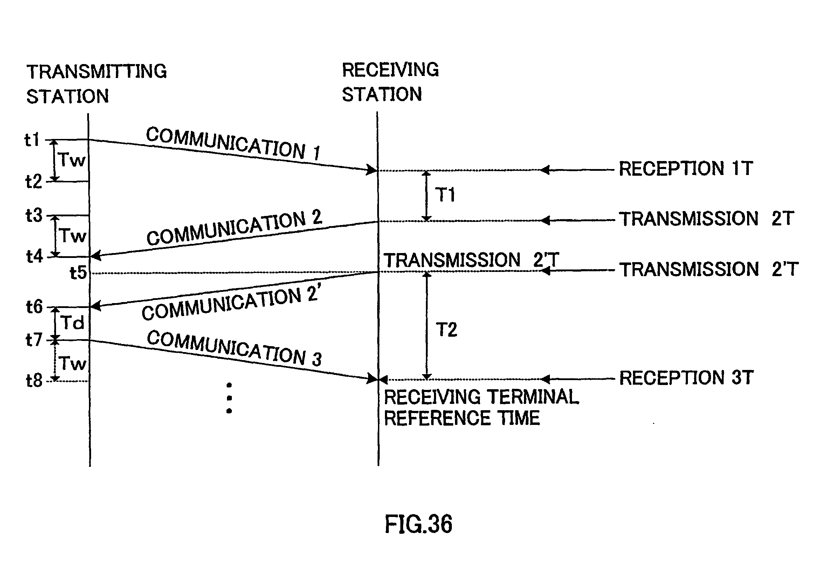

This will be described using FIG.36. The transmitting station transmits communication 1 at point in time t1. It is here assumed that this communication 1 does not contain reference time information, unlike the above embodiments. The receiving station receives communication 1 at point in time t2. Then the receiving station transmits communication 2 at point in time t3 after the elapse of time T1. The transmitting station receives communication 2 at point in time t4. Then, after the elapse of a certain time (which need not be shared between the transmitting and receiving sides), the receiving station transmits communication 2' at point in time t5. The transmitting station receives communication 2' at point in time t6. Following the elapse of time Td from point in time t6, the transmitting station transmits communication 3 at point in time t7. Here, the transmitting station and receiving station hold time T1 from reception 1T until transmission 2T, and time T2 from transmission 2'T until reception 3T, as shared information.

If the signal propagation time is denoted as Tw, the relationship in the following equation holds true:

$$t4\text{-}t1 = 2\times Tw+T1 \tag{1}$$

Therefore, signal propagation time Tw can be expressed as shown in the following equation:

$$Tw = (t4\text{-}t1\text{-}T1)/2 \tag{2}$$

From the relationship between points in time t5 and t6, and T2, point in time t7 at which the transmitting station should transmit in order for arrival to be at receiving side reference time 1 (point in time t8) is as follows:

$$t7 = t8\text{-}Tw = (t5+T2)\text{-}Tw$$
$$= t6+T2-2\times Tw \qquad\qquad \cdots\cdots (3)$$

That is to say, adjustment time Td (=t7-t6) can be expressed by the following equation:

$$Td = T2\text{-}2\times Tw = T2\text{-}(t4\text{-}t1\text{-}T1) \tag{4}$$

Since adjustment time Td for transmitting station transmission timing can be expressed in this way by means of points in time t1 and t4 and shared time information T1 and T2 already known to the transmitting station, the transmitting station can send transmit data containing confidential information at transmission timing such that the confidential information will arrive at the receiving station at point in time t8 based on equation (4).

The present invention is not limited to above Embodiments 1 to 12, and may be implemented with various modifications. For example, the present invention may be implemented by combining above Embodiments 1 to 12 and other embodiments as appropriate.

A data transmission apparatus according to the present invention performs radio transmission of transmit data including confidential information to a radio station, and has a configuration comprising a receiving section that receives a signal transmitted by a radio station, an estimation section that estimates the radio propagation path environment between the data transmission apparatus and the radio station based on a received signal obtained by the receiving section, and a transmitting section that transmits transmit data including confidential information to the radio station, taking into consideration the radio propagation path environment obtained by the estimation section.

According to this configuration, since a radio propagation path environment shared only with the radio station that is the intended transmission destination of transmit data including confidential information is estimated by the estimation section, and transmit data including confidential information is transmitted taking this radio propagation path environment into consideration, confidential information cannot be received or reconstructed by another radio station for which the radio propagation path environment is different. As a result, confidential information can be transmitted with a high degree of confidentiality.

Also, a data transmission apparatus according to the present invention has a configuration whereby an estimation section estimates the signal propagation time between the data transmission apparatus and a radio station as a radio channel parameter based on a received signal, and a transmitting section transmits transmit data at a timing that takes the signal propagation time into consideration so that the transmit data arrives at the radio station at the desired reception time.

According to this configuration, transmit data including confidential information arrives at a predetermined reception time in the radio station that is the intended transmission destination of the confidential information, and therefore confidential information can be reconstructed by that radio station by demodulating a signal in synchronization with that time. In contrast to this, confidential information cannot be reconstructed by a radio station other than the radio station that is the intended transmission destination of the confidential information. This is because reference time information indicating the reception and demodulation start time is determined based on a signal propagation time shared only between the data transmission apparatus and the radio station that is the intended transmission destination, and therefore another radio station cannot ascertain the reference time indicating the reception and demodulation start time. As a result, another radio station cannot reconstruct confidential information, and security is assured.

Furthermore, a data transmission apparatus according to the present invention has a configuration comprising a dummy symbol addition section that adds dummy symbols at positions predetermined between the radio transmission apparatus and a radio station within transmit data including confidential information, wherein a transmitting section transmits transmit data to which dummy symbols have been added to the radio station.

According to this configuration, since the radio station that is the intended transmission destination of confidential information knows the positions of dummy symbols, that radio station can eliminate only dummy symbols after reception and demodulation of transmit data, and easily extract the confidential information. In contrast to this, even if another radio station were able to demodulate transmit data, that radio station would not be able extract confidential information since dummy symbols are present. As a result, security is significantly improved.

Moreover, a data transmission apparatus according to the present invention has a configuration comprising a synchronization signal addition section that adds synchronization sequence signals in a mutually synchronous relationship at positions predetermined between the data transmission apparatus and a radio station within transmit data including confidential information, and a dummy synchronization sequence addition section that adds dummy synchronization sequence signals, in a mutually synchronous relationship, that are dummy synchronization signals with regard to the synchronization sequence signals.

According to this configuration, since the radio station that is the intended transmission destination of confidential information knows the position of the synchronization signals, that radio station can easily extract the synchronization signals. Using the extracted synchronization signals, the radio station can perform time synchronization, phase variation detection, gain variation detection, and so forth. As a result, reception quality can be improved. In contrast to this, another radio station cannot reconstruct confidential information, and also cannot distinguish between a dummy synchronization signal and a synchronization signal. It is thus possible to obtain a data transmission apparatus whereby security is heightened and radio station reception quality can be improved.

Also, a data transmission apparatus according to the present invention performs radio transmission of transmit data including confidential information to a radio station, and has a configuration comprising first and second receiving sections, placed in mutually different locations, that receive a signal transmitted by a radio station, an estimation section that estimates a first radio propagation path environment between the first receiving section and the radio station based on a received signal obtained by the first receiving section, and also estimates a second radio propagation path environment between the second receiving section and the radio station based on a received signal obtained by the second receiving section, and first and second transmitting sections that are placed at the same locations as the first and second receiving sections, respectively, and transmit data including confidential information to the radio station, taking into consideration the first and second radio propagation path environments obtained by the estimation section.

According to this configuration, since a plurality of radio propagation path environments shared only with the radio station that is the intended transmission destination of transmit data including confidential information are estimated by the estimation section, and transmit data including confidential information is transmitted taking this plurality of radio propagation path environments into consideration, confidential information cannot be received or reconstructed by another radio station for which the radio propagation path environment is different. Also, if another radio station attempts to intercept confidential information, that radio station must estimate a plurality of radio channel parameters, which is more difficult than estimating a single radio channel parameter. As a result, confidential information can be transmitted with a significantly higher degree of security.

Furthermore, a data transmission apparatus according to the present invention has a configuration wherein an estimation section estimates the signal propagation time in a first radio propagation path between a radio station and a first receiving section and the signal propagation time in a second radio propagation path between the radio station and a second receiving section as first and second radio channel parameters, and first and second transmitting sections transmit transmit data to the radio station at a timing that takes each signal propagation time into consideration so that the transmit data arrives at the radio station at a time set beforehand between the data transmission apparatus and the radio station.

According to this configuration, transmit data including confidential information arrives at a predetermined reception time in the radio station that is the intended transmission destination of the confidential information, and therefore confidential information can be reconstructed by that radio station by demodulating a signal in synchronization with that time. In contrast to this, confidential information cannot be reconstructed by a radio station other than the radio station that is the intended transmission destination of the confidential information. This is because reference time information indicating the reception and demodulation start time is determined based on a plurality of signal propagation times shared only between the data transmission apparatus and the radio station that is the intended transmission destination, and therefore another radio station cannot ascertain the reference time indicating the reception and demodulation start time. As a result, another radio station cannot reconstruct confidential information, and security is assured.

Moreover, a data transmission apparatus according to the present invention has a configuration wherein first and second transmitting sections transmit first and second transmit data at timings such that the first and second transmit data arrive at a radio station at different times.

According to this configuration, if another radio station that is not the radio station that is the intended transmission destination of confidential information attempts to intercept the confidential information, that radio station must estimate different arrival times. However, these arrival times can be known only by the radio station that is the intended transmission destination of the confidential information, and therefore another radio station cannot reconstruct the confidential information. As a result, if, for example, confidential information is divided and allocated to first and second transmitting sections, and is made to arrive at a radio station at different times as described above, it becomes significantly more difficult for another radio station to reconstruct the confidential information.

Also, a data transmission apparatus according to the present invention has a configuration wherein first and second transmit data are formed with the same format, and first and second transmitting sections transmit the first and second transmit data at timings such that the first and second transmit data arrive at a radio station at the same time.

According to this configuration, in the radio station that is the intended transmission destination of confidential information the received signal level is increased by transmit data of the same format being combined in reception. As a result, high-quality confidential information can be obtained. In contrast to this, in another radio station the signal degrades due to interference between symbols in reception. As a result, it is significantly more difficult to obtain confidential information.

Furthermore, a data transmission apparatus according to the present invention has a configuration comprising a dummy symbol addition section that adds dummy symbols at positions predetermined between the radio transmission apparatus and a radio station within transmit data including confidential information, wherein a transmitting section transmits transmit data to which dummy symbols have been added to the radio station.

According to this configuration, since the radio station that is the intended transmission destination of confidential information knows the positions of dummy symbols, that radio station can eliminate only dummy symbols after reception and demodulation of transmit data, and easily extract the confidential information. In contrast to this, even if another radio station were able to demodulate transmit data, that radio station would not be able extract confidential information since dummy symbols are present. As a result, security is significantly improved.

Moreover, a data transmission apparatus according to the present invention has a configuration comprising a synchronization signal addition section that adds synchronization sequence signals in a mutually synchronous relationship at positions predetermined between the data transmission apparatus and a radio station within transmit data including confidential information, and a dummy synchronization sequence addition section that adds dummy synchronization sequence signals, in a mutually synchronous relationship, that are dummy synchronization signals with regard to the synchronization sequence signals.

According to this configuration, since the radio station that is the intended transmission destination of confidential information knows the positions of the synchronization signals, that radio station can easily extract the synchronization signals. Using the extracted synchronization signals, the radio station can perform time synchronization, phase variation detection, gain variation detection, and so forth. As a result, reception quality can be improved. In contrast to this, another radio station cannot reconstruct confidential information, and also cannot distinguish between a dummy synchronization signal and a synchronization signal. It is thus possible to obtain a data transmission apparatus whereby security is heightened and radio station reception quality can be improved.

Also, a data transmission apparatus according to the present invention has a configuration comprising a dummy symbol addition section that adds dummy symbols whose power is extremely low with respect to confidential symbols within each of first and second transmit data so that confidential symbols forming confidential information do not overlap when first and second transmit data unit communication frames are lined up, wherein the first and second transmitting sections transmit first and second transmit data at timings such that the first and second transmit data arrive at a radio station at the same time.

According to this configuration, in the radio station that is the intended transmission destination of confidential information confidential symbols due not mutually interfere when first and second transmit data are received at the same time, and therefore confidential information can be obtained with high quality. In contrast to this, in another radio station first and second transmit data cannot be received at the same time, and therefore confidential information degrades due to mutual interference between confidential symbols. Also, confidential information cannot be extracted since dummy symbols have been added.

Furthermore, a data transmission apparatus according to the present invention has a configuration wherein an estimation section estimates, in addition to the signal propagation time, signal power attenuation in a first radio propagation path between a radio station and a first receiving section and signal power attenuation in a second radio propagation path between the radio station and a second receiving section, and first and second transmitting sections transmit transmit data including confidential information to the radio station at transmission power that takes into consideration signal power attenuation in the first and second radio propagation paths.

According to this configuration, the radio station that is the intended transmission destination of confidential information can obtain transmit data whose reception level is adapted to the first and second radio propagation paths and optimal, and is synchronized with reception operations. As a result, the radio station that is the intended transmission destination of confidential information can reconstruct confidential information with certainty. In contrast to this, since another radio station receives transmit data from the data transmission apparatus at a different location from the radio station that is the intended transmission destination of confidential information, it is difficult for such another radio station to obtain an appropriate reception level and appropriate reception timing for demodulation of that signal, and so to reconstruct confidential information.

Moreover, a data transmission apparatus according to the present invention has a configuration wherein first and second transmit data are formed with the same format, and first and second transmitting sections transmit the first and second transmit data at timings such that the first and second transmit data arrive at a radio station at the same time, and also transmit transmit data at transmission power close to the lowest level at which the radio station can combine and receive the first and second transmit data based on signal power attenuation.

According to this configuration, the radio station that is the intended transmission destination of confidential information can receive first and second transmit data with the same symbols mutually combined, and can thus obtain a signal level sufficient for demodulation. In contrast to this, another receiving station at a different location from that of the radio station that is the intended transmission destination of confidential information cannot obtain the signal level necessary for demodulation. As a result, the radio station that is the intended transmission destination can obtain high-quality confidential information, while another radio station cannot obtain confidential information.

Also, a data transmission apparatus according to the present invention has a configuration wherein an estimation section estimates the radio propagation path environment by detecting the plane of polarization of a received wave based on a received signal obtained by a receiving section, and a transmitting section transmits transmit data including confidential information to a radio station by means of a transmission wave that has the same plane of polarization as that detected by the estimation section.

According to this configuration, since the transmitting section controls a transmission wave so as to have the same plane of polarization as the radio station, stable communication can be performed without adjusting the planes of polarization of the transmitting side and receiving side. As a result, the radio station that is the intended transmission destination of confidential information can receive transmit data including confidential information transmitted from the transmitting section with the plane of polarization rotational phase in an optimal state. As a result, the radio station can obtain high-quality confidential information. In contrast to this, another radio station at a different location from that of the radio station that is the intended transmission destination of confidential information cannot coordinate antenna radiation characteristics optimally with the plane of polarization of transmit data including confidential information since it has a different propagation path environment, and consequently reception quality falls and it becomes significantly more difficult to reconstruct confidential information.

Furthermore, a data transmission apparatus according to the present invention has a configuration wherein an estimation section estimates the radio propagation path environment by detecting the plane of polarization of a received wave based on a received signal obtained by a receiving section, and a transmitting section transmits transmit data including confidential information superimposed on a transmission wave that has the same plane of polarization as that detected by the estimation section, and also transmits dummy data superimposed on a transmission wave that has a plane of polarization orthogonal to the plane of polarization detected by the estimation section.

According to this configuration, the radio station that is the intended transmission destination of confidential information receives confidential information normally, but does not receive dummy information, due to the antenna characteristics. In this way, confidential information can be extracted easily without using a complex configuration. In contrast to this, another radio station receives a mixture of confidential information and dummy information. Moreover, in the worst case, only dummy data is received. As a result, confidential information cannot be reconstructed.

Moreover, a data transmission apparatus according to the present invention has a configuration wherein an estimation section estimates the radio propagation path environment by detecting the plane of polarization of a received wave based on a received signal obtained by a receiving section, and a transmitting section transmits transmit data including confidential information to a radio station by means of a transmission wave whose plane of polarization has been rotated by an amount predetermined between the data transmission apparatus and radio station with respect to the plane of polarization detected by the estimation section.

According to this configuration, a radio station that is not the intended transmission destination of confidential information cannot ascertain plane of polarization rotation information predetermined between the data transmission apparatus and the radio station that is the intended transmission destination of confidential information. By this means, estimation of the plane of polarization of transmit data including confidential information transmitted by the transmitting section is made significantly more difficult. As a result, the security of confidential information can be significantly improved.

Also, a data transmission apparatus according to the present invention has a configuration wherein an estimation section estimates the direction of arrival of a received signal, and a transmitting section transmits transmit data including confidential information, taking into consideration the direction of arrival based on the result of estimation by the estimation section.

According to this configuration, by including the direction of arrival of a signal in the propagation path environment that can be shared only by the data transmission apparatus and the radio station that is the intended transmission destination of confidential information, the risk of disclosure of confidential information to another radio station is significantly reduced.

Furthermore, a data transmission apparatus according to the present invention has a configuration wherein a transmitting section transmits transmit data including confidential information in the direction of a radio station based on the direction of arrival estimated by an estimation section, and also transmits dummy data in a direction different from that of the radio station.

According to this configuration, reconstruction of confidential information by another radio station is made significantly more difficult by the reception of dummy data.

Moreover, a data transmission apparatus according to the present invention has a configuration wherein a transmitting section has an adaptive array antenna, and weights the array antennas so that their directionality is in the direction of arrival when transmitting transmit data including confidential information, and weights the array antennas so that their directionality is in a direction other than the direction of arrival when transmitting dummy data.

According to this configuration, directionality can be oriented to the estimated direction of arrival with high precision and at high speed by using an adaptive array antenna.

Also, a data transmission apparatus according to the present invention has a configuration comprising a first spreading section that performs spreading processing on confidential information using a predetermined spreading code and supplies a first spread signal obtained by this means to a first transmitting section, and a second spreading section that performs spreading processing on dummy information using a different spreading code and so that the same order of spreading gain is obtained as the spreading gain by the first spreading section, and supplies a second spread signal obtained by this means to a second transmitting section, wherein the first and second transmitting sections control transmission power so that a difference greater than or equal to a fixed value is produced between the reception power value of the first spread signal and the reception power value of the second spread signal when the first and second spread signals arrive at a radio station, based on signal power attenuation estimated by an estimation section. According to this configuration, the first spread signal and second spread signal arrive at the radio station that is the intended transmission destination without causing mutual interference. Then, when the spread confidential information and spread dummy information are despread in that radio station, a difference greater than or equal to a fixed value is produced between the signal level of the confidential information and the signal level of the dummy information. By this means, the radio station can sort confidential information from dummy information by discriminating between their signal levels, and obtain confidential information. In contrast to this, in another radio station at a different location from that of the aforementioned radio station the difference in signal level between despread confidential information and dummy information is not regular because the radio propagation path is different. As a result, it is not possible to sort confidential information from dummy information and obtain confidential information, and reconstruction of confidential information is made significantly more difficult.

Furthermore, a data transmission apparatus according to the present invention has a configuration comprising a first spreading section that forms a first spread signal by performing spreading processing on confidential information using a predetermined spreading code, and a second spreading section that forms a second spread signal by performing spreading processing on dummy information using a different spreading code and so that the same order of spreading gain is obtained as the spreading gain by the first spreading section, wherein first and second transmitting sections transmit the first and second spread signals in the direction in which a difference greater than or equal to a fixed value is produced between the reception power value of the first spread signal and the reception power value of the second spread signal, based on the direction of arrival estimated by an estimation section.

According to this configuration, the first spread signal and second spread signal arrive at the radio station that is the intended transmission destination without causing mutual interference. Then, when the spread confidential information and spread dummy information are despread in that radio station, a difference greater than or equal to a fixed value is produced between the signal level of the confidential information and the signal level of the dummy information. By this means, the radio station can sort confidential information from dummy information by discriminating between their signal levels, and obtain confidential information. In contrast to this, in another radio station at a different location from that of the aforementioned radio station the difference in signal level between despread confidential information and dummy information is not regular because the radio propagation path is different. As a result, it is not possible to sort confidential information from dummy information and obtain confidential information, and reconstruction of confidential information is made significantly more difficult.

Moreover, a data transmission apparatus according to the present invention has a configuration comprising a data rearrangement section that rearranges transmit data including confidential information in an order predetermined between the data transmission apparatus and a radio station, wherein a transmitting section transmits transmit data rearranged by the data rearrangement section to the radio station.

According to this configuration, the radio station that is the intended transmission destination of confidential information knows the data rearrangement order, and so can easily reconstruct confidential information. In contrast to this, another radio station does not know the data rearrangement order, and therefore reconstruction of confidential information is made significantly more difficult.

Also, a radio communication system according to the present invention performs radio transmission of transmit data including confidential information from a first radio station to a second radio station, and has a configuration wherein the first radio station comprises a receiving section that receives a signal transmitted by the second radio station, an estimation section that estimates the signal propagation time between the first radio station and the second radio station based on a received signal obtained by the receiving section, and a transmitting section that transmits transmit data at a timing that takes the signal propagation time into consideration so that the transmit data arrives at the second radio station at the desired reception time, and the second radio station comprises a transmitting section that transmits a signal for estimating the signal propagation time to the first radio station, a receiving section that receives and demodulates transmit data including confidential information, and a reception control section that controls reception and demodulation operations of the receiving section so as to be synchronized with a reception time preset between the second radio station and first radio station.

According to this configuration, since transmit data including confidential information arrives in the second radio station at a predetermined reception time, confidential information can be reconstructed by demodulating the signal in synchronization with that time. In contrast to this, another radio station cannot reconstruct confidential information. This is because reference time information indicating the reception and demodulation start time is determined based on a signal propagation time shared only between the first radio station and second radio station, and therefore another radio station cannot ascertain the reference time indicating the reception and demodulation start time. As a result, another radio station cannot reconstruct confidential information, and security is assured.

Furthermore, a radio communication system according to the present invention has a configuration wherein a first radio station adds synchronization sequence signals in a mutually synchronous relationship at positions predetermined between the first radio station and a second radio station within transmit data including confidential information, and also adds dummy synchronization sequence signals, in a mutually synchronous relationship, that are dummy synchronization signals with regard to the synchronization sequence signals, and a second radio station extracts the synchronization sequence signals based on a preset reception time and compensates received transmit data including confidential information based on the synchronization sequence signals.

According to this configuration, since the second radio station knows the positions of the synchronization signals, that radio station can easily extract the synchronization signals. Using the extracted synchronization signals, the second radio station can perform time synchronization, and phase variation and gain variation compensation. As a result, reception quality can be improved. In contrast to this, another radio station cannot reconstruct confidential information, and also cannot distinguish between a dummy synchronization signal and a synchronization signal. It is thus possible to obtain a radio communication system whereby security is heightened and radio station reception quality can be improved.

Moreover, a radio communication system according to the present invention has a configuration wherein a first radio station transmits transmit data at a timing such that the transmit data arrives at a time shifted by a predetermined time from a reception time preset between the first radio station and a second radio station, and the second radio station performs synchronization processing using a synchronization sequence signal on transmit data that arrives shifted by a predetermined time, and demodulates the transmit data.

According to this configuration, it is significantly more difficult for another receiving station to reconstruct confidential information. Also, in the transmitting station and receiving station performing transmission and reception of confidential information, the confidential information can be reconstructed even when the time is not exactly the preset reception time, thus increasing freedom of design.

Also, a radio communication system according to the present invention has a configuration wherein a first radio station transmits confidential information associated with a predetermined time shift amount, and a second radio station performs demodulation processing using the predetermined time shift amount as identification information regarding confidential information.

According to this configuration, the risk of disclosure of confidential information to another radio station is significantly reduced.

Furthermore, a radio communication system according to the present invention has a configuration wherein a second radio station comprises a search range setting section that sets a predetermined search range based on a reception time, a synchronization signal extraction section that extracts a synchronization sequence signal by searching for a received signal peak within the range set by the search range setting section, and a compensation section that compensates received transmit data including confidential information based on an extracted synchronization sequence signal.

According to this configuration, by setting a search range with a narrow time width centered on a reception time that can only be known by the second radio station in the search range setting section, it is possible to accurately extract a synchronization sequence signal that forms the basis of time synchronization, phase variation compensation, and gain variation compensation. As a result, the second radio station can obtain high-quality confidential information. In contrast to this, in another receiving station the distinction between a synchronization sequence signal and dummy synchronization sequence signal is not established as there is a dummy synchronization sequence signal of the same level as a synchronization sequence signal, and therefore time synchronization, phase variation compensation, and gain compensation are extremely difficult, and it is significantly more difficult to reconstruct confidential information.

Moreover, a radio communication system according to the present invention performs radio transmission of transmit data including confidential information from a first radio station to a second radio station, and has a configuration wherein the first radio station comprises a receiving section that receives a signal transmitted by the second radio station, a plane of polarization detection section that detects the plane of polarization of a received wave based on a received signal obtained by the receiving section, and a transmitting section that transmits transmit data including confidential information to the second radio station by means of a transmission wave whose plane of polarization has been rotated by an amount predetermined between the first and second radio stations with respect to the detected plane of polarization, and the second radio station outputs a plane of polarization detection signal to the first radio station, and also rotates the plane of polarization characteristic of the antenna that receives transmit data including confidential information transmitted by the first radio station by an amount predetermined between the first and second radio stations from the time at which the plane of polarization detection signal is output until transmit data including confidential information is received.

According to this configuration, another radio station cannot ascertain plane of polarization rotation information predetermined between the first radio station and second radio station. Consequently, it is extremely difficult for another radio station to estimate the plane of polarization of transmit data including confidential information transmitted from the first radio station. As a result, it is extremely difficult for another station to receive and reconstruct confidential information.

Also, a radio communication system according to the present invention has a configuration wherein first and second radio stations perform processing that rotates a plane of polarization by an amount predetermined between the first and second radio stations repeatedly at an interval predetermined between the first and second radio stations.

According to this configuration, it is significantly more difficult for another radio station to estimate the plane of polarization of transmit data including confidential information transmitted from the first radio station. As a result, it is significantly more difficult for another station to receive and reconstruct confidential information.

Furthermore, a radio communication system according to the present invention performs radio transmission of transmit data including confidential information from a first radio station to a second radio station, and has a configuration wherein the first radio station comprises an estimation section that estimates the radio propagation time and signal power attenuation based on a signal transmitted from the second radio station, a spreading section that forms a first spread signal by performing spreading processing on confidential information using a predetermined spreading code and also forms a second spread signal by performing spreading processing on dummy information using a different spreading code and so that the same order of spreading gain is obtained as the spreading gain of the first spread signal, and a transmitting section that transmits first and second spread signals with transmission power controlled so that a difference greater than or equal to a fixed value is produced between the reception power value of the first spread signal and the reception power value of the second spread signal when the first and second spread signals arrive at the second radio station, based on signal power attenuation estimated by the estimation section, and the second radio station comprises a despreading section that despreads the first and second spread signals, and a confidential information extraction section that extracts confidential information based on the signal levels of the despread signals.

According to this configuration, in the second radio station a difference greater than or equal to a fixed value is produced between the signal level of confidential information and the signal level of dummy information when spread confidential information and spread dummy information are despread. By this means, the second radio station can sort confidential information from dummy information by distinguishing the level of confidential information and extract confidential information by means of the confidential information extraction section. In contrast to this, in another radio station at a different location from that of the second radio station the difference in signal level between despread confidential information and dummy information is not regular because the radio propagation path is different. As a result, it is not possible to sort confidential information from dummy information and obtain confidential information, and it is not possible to reconstruct confidential information.

Moreover, a radio communication system according to the present invention performs radio transmission of transmit data including confidential information from a first radio station to a second radio station, and has a configuration wherein the first radio station comprises an estimation section that estimates the radio propagation time and signal direction of arrival based on a signal transmitted from the second radio station, a spreading section that forms a first spread signal by performing spreading processing on confidential information using a predetermined spreading code and also forms a second spread signal by performing spreading processing on dummy information using a different spreading code and so that the same order of spreading gain is obtained as the spreading gain of the first spread signal, and a transmitting section that transmits first and second spread signals in a direction in which a difference greater than or equal to a fixed value is produced between the reception power value of the first spread signal and the reception power value of the second spread signal when the first and second spread signals arrive at the second radio station, based on the direction of arrival estimated by the estimation section, and the second radio station comprises a despreading section that despreads the first and second spread signals, and a confidential information extraction section that extracts the aforementioned confidential information based on the signal levels of the despread signals.

According to this configuration, in the second radio station a difference greater than or equal to a fixed value is produced between the signal level of confidential information and the signal level of dummy information when spread confidential information and spread dummy information are despread. By this means, the second radio station can sort confidential information from dummy information by discriminating between their signal levels, and extract confidential information. In contrast to this, in another radio station at a different location from that of the second radio station the difference in signal level between despread confidential information and dummy information is not regular because the radio propagation path is different. As a result, it is not possible to sort confidential information from dummy information and obtain confidential information, and it is not possible to reconstruct confidential information.

Also, a radio communication system according to the present invention performs radio transmission of transmit data including confidential information from first and second radio stations to a third radio station, and has a configuration wherein the first and second radio stations each comprise a network connection section connected to a cable network and used to obtain confidential information from the network, a receiving section that receives a signal transmitted by the third radio station, an estimation section that estimates the signal propagation time with respect to the third radio station based on a received signal obtained by the receiving section, and a transmitting section that transmits transmit data at a timing that takes the signal propagation time into consideration so that the transmit data arrives at the third radio station at the desired reception time, and the third radio station comprises a transmitting section that transmits a signal for estimating the signal propagation time to the first radio station, a receiving section that receives and demodulates transmit data including confidential information, and a reception control section that controls reception and demodulation operations of the receiving section so as to be synchronized with a reception time preset between the first and second radio stations .

According to this configuration, the first and second radio stations can obtain confidential information from a cable network via the network connection section. Then, if, for example, obtained confidential information is transmitted to the third radio station by both the first radio station and second radio station on a shared basis, the third radio station can reconstruct the confidential information by combining this divided confidential information after receiving it. In contrast to this, another radio station cannot reconstruct confidential information since it cannot ascertain the reception time. Also, even if another radio station were able to ascertain the reception time, that radio station could not fully reconstruct the confidential information since that information is divided.

Furthermore, a radio communication method according to the present invention is a radio communication method whereby radio transmission of transmit data including confidential information is performed from a first radio station to a second radio station, wherein a signal is transmitted from the second radio station to the first radio station, the first radio station estimates the signal propagation time between the first and second radio stations based on the received signal, and the first radio station transmits transmit data including confidential information at a timing that takes the signal propagation time into consideration so that the transmit data arrives at the second radio station at the desired reception time.

According to this method, since transmit data including confidential information arrives in the second radio station at a predetermined reception time, confidential information can be reconstructed by demodulating the signal in synchronization with that time. In contrast to this, another radio station cannot reconstruct confidential information. This is because reference time information indicating the reception and demodulation start time is determined based on a signal propagation time shared only between the first radio station and second radio station, and therefore another radio station cannot ascertain the reference time indicating the reception and demodulation start time. As a result, another radio station cannot reconstruct confidential information, and security is assured.

Moreover, in a radio communication method according to the present invention, the desired reception time is set between first and second radio stations based on the signal propagation time by performing at least one round-trip signal transmit/receive operation between the first and second radio stations before transmit data including confidential information is transmitted from the first radio station.

According to this method, the signal propagation time is information that can be shared only between the first radio station and second radio station, and it is therefore impossible for another radio station to ascertain this time information. As a result, it is impossible for another radio station to obtain confidential information.

Also, in a radio communication method according to the present invention, dummy symbols are added at positions predetermined between radio stations within transmit data including confidential information.

According to this method, since the second radio station knows the positions of dummy symbols, that radio station can eliminate only dummy symbols after reception and demodulation of transmit data, and easily extract the

confidential information. In contrast to this, even if another radio station were able to demodulate transmit data, that radio station would not be able extract confidential information since dummy symbols are present.

Furthermore, in a radio communication system according to the present invention, synchronization sequence signals in a mutually synchronous relationship are added at positions predetermined between radio stations within transmit data including confidential information, and dummy synchronization sequence signals in a mutually synchronous relationship are also added.

According to this method, since the second radio station knows the positions of the synchronization signals, that radio station can easily extract the synchronization signal. Using the extracted synchronization signal, the second radio station can perform time synchronization, phase variation compensation, gain variation compensation, and so forth. As a result, reception quality can be improved. In contrast to this, another radio station cannot reconstruct confidential information, and also cannot distinguish between a dummy synchronization signal and a synchronization signal. Thus, the level of security is high, and reception quality in the second radio station can be improved.

As described above, with a data transmission apparatus, radio communication system, and radio communication method according to the present invention, when confidential information is transmitted to a specific radio station via a radio channel, the confidential information can be transmitted with a high degree of security by, when performing radio transmission of transmit data including confidential information from a first radio station to a second radio station, estimating the radio propagation path environment shared only between the first radio station and second radio station by performing signal transmission and reception between the first radio station and second radio station before transmitting that confidential information, and transmitting the confidential information from the first radio station to the second radio station taking the estimated radio propagation path environment into consideration.

This application is based on Japanese Patent Application No.2000-260413 filed on August 30, 2000, entire content of which is expressly incorporated by reference herein.

Industrial Applicability

The present invention is applicable to a case where confidential information is transmitted to a specific radio station via a radio channel.

**Claims**

1. A data transmission apparatus that performs radio transmission of transmit data including confidential information to a radio station, said data transmission apparatus comprising:

   receiving means for receiving a signal transmitted by said radio station;
   estimating means for estimating a radio propagation path environment with respect to said radio station based on a received signal obtained by said receiving means; and
   transmitting means for transmitting said transmit data including confidential information to said radio station, taking into consideration a radio propagation path environment obtained by said estimating means.

2. The data transmission apparatus according to claim 1, wherein:

   said estimating means estimates a signal propagation time with respect to said radio station as said radio channel parameter based on said received signal; and
   said transmitting means transmits said transmit data at a timing that takes said signal propagation time into consideration so that said transmit data arrives at said radio station at a desired reception time.

3. The data transmission apparatus according to claim 2, further comprising dummy symbol adding means for adding dummy symbols at positions predetermined together with said radio station within said transmit data including confidential information;

   wherein said transmitting means transmits transmit data to which dummy symbols have been added to said radio station.

4. The data transmission apparatus according to claim 2, further comprising:

   synchronization signal adding means for adding synchronization sequence signals in a mutually synchronous relationship at positions predetermined together with said radio station within said transmit data including confidential information; and

dummy synchronization signal adding means for adding dummy synchronization sequence signals, in a mutually synchronous relationship, that are dummy synchronization signals with regard to said synchronization sequence signals.

**5.** A data transmission apparatus that performs radio transmission of transmit data including confidential information to a radio station, said data transmission apparatus comprising:

first and second receiving means, placed in mutually different locations, for receiving a signal transmitted by said radio station;

estimating means for estimating a first radio propagation path environment between said first receiving means and said radio station based on a received signal obtained by said first receiving means, and also estimating a second radio propagation path environment between said second receiving means and said radio station based on a received signal obtained by said second receiving means; and

first and second transmitting means placed at the same locations as said first and second receiving means, respectively, for transmitting said data including confidential information to said radio station, taking into consideration said first and second radio propagation path environments obtained by said estimating means.

**6.** The data transmission apparatus according to claim 5, wherein:

said estimating means estimates a signal propagation time in a first radio propagation path between said radio station and said first receiving means and a signal propagation time in a second radio propagation path between said radio station and said second receiving means as first and second radio channel parameters; and said first and second transmitting means transmit said transmit data to said radio station at a timing that takes each said signal propagation time into consideration so that said transmit data arrives at said radio station at a time set beforehand together with said radio station.

**7.** The data transmission apparatus according to claim 6, wherein said first and second transmitting means transmit first and second transmit data at timings such that said first and second transmit data arrive at said radio station at different times.

**8.** The data transmission apparatus according to claim 6, wherein:

said first and second transmit data are formed with the same format; and said first and second transmitting means transmit said first and second transmit data at timings such that said first and second transmit data arrive at said radio station at the same time.

**9.** The data transmission apparatus according to claim 6, further comprising dummy symbol adding means for adding dummy symbols at positions predetermined together with said radio station within said transmit data including confidential information;

wherein said transmitting means transmits said transmit data to which dummy symbols have been added to said radio station.

**10.** The data transmission apparatus according to claim 6, further comprising:

synchronization signal adding means for adding synchronization sequence signals in a mutually synchronous relationship at positions predetermined together with said radio station within said transmit data including confidential information; and dummy synchronization signal adding means for adding dummy synchronization sequence signals, in a mutually synchronous relationship, that are dummy synchronization signals with regard to said synchronization sequence signals.

**11.** The data transmission apparatus according to claim 6, further comprising dummy symbol adding means that adds dummy symbols whose power is extremely low with respect to confidential symbols within each of said first and second transmit data so that confidential symbols forming said confidential information do not overlap when said first and second transmit data unit communication frames are lined up;

wherein said first and second transmitting means transmit first and second transmit data at timings such that said first and second transmit data arrive at said radio station at the same time.

**12.** The data transmission apparatus according to claim 6, wherein:

said estimating means estimates, in addition to said signal propagation time, signal power attenuation in a first radio propagation path between said radio station and said first receiving means and signal power attenuation in a second radio propagation path between said radio station and said second receiving means; and said first and second transmitting means transmit said transmit data including confidential information to said radio station at transmission power that takes into consideration signal power attenuation in said first and second radio propagation paths, respectively.

**13.** The data transmission apparatus according to claim 12, wherein:

said first and second transmit data are formed with the same format; and
said first and second transmitting means transmit first and second transmit data at timings such that said first and second transmit data arrive at said radio station at the same time, and also transmit said transmit data at transmission power close to the lowest level at which said radio station can combine and receive said first and second transmit data based on said signal power attenuation.

**14.** The data transmission apparatus according to claim 1, wherein:

said estimating means estimates said radio propagation path environment by detecting a plane of polarization of a received wave based on a received signal obtained by said receiving means; and
said transmitting means transmits said transmit data including confidential information to said radio station by means of a transmission wave that has the same plane of polarization as said plane of polarization detected by said estimating means.

**15.** The data transmission apparatus according to claim 1, wherein:

said estimating means estimates said radio propagation path environment by detecting a plane of polarization of a received wave based on a received signal obtained by said receiving means; and
said transmitting means transmits said transmit data including confidential information superimposed on a transmission wave that has the same plane of polarization as said plane of polarization detected by said estimating means, and also transmits dummy data superimposed on a transmission wave that has a plane of polarization orthogonal to said plane of polarization detected by said estimating means.

**16.** The data transmission apparatus according to claim 1, wherein:

said estimating means estimates said radio propagation path environment by detecting a plane of polarization of a received wave based on a received signal obtained by said receiving means; and
said transmitting means transmits said transmit data including confidential information to said radio station by means of a transmission wave for which said plane of polarization has been rotated by an amount predetermined together with said radio station with respect to said plane of polarization detected by said estimating means.

**17.** The data transmission apparatus according to claim 2, wherein:

said estimating means estimates a direction of arrival of said received signal; and
said transmitting means transmits said transmit data including confidential information in a direction that takes into consideration said direction of arrival.

**18.** The data transmission apparatus according to claim 17, wherein said transmitting means transmits said transmit data including confidential information in the direction of said radio station based on a direction of arrival estimated by said estimating means, and also transmits dummy data in a direction different from said direction of said radio station.

**19.** The data transmission apparatus according to claim 18, wherein said transmitting means has an adaptive array antenna, and weights each array antenna so that directionality is in said direction of arrival when transmitting said transmit data including confidential information, and weights each array antenna so that directionality is in a direction other than said direction of arrival when transmitting said dummy data.

**20.** The data transmission apparatus according to claim 12, further comprising:

first spreading means for performing spreading processing on said confidential information using a predetermined spreading code and supplying a first spread signal obtained thereby to said first transmitting means; and second spreading means for performing spreading processing on dummy information using a different spreading code from said spreading code and so that the same order of spreading gain is obtained as spreading gain by said first spreading means, and supplying a second spread signal obtained thereby to said second transmitting means;

wherein said first and second transmitting means control transmission power so that a difference greater than or equal to a fixed value is produced between a reception power value of said first spread signal and a reception power value of said second spread signal when said first and second spread signals arrive at said radio station, based on signal power attenuation estimated by said estimating means.

**21.** The data transmission apparatus according to claim 18, further comprising:

first spreading means for forming a first spread signal by performing spreading processing on said confidential information using a predetermined spreading code; and second spreading means for forming a second spread signal by performing spreading processing on dummy information using a different spreading code from said spreading code and so that the same order of spreading gain is obtained as spreading gain by said first spreading means;

wherein said first and second transmitting means transmit said first and second spread signals in a direction in which a difference greater than or equal to a fixed value is produced between a reception power value of said first spread signal and a reception power value of said second spread signal, based on a direction of arrival estimated by said estimating means.

**22.** The data transmission apparatus according to claim 2, further comprising data rearranging means for rearranging said transmit data including confidential information in an order predetermined together with said radio station; wherein said transmitting means transmits transmit data rearranged by said data rearranging means to said radio station.

**23.** A radio communication system that performs radio transmission of transmit data including confidential information from a first radio station to a second radio station, wherein:

said first radio station comprises:

receiving means for receiving a signal transmitted by said second radio station; estimating means for estimating a signal propagation time with respect to said radio station based on a received signal obtained by said receiving means; and transmitting means for transmitting said transmit data at a timing that takes said signal propagation time into consideration so that said transmit data arrives at said radio station at a desired reception time; and

said second radio station comprises:

transmitting means for transmitting a signal for estimating said signal propagation time to said first radio station; receiving means for receiving and demodulating said transmit data including confidential information; and reception control means for controlling reception and demodulation operations of said receiving means so as to be synchronized with a reception time preset together with said first radio station.

**24.** The radio communication system according to claim 23, wherein:

said first radio station adds synchronization sequence signals in a mutually synchronous relationship at positions predetermined together with said radio station within said transmit data including confidential information, and also adds dummy synchronization sequence signals, in a mutually synchronous relationship, that are dummy synchronization signals with regard to said synchronization sequence signals; and said second radio station extracts said synchronization sequence signals based on said preset reception time and compensates received said transmit data including confidential information based on said synchronization sequence signals.

**25.** The radio communication system according to claim 24, wherein:

said first radio station transmits said transmit data at a timing such that said transmit data arrives at a time shifted by a predetermined time from said reception time preset together with said second radio station; and said second radio station performs synchronization processing using said synchronization sequence signals on said transmit data that arrives shifted by a predetermined time, and demodulates said transmit data.

**26.** The radio communication system according to claim 25, wherein:

said first radio station transmits said confidential information associated with said predetermined time shift amount; and said second radio station performs demodulation processing using said predetermined time shift amount as identification information regarding said confidential information.

**27.** The radio communication system according to claim 24, wherein said second radio station comprises:

search range setting means for setting a predetermined search range based on said reception time; synchronization signal extracting means for extracting said synchronization sequence signals by searching for a peak of said received signals within a range set by said search range setting means; and compensating means for compensating received said transmit data including confidential information based on extracted synchronization sequence signals.

**28.** A radio communication system that performs radio transmission of transmit data including confidential information from a first radio station to a second radio station, wherein:

said first radio station comprises:

receiving means for receiving a signal transmitted by said second radio station; plane of polarization detection means for detecting a plane of polarization of a received wave based on a received signal obtained by said receiving means; and transmitting means for transmitting said transmit data including confidential information to said second radio station by means of a transmission wave whose plane of polarization has been rotated by an amount predetermined between said first and second radio stations with respect to a detected plane of polarization; and

said second radio station outputs a signal for detection of said plane of polarization to said first radio station, and also rotates a plane of polarization characteristic of an antenna that receives said transmit data including confidential information transmitted by said first radio station by an amount predetermined between said first and second radio stations from a time at which said signal for detection of said plane of polarization is output until said transmit data including confidential information is received.

**29.** The radio communication system according to claim 28, wherein said first and second radio stations perform processing that rotates a plane of polarization by an amount predetermined between said first and second radio stations repeatedly at an interval predetermined between said first and second radio stations.

**30.** A radio communication system that performs radio transmission of transmit data including confidential information from a first radio station to a second radio station, wherein:

said first radio station comprises:

estimating means for estimating a radio propagation time and signal power attenuation based on a signal transmitted from said second radio station; spreading means for forming a first spread signal by performing spreading processing on said confidential information using a predetermined spreading code, and also forming a second spread signal by performing spreading processing on dummy information using a different spreading code from said spreading code and so that the same order of spreading gain is obtained as spreading gain of said first spread signal; and transmitting means for transmitting said first and second spread signals with transmission power controlled so that a difference greater than or equal to a fixed value is produced between a reception power value of said first spread signal and a reception power value of said second spread signal when said first and second spread signals arrive at said second radio station, based on signal power attenuation estimated by said estimating means; and

said second radio station comprises:

despreading means for despreading said first and second spread signals; and
confidential information extracting means for extracting said confidential information based on signal levels of despread signals.

31. A radio communication system that performs radio transmission of transmit data including confidential information from a first radio station to a second radio station, wherein:

said first radio station comprises:

estimating means for estimating a radio propagation time and signal direction of arrival based on a signal transmitted from said second radio station;
spreading means for forming a first spread signal by performing spreading processing on said confidential information using a predetermined spreading code, and also forming a second spread signal by performing spreading processing on dummy information using a different spreading code from said spreading code and so that the same order of spreading gain is obtained as spreading gain of said first spread signal; and
transmitting means for transmitting said first and second spread signals in a direction in which a difference greater than or equal to a fixed value is produced between a reception power value of said first spread signal and a reception power value of said second spread signal when said first and second spread signals arrive at said second radio station, based on a direction of arrival estimated by said estimating means; and

said second radio station comprises:

despreading means for despreading said first and second spread signals; and
confidential information extracting means for extracting said confidential information based on signal levels of despread signals.

32. A radio communication system that performs radio transmission of transmit data including confidential information from first and second radio stations to a third radio station, wherein:

said first and second radio stations each comprise:

network connecting means, connected to a cable network, for obtaining confidential information from said network;
receiving means for receiving a signal transmitted by said third radio station;
estimating means for estimating a signal propagation time with respect to said third radio station based on a received signal obtained by said receiving means; and
transmitting means for transmitting said transmit data at a timing that takes said signal propagation time into consideration so that said transmit data arrives at said third radio station at a desired reception time; and

said third radio station comprises:

transmitting means for transmitting a signal for estimating said signal propagation time to said first radio station;
receiving means for receiving and demodulating said transmit data including confidential information; and
reception control means for controlling reception and demodulation operations of said receiving means so as to be synchronized with a reception time preset between said first and second radio stations.

33. A radio communication method whereby radio transmission of transmit data including confidential information is performed from a first radio station to a second radio station, wherein:

a signal is transmitted from said second radio station to said first radio station;
said first radio station estimates a signal propagation time between said first and second radio stations based on said received signal; and
said first radio station transmits said transmit data including confidential information at a timing that takes said signal propagation time into consideration so that said transmit data arrives at said radio station at a desired reception time.

34. The radio communication method according to claim 33, wherein said desired reception time is set between said first and second radio stations based on said signal propagation time estimated by performing at least one round-trip signal transmit/receive operation between said first and second radio stations before said transmit data including confidential information is transmitted from said first radio station.

35. The radio communication method according to claim 33, wherein dummy symbols are added at positions predetermined together with said radio station within said transmit data including confidential information.

36. The radio communication method according to claim 33, wherein synchronization sequence signals in a mutually synchronous relationship are added at positions predetermined together with said radio station within said transmit data including confidential information, and dummy synchronization sequence signals in a mutually synchronous relationship are also added.

FIG.1

EP 1 233 547 A1

FIG.2

EP 1 233 547 A1

102 RECEIVING STATION

FIG.3

FIG.4

EP 1 233 547 A1

EP 1 233 547 A1

TRANSMITTING STATION
TRANSMITTING SIDE COMMUNICATION SIGNAL

| 0 | 1 | 2 | 3 | 4 | 5 | 6 | 7 | 8 | 9 | · · · · · · · · · · ·

PROPAGATION PATH DELAY 1

RECEIVING TERMINAL 1
RECEIVING SIDE 1 COMMUNICATION SIGNAL

| 0 | 1 | 2 | 3 | 4 | 5 | 6 | 7 | 8 | 9 | · · · · · · · · · · ·

↑ RECEIVING TERMINAL REFERENCE TIME 1

PROPAGATION PATH DELAY 2

RECEIVING TERMINAL 2
RECEIVING SIDE 2 COMMUNICATION SIGNAL

| x | x | 0 | 1 | 2 | 3 | 4 | 5 | 6 | 7 | 8 | 9 | · · · · · · · · · · ·

↑ RECEIVING TERMINAL REFERENCE TIME 2

FIG.5

FIG.6

EP 1 233 547 A1

FIG.7

FIG.8

FIG.9A

FIG.9B

TRANSMITTING STATION

TRANSMITTING SIDE COMMUNICATION SIGNAL

| 0 | 1 | 2 | 3 | 4 | 5 | 6 | 7 | 8 | 9 | A | B | C | D | E | F | · · · · · · · · · · · ·

PROPAGATION PATH DELAY 1

RECEIVING TERMINAL 1

RECEIVING SIDE 1 COMMUNICATION SIGNAL

| 0 | 1 | 2 | 3 | 4 | 5 | 6 | 7 | 8 | 9 | A | B | C | D | E | F | · · · · · · · · · · · ·

↑ RECEIVING TERMINAL REFERENCE TIME 1

PROPAGATION PATH DELAY 2

RECEIVING TERMINAL 2

RECEIVING SIDE 2 COMMUNICATION SIGNAL

| x | x | 0 | 1 | 2 | 3 | 4 | 5 | 6 | 7 | 8 | 9 | A | B | C | D | E | F | · · · · · · · · · · · ·

↑ RECEIVING TERMINAL REFERENCE TIME 2

FIG.10

**500 RADIO COMMUNICATION SYSTEM**

**FIG.11**

EP 1 233 547 A1

FIG.12

FIG.13

TRANSMITTING STATION   TRANSMITTING SIDE COMMUNICATION SIGNAL

| 0 | 1 | 2 | 3 | 4 | 5 | 6 | 7 | 8 | 9 | ......

TRANSMITTING STATION   TRANSMITTING SIDE COMMUNICATION SIGNAL

| A | B | C | D | E | F | G | H | I | J | ......

PROPAGATION PATH DELAY 10

PROPAGATION PATH DELAY 20

RECEIVING TERMINAL 1   RECEIVING SIDE 1 COMMUNICATION SIGNAL

| 0 | 1 | 2 | 3 | 4 | 5 | 6 | 7 | 8 | 9 | ......

| A | B | C | D | E | F | G | H | I | J | ......

RECEIVING TERMINAL REFERENCE TIME 10

PROPAGATION PATH DELAY 11

RECEIVING TERMINAL 2   RECEIVING SIDE 2 COMMUNICATION SIGNAL

PROPAGATION PATH DELAY 21

| x | x | 0 | 1 | 2 | 3 | 4 | 5 | 6 | 7 | 8 | 9 | ......

| x | x | x | x | A | B | C | D | E | F | G | H | I | J | ......

RECEIVING TERMINAL REFERENCE TIME 11

FIG.14

EP 1 233 547 A1

800 RADIO COMMUNICATION SYSTEM

FIG.15

TRANSMITTING STATION

RECEIVING STATION

TRANSMISSION 10B — COMMUNICATION 10 → RECEPTION 10T

TRANSMISSION 11B — COMMUNICATION 11 → RECEPTION 11T ⎫ T10

COMMUNICATION 20 ← TRANSMISSION 20T ⎬ T11

RECEPTION 20B ← COMMUNICATION 21 — TRANSMISSION 21T

RECEPTION 21B ← COMMUNICATION 30 — TRANSMISSION 30T

RECEPTION 30B
RECEPTION 31B ⎫ T20
TRANSMISSION 40B — COMMUNICATION 40 →
TRANSMISSION 41B — RECEPTION 40T ← RECEIVING TERMINAL REFERENCE TIME 10

COMMUNICATION 41 → TRANSMISSION 5T

RECEPTION 5B ← COMMUNICATION 5

⋮

FIG.16

EP 1 233 547 A1

FIG.17

FIG.18

901 TRANSMITTING STATION

AN11 101a

TRANSMIT RF 119

BUFFER 117

MODULATION 116

BURST GENERATION 115

CONTROL CHANNEL 114

ENCRYPTION 111

ENCRYPTION KEY GENERATION 112

REFERENCE CLOCK GENERATION 113

101b

RECEIVE RF 121

DEMODULATION 122

STREAM FORMING 123

DECRYPTION 124

D1

TIMING CONTROL 905a

DELAY AMOUNT ESTIMATION 904a

POWER CONTROL 905b

POWER MEASUREMENT 904b

905 904

903 902 AN13 101a 101b

1001

1002

TRANSMITTING STATION

AN21

AN20

1007

1005

TIME
CONTROL
SECTION

TRANSMITTING
/RECEIVING
SECTION

1006

1008

CHANNEL
PARAMETER
ESTIMATION
SECTION

RADIATION
CHARACTERISTICS
CONTROL SECTION

1003

1011

RECEIVING STATION

AN30

1009

TRANSMITTING
/RECEIVING
SECTION

1004

1010

TIME CONTROL
SECTION

EP 1 233 547 A1

FIG.19

1003

AN21  AN20

114 CONTROL CHANNEL

112 ENCRYPTION KEY GENERATION

119 TRANSMIT RF

111 ENCRY-PTION

115 BURST GENERA-TION

116 MODU-LATION

117 BUFFER

1008 RADIATION CHARACTERIS-TICS CONTROL

1012

118 TIMING CONTROL

1007

113 REFERENCE CLOCK GENERATION

120 DELAY AMOUNT ESTIMATION

1006 CHANNEL PARAMETER ESTIMATION

1013

124 DECRY-PTION

123 STREAM FORMING

122 DEMODULATION

121 RECEIVE RF

FIG.20

EP 1 233 547 A1

V AN21

121

RECEIVING SECTION

AN20

RECEIVING SECTION

H

**PROPAGATION ENVIRONMENT ESTIMATION SECTION** 1006

FIELD STRENGTH DETECTION SECTION 1020

PHASE DIFFERENCE DETECTION SECTION 1021

POLARIZATION ESTIMATION SECTION 1022

**FIG.21**

V AN21

119

TRANS-MITTING SECTION

AN20

TRANS-MITTING SECTION

H

**RADIATION CHARACTERISTICS CONTROL SECTION** 1008

COMBINING SECTION 1032

FIELD STRENGTH CONTROL SECTION 1030

PHASE CONTROL SECTION 1031

**FIG.22**

FIG.23

FIG.24

FIG.25

EP 1 233 547 A1

AN

## FIG.26A

1050

AN

## FIG.26B

FIG.27

FIG.28

EP 1 233 547 A1

1200 RADIO COMMUNICATION SYSTEM

FIG.29

FIG.30

EP 1 233 547 A1

FIG.31

FIG.32

TRANSMITTING
STATION

RECEIVING
STATION

TRANSMISSION 1T

COMMUNICATION 1

RECEPTION 1B

TRANSMISSION 2B

COMMUNICATION 2

RECEPTION 2T

COMMUNICATION 3

TRANSMISSION 3T

RECEPTION 3B

TRANSMISSION 4B

COMMUNICATION 4

RECEPTION 4T

FIG.33

SIGNAL A    SIGNAL B

FIG.34

FIG.35

EP 1 233 547 A1

FIG.36

## INTERNATIONAL SEARCH REPORT

| International application No. |
|---|
| PCT/JP01/07454 |

**A. CLASSIFICATION OF SUBJECT MATTER**
Int.Cl⁷ H04B7/26
H04K1/06

According to International Patent Classification (IPC) or to both national classification and IPC

**B. FIELDS SEARCHED**

Minimum documentation searched (classification system followed by classification symbols)
Int.Cl⁷ H04B7/24-7/26, 102
H04Q7/00-7/38
H04K1/06

Documentation searched other than minimum documentation to the extent that such documents are included in the fields searched
Jitsuyo Shinan Koho       1922-1996       Toroku Jitsuyo Shinan Koho  1994-2001
Kokai Jitsuyo Shinan Koho 1971-2001       Jitsuyo Shinan Toroku Koho  1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 4-43733 A (IWATSU ELECTRIC CO., LTD.), 13 February, 1992 (13.02.92), | 1-4,17-19, 22-27,33-36 |
| A | Claim 2; page 3, upper right column, line 10 to page 4, upper left column, line 14   (Family: none) | 5-16,20,21, 28-32 |
| Y | JP 10-51376 A (Mitsubishi Electric Corporation), 20 February, 1998 (20.02.98), | 1-4,17-19, 22-27,33-36 |
| A | Par. Nos. [0049] to [0060]   (Family: none) | 5-16,20,21, 28-32 |
| Y | JP 7-231295 A (Telefonaktiebolaget LM Erisson), 29 August, 1995 (29.08.95), & SE 9304325 A       & US 5509016 A | 3,4,24-27, 35,36 |
| Y | JP 10-56405 A (NEC Corporation), 24 February, 1998 (24.02.98), Par. No. [0037] & SE 9702891 A       & BR 9702752 A & US 5978412 A       & CN 1176547 A | 3,4,24-27, 35,36 |

☒ Further documents are listed in the continuation of Box C.       ☐ See patent family annex.

| | | |
|---|---|---|
| * | Special categories of cited documents: | |
| "A" | document defining the general state of the art which is not considered to be of particular relevance | |
| "E" | earlier document but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 November, 2001 (27.11.01) | 11 December, 2001 (11.12.01) |

| Name and mailing address of the ISA/ Japanese Patent Office | Authorized officer |
|---|---|
| Facsimile No. | Telephone No. |

Form PCT/ISA/210 (second sheet) (July 1992)

## INTERNATIONAL SEARCH REPORT

International application No.

PCT/JP01/07454

| Category* | Citation of document, with indication, where appropriate, of the relevant passages | Relevant to claim No. |
|---|---|---|
| Y | JP 6-120720 A (Shodenryoku Kosoku Tsuushin Kenkyusho K.K.), 28 April, 1994 (28.04.94) (Family: none) | 17-19 |
| Y | JP 10-200429 A (YRP Idou Tsushin Kiban Gijutsu Kenkyusho K.K.), 31 July, 1998 (31.07.98) (Family: none) | 17-19 |

C (Continuation).  DOCUMENTS CONSIDERED TO BE RELEVANT

Form PCT/ISA/210 (continuation of second sheet) (July 1992)